# EUROPEAN PATENT SPECIFICATION

(11) **EP 2 949 556 B1**
(45) Date of publication and mention of the grant of the patent: **08.02.2017**
(21) Application number: 14200477.9
(22) Date of filing: 29.12.2014
(51) Int. Cl.: B62J 6/02, B62J 17/02, B60Q 1/00, B60Q 1/04, B60Q 1/068, F21S 8/10

(54) **Vehicle**
Fahrzeug
Véhicule

(30) Priority: 30.05.2014 JP 2014112939; 28.08.2014 JP 2014174218
(43) Date of publication of application: 02.12.2015
(73) Proprietor: Yamaha Hatsudoki Kabushiki Kaisha, Iwata-shi, Shizuoka-ken 438-8501 (JP)
(72) Inventor: Tachibana, Masumi, Shizuoka-ken, 438-8501 (JP)
(74) Representative: Moreland, David

(56) References cited:
- JP-U- H0 445 193
- US-A1- 2006 023 462

## Description

### FIELD OF INVENTION

The present invention relates to a saddled vehicle, straddle-type vehicle or saddle-ride vehicle including or comprising head lamps.

### BACKGROUND TO INVENTION

A so-called sports-type motorcycle is described in JP 2013-18306 A (HONDA). In the motorcycle described in JP 2013-18306 A, a head pipe and a front fork obliquely extend forward and downward. A steering shaft being inserted into the head pipe is not shown, however, it is considered that the steering shaft similarly obliquely extends forward and downward. Details of a configuration of the front fork are not described. However, left and right fork pipes are generally coupled to each other by an upper bracket, and an under bracket that is located below the upper bracket in the sports-type motorcycle. A handle is fixed to an upper portion of the front fork.

A front cover is arranged in front of the steering shaft and the upper bracket. The front cover obliquely extends downward and forward from a position further upward than the handle. Left and right side covers are arranged to respectively overlap with side portions of the front cover and extend rearward. The left and right side covers respectively extend from positions further forward than the front fork to positions further rearward of the front fork. Large-size left and right head lamps are arranged at the front cover.

The left and right fork pipes, the upper bracket, the under bracket and a front wheel are integrally turned about the head pipe according to the operation of the handle. In a vehicle front view, an opening being surrounded by the left and right side covers and the front cover is formed. The left and right fork pipes and the front wheel are turned in this opening. Here, the under bracket is located at a position further downward and forward than the upper bracket. The under bracket extends in a vehicle width direction, e.g. when the handlebars are in the unturned or "straight ahead" position, and the left and right ends of the under bracket are coupled to the left and right fork pipes to surround the left and right fork pipes. Therefore, a lower end of a front edge of the under bracket is turned at a position of a front portion of the vehicle within a large range. Further, when a front fork device is turned, one of a left portion and a right portion of the lower end of the front edge of the under bracket is moved upward, and the other one is moved downward.

US 2006/0023462 (Uemoto et al.) relates to a lamp unit adapted to be mounted above a front fender of a front wheel of a motorcycle.

JP H4-45193, on which the preamble of independent claim 1 is based, relates to a motorcycle having left and right head lamps provided in respective openings of a cover of the motorcycle.

### SUMMARY OF INVENTION

In the above-mentioned motorcycle described in JP 2013-18306 A, the head pipe, the steering shaft and the front fork obliquely extend downward and forward. Therefore, a space or volume, which is located in front of the head pipe, the steering shaft and the front fork and above the front wheel, of the front portion of the motorcycle has an upper portion that is larger in a vehicle front-and-rear direction than a lower portion. The large-size left and right head lamps are arranged at the front cover while the front portion of the motorcycle is made compact in the vehicle front-and-rear direction by utilization of the space or volume, which is large in the vehicle front-and-rear direction, formed in this upper portion.

Since the upper portion has a space or volume larger in the vehicle front-and-rear direction than the lower portion in the front portion of the motorcycle, an amount of projection of the head lamps in a forward direction is reduced when the head lamps are arranged in the upper portion as compared to a case in which the head lamps are arranged in the lower portion. Thus, the front portion of the motorcycle is made compact in the vehicle front-and-rear direction. In other words, because the front portion of the motorcycle is made compact in the vehicle front-and-rear direction by utilization of the space or volume that is large in the vehicle front-and-rear direction, the size of the head lamps can be increased. Further, the head lamps are respectively arranged at positions further upward than the lower end of the front edge of the under bracket that moves in a top-and-bottom direction, whereby the head lamps are effectively inhibited from interfering with the under bracket.

Without wishing to be bound by theory, the inventor of the present application paid attention to a function of conspicuousness of the head lamps. The head lamps do not only irradiate an area in front of the vehicle with light while being lit, but also have the function of conspicuousness in which the head lamps themselves are conspicuous to surrounding people by being bright. In the motorcycle described in JP 2013-18306 A, it is considered that the conspicuousness of the head lamps is ensured because the size of the head lamps is increased. The conspicuousness is also ensured for head lamps of other conventional straddle-type or saddle-ride vehicles.

On the other hand, the inventor of the present application has largely changed the concept from the conventional configuration used to ensure the conspicuousness of the head lamps, and has considered a configuration in which the conspicuousness could be ensured while the size of the head lamps of the sports-type straddle-type or saddle-ride vehicle is reduced.

An object of at least one embodiment of the present invention is to provide a saddled, straddle-type or saddle-ride vehicle in which conspicuousness of head lamps can be ensured while an increase in size of a front portion of the vehicle is inhibited by a reduction in size of the head lamps.

The inventor of the present application first studied characteristics of the sports-type straddle-type or saddle-ride vehicle. The front fork device of the sports-type straddle-type vehicle has the upper bracket and the under bracket that couple the left fork pipe to the right fork pipe in order to ensure rigidity. Therefore, the front fork device is relatively large. The sports-type straddle-type or saddle-ride vehicle has the large front cover and the large left and right side covers in order to surround the large front fork device. The front cover extends obliquely downward and forward due to reasons such as improvement of aerodynamics characteristics. Further, the space or volume between the left and right side covers in the vehicle width direction and between the front wheel and the front cover in a vehicle top-and-bottom direction is relatively largely ensured due to reasons such as introduction of an air stream to an engine or a radiator.

As a result of the study of such characteristics, the inventor of the present application realized that a darker space or volume is likely to be generated in the sports-type straddle-type or saddle-ride vehicle than in the surrounding space. In particular, the inventor of the present application noted that a region in which a dark shadow is generated is relatively largely formed by the large front cover and the large side covers surrounding the large front fork device. Therefore, the inventor of the present application produced a configuration in which the size of the head lamps can be reduced and the conspicuousness of the head lamps can be ensured by utilization of the difference or contrast between a brightness of the head lamps and a darkness of the dark space or volume.

Various aspects of the present invention are defined in the independent claim 1 appended herewith. Some preferred features are defined in the dependent claims appended herewith.

According to one aspect of the present invention there is provided a saddled vehicle, straddle-type vehicle or saddle-ride vehicle according to independent claim 1.

In this saddled, straddle-type or saddle-ride vehicle, with the steering shaft being inserted into the head pipe, the head pipe and the steering shaft may extend downward and forward. The left fork pipe and the right fork pipe may be respectively arranged at a position further leftward and a position further rightward than the steering shaft to extend to positions further downward and forward than the steering shaft, respectively.

The upper bracket, and the under bracket that may be located below the upper bracket may be coupled to the steering shaft, and may be coupled to the right fork pipe and the left fork pipe, e.g. to extend in the vehicle width direction. The front end of the under bracket may be arranged at a position further forward than the front end of the upper bracket. The front wheel may be arranged at a position further downward than the under bracket and between the left fork pipe and the right fork pipe.

This configuration may cause the front fork device to be constituted by the handle member, the left fork pipe, the right fork pipe, the upper bracket, the under bracket and/or the front wheel. Therefore, the front fork device may be relatively large and may have a shape extending forward and downward from an upper rear position. The front fork device may be turned about the head pipe by the operation of the handle member.

The left side cover may be arranged at a position further leftward than the left fork pipe and/or the front wheel to extend in the vehicle top-and-bottom direction and may extend from a position in front of the left fork pipe to a position further rearward than the left fork pipe. Further, the right side cover may be arranged at a position further rightward than the right fork pipe and the front wheel to extend in the vehicle top-and-bottom direction and may extend from a position in front of the right fork pipe to a position further rearward than the right fork pipe. Therefore, the left side cover and the right side cover may be relatively large.

The front cover may be arranged in front of the upper bracket and the steering shaft to extend in the vehicle width direction and may extend forward and downward from a position further upward than the handle member. Further, the front cover may be connected to the right side cover and the left side cover. Therefore, the front cover may be relatively large. The steering opening, which enables the turning of the front fork device, may be formed by the left side cover, the right side cover and the front cover.

Such a configuration may cause a relatively large space or volume to be formed in a lower portion of the front portion of the vehicle by the left side cover, the right side cover and the front cover. The space or volume may extend in the vehicle front-and-rear direction and the vehicle width direction, and may be darker than a brightness of the space outside of the straddle-type or saddle-ride vehicle. The left head lamp and the right head lamp may be arranged in the space or volume, e.g. the dark space or volume. In this case, a difference or contrast between the brightness of the left head lamp and right head lamps and the darkness of the dark space or volume may be generated.

When the size of the left head lamp and the right head lamp that are arranged in the above-mentioned dark space or volume is reduced, the size of the dark space or volume being located in the vicinity of the head lamps may be increased. Thus, the size of the dark space or volume located in the vicinity of the head lamps may be increased. Therefore, the difference or contrast between the brightness of the head lamps and the darkness of the dark space or volume may be more conspicuous to surrounding people who view the head lamps. That is, without wishing to be bound by theory, it may be possible to increase the effect of the utilization of the difference or contrast between the brightness of the left head lamp and right head lamp and the darkness of the dark space or volume by reducing the size of the left head lamp and the right head lamp. In contrast, in the conventional head lamps, the conspicuousness is ensured by an increase in size of light-emitting areas.

The above-mentioned configuration may cause the left head lamp to be arranged at a position further leftward than the head pipe and further forward than the left fork pipe, e.g. in at least one or each orientation of the front fork device and/or the handle member, such as the "straight ahead" orientation, and the right head lamp to be arranged at a position further rightward than the head pipe and further forward than the right fork pipe, e.g. in at least one or each orientation of the front fork device and/or the handle member, such as the "straight ahead" orientation. Thus, the left head lamp and the right head lamp may be likely to be conspicuous from a position outside of the vehicle. Further, because the dark space or volume may be present between the left head lamp and the right head lamp, the difference or contrast between the brightness of the left head lamp and right head lamp and the darkness of the dark space or volume may be increased.

At least part of the left head lamp may be arranged at a position further inward than the left side cover, and may overlap with the left side cover in the vehicle left side view. Further, at least part of the right head lamp may be arranged at a position further inward than the right side cover, and may overlap with the right side cover in the vehicle right side view. In this case, at least parts of the respective left head lamp and right head lamp may be arranged in the dark space or volume. Therefore, the brightness of the space outside of the vehicle and the brightness of the left head lamp may be clearly sectioned by the left side cover, and the brightness of the space outside of the vehicle and the brightness of the right head lamp may be clearly sectioned by the right side cover. Thus, even when the size of the left head lamp and the right head lamp is reduced, the conspicuousness may be ensured for the left head lamp and the right head lamp.

At least part of the left head lamp and at least part of the right head lamp may overlap with the front cover in the vehicle plan view. In this case, at least parts of the respective left head lamp and right head lamp may be arranged in the space or volume, e.g. the dark space or volume. Therefore, the brightness of the space above the vehicle and the brightness of the left head lamp and the right head lamp may be clearly sectioned by the front cover. Thus, even when the size of the left head lamp and the right head lamp is reduced, the conspicuousness for the left head lamp and the right head lamp may be ensured.

At least part of the lower edge of the front cover may be arranged between the left head lamp and the right head lamp in the vehicle width direction. In the vehicle width direction, at least part of the lower edge of the front cover arranged between the left head lamp and the right head lamp may be arranged at a position further upward than the lower end of the left head lamp and the lower end of the right head lamp in the vehicle front view. In this case, the upper end of the above-mentioned space or volume, e.g. the dark space or volume, may be located between the left head lamp and the right head lamp. Therefore, the space or volume, e.g. the dark space or volume, may be present between the left head lamp and the right head lamp. Thus, the brightness of the left head lamp and the brightness of the right head lamp may be clearly sectioned. As a result, even when the size of the left head lamp and the right head lamp is reduced, individual conspicuousness of the left head lamp and the right head lamp may be ensured.

The size of the space or volume, e.g. the dark space or volume, located in the vicinity of the head lamps may be increased upward. Thus, the difference or contrast between the brightness of the head lamps and the darkness of the dark space or volume may be more conspicuous to surrounding people who view the head lamps. That is, the effect of the utilization of the difference or contrast between the brightness of the left head lamp and right head lamp and the darkness of the dark space or volume may be increased by this configuration.

When the front fork device is turned rightward or rightwardmost, a left portion of the lower end of the front edge of the under bracket may be moved upward, and a right portion of the lower end of the front edge of the under bracket may be moved downward. On the other hand, when the front fork device is turned leftward or leftwardmost, the right portion of the lower end of the front edge of the under bracket may be moved upward, and the left portion of the lower end of the front edge of the under bracket may be moved downward. In the conventional straddle-type vehicle, the left head lamp and the right head lamp are respectively arranged at positions further upward than a lower end of a front edge of an under bracket, so that the left head lamp and the right head lamp are prevented from interfering with the under bracket.

On the other hand, in the present invention, at least part of the left head lamp may be arranged at a position further upward than the axle of the front wheel and further downward than the left portion of the lower end of the front edge of the under bracket when the front fork device is turned rightward or rightwardmost. Further, at least part of the right head lamp may be arranged at a position further upward than the axle of the front wheel and further downward than the right portion of the lower end of the front edge of the under bracket when the front fork device is turned leftward or leftwardmost. Such a configuration may enable at least part of the left head lamp and at least part of the right head lamp to be prevented from interfering with the under bracket, and the left head lamp and the right head lamp may be arranged in the above-mentioned space or volume, e.g. the dark space or volume.

In this case, it may be possible to respectively arrange the left head lamp and the right head lamp at positions further downward than the lower end of the front edge of the under bracket as described above by reducing the size of the left head lamp and the right head lamp. Further, even when the left head lamp and the right head lamp are respectively arranged at positions further downward than the lower end of the front edge of the under bracket by a reduction in size of the left head lamp and the right head lamp, the size of the vehicle may be reduced in the front-and-rear direction.

Further, the above-mentioned configuration may cause at least parts of the respective left head lamp and right head lamp to be arranged at positions further rearward than the axle of the front wheel. In this case, the left head lamp and the right head lamp may be inhibited from projecting forward. Thus, the size of the left head lamp and the right head lamp may be reduced, and the size of the front portion of the vehicle may be reduced.

As a result, the conspicuousness of the head lamps may be ensured while an increase in the size of the front portion of the vehicle may be inhibited by a reduction in size of the head lamps.

A front surface of the left head lamp and a front surface of the right head lamp may be respectively arranged at positions further rearward than a front end of the front cover.

In this case, the size of the front portion of the vehicle may be reduced. Further, the front surfaces of the left head lamp and the right head lamp may be arranged in a darker space or volume. Therefore, the difference or contrast between the brightness of the left head lamp and right head lamp and the darkness of the dark space or volume may be increased. Thus, the conspicuousness of the left head lamp and the right head lamp may be ensured.

The left head lamp and the right head lamp may respectively include a left light source and a right light source that are adapted to generate light, the left light source may be arranged to overlap with the left side cover in a vehicle side view, and the right light source may be arranged to overlap with the right side cover in the vehicle side view.

In this case, the left light source of the left head lamp and the right light source of the right head lamp may be arranged inside of the space or volume, e.g. the dark space or volume, that is located between the left side cover and the right side cover. Thus, the brightness of the space outside of the vehicle and the brightness of the left light source may be clearly sectioned by the left side cover, and the brightness of the space outside of the vehicle and the brightness of the right light source may be clearly sectioned by the right side cover. Therefore, the difference or contrast between the brightness of the left light source and right light source and the darkness of the space or volume, e.g. the dark space or volume, may be increased. As a result, the conspicuousness of the left head lamp and the right head lamp may be ensured.

The left light source and the right light source may be arranged to overlap with the front cover in the vehicle plan view.

In this case, the left light source of the left head lamp and the right light source of the right head lamp may be arranged inside of the space or volume, e.g. the dark space or volume, that is located below the front cover. Thus, the brightness of the space above the vehicle, and the brightness of the left light source and the right light source may be clearly sectioned by the front cover. Therefore, the difference or contrast between the brightness of the left light source and right light source and the darkness of the dark space or volume may be increased. As a result, the conspicuousness of the left head lamp and the right head lamp may be ensured.

The left head lamp may further include a left head lamp cover arranged in front of the left light source, the right head lamp may further include a right head lamp cover arranged in front of the right light source, at least part of the left head lamp cover may be arranged to overlap with the left side cover in the vehicle side view, and at least part of the right head lamp cover may be arranged to overlap with the right side cover in the vehicle side view.

In this case, the left head lamp and the right head lamp may be inhibited from projecting forward. Thus, the size of the front portion of the vehicle may be easily reduced.

Further, the left light source and the right light source may be arranged behind the front portion of the vehicle by a length by which the left head lamp and the right head lamp are inhibited from projecting. Further, at least part of the left head lamp cover and at least part of the right head cover may be arranged inside of the space or volume, e.g. the dark space or volume, located between the left side cover and the right side cover. Therefore, the difference or contrast between the brightness of the left head lamp and right head lamp and the darkness of the dark space or volume may be increased. As a result, the conspicuousness of the left head lamp and the right head lamp may be ensured.

The left head lamp cover may have a left lens portion configured to apply directivity to the light generated by the left light source, and the right head lamp cover may have a right lens portion configured to apply directivity to the light generated by the right light source.

In this case, because directivity may be applied to the light generated by the respective left light source and right light source, a reduction in light intensity due to diffusion of light may be prevented. Thus, the conspicuousness of the left head lamp and the right head lamp may be ensured without an increase in emission intensity of the left light source and the right light source. Further, it may not be necessary to respectively separately provide lenses in front of the left light source and the right light source. Thus, the size of the left head lamp and the right head lamp may be reduced in the front-and-rear direction, and the size of the front portion of the vehicle may be reduced in the front-and-rear direction. Further, even when the size of the left head lamp and the right head lamp is reduced, the conspicuousness may be ensured by the utilization of the large difference or contrast between the brightness of the left head lamp and right head lamp and the darkness of the space or volume, e.g. the dark space or volume.

An outer surface of the left head lamp cover may be covered by a left hard film, and an outer surface of the left hard film may be exposed, and an outer surface of the right head lamp cover may be covered by a right hard film, and an outer surface of the right hard film may be exposed.

In this case, it may be possible to respectively protect the left head lamp cover and right head lamp cover without respectively providing outer lenses at the left head lamp cover and right head lamp cover. Thus, the size of the left head lamp and the right head lamp may be reduced. Further, because it may be possible to protect the left head lamp and the right head lamp from mud and the like without respectively providing the outer lenses, the left head lamp and the right head lamp may be arranged in the space or volume, e.g. the dark space or volume, in the lower portion of the front portion of the vehicle. Thus, the conspicuousness may be ensured by the utilization of the large difference or contrast between the brightness of the left head lamp and right head lamp and the darkness of the dark space or volume.

The vehicle may further include a left light axis adjustment member that is adapted to be used in a case in which a direction of a light axis that is formed by the left light source and the left lens portion, of the left head lamp is to be adjusted while a positional relation between the left light source and the left lens portion is maintained, and a right light axis adjustment member that is adapted to be used in a case in which a direction of a light axis that is formed by the right light source and the right lens portion, of the right head lamp is to be adjusted while a positional relation between the right light source and the right lens portion is maintained.

Even when adjustment of direction of the light axis of the left head lamp is performed, this configuration may cause the positional relationship between the left light source and the left lens portion to be maintained. Thus, light distribution of the left head lamp may be maintained. Similarly, even when adjustment of direction of the light axis of the right head lamp is performed, the positional relationship between the right light source and the right lens portion may be maintained. Thus, light distribution of the right head lamp may be maintained.

The left head lamp may be arranged to have a part that overlaps with the left fork pipe and another part that does not overlap with the left fork pipe in the vehicle front view, and the right head lamp may be arranged to have a part that overlaps with the right fork pipe and another part that does not overlap with the right fork pipe in the vehicle front view.

In this case, parts of the respective left head lamp and right head lamp may respectively overlap with the left fork pipe and right fork pipe in the vehicle front view, e.g. in at least one or each orientation of the front fork device and/or the handle member, such as the "straight ahead" orientation. Thus, the size of the front portion of the vehicle may be reduced in the vehicle width direction.

Further, the other parts of the respective left head lamp and right head lamp may not overlap with the left fork pipe and right fork pipe in the vehicle front view. Here, the left side cover and the right side cover may respectively extend to positions further rearward than the left fork pipe and the right fork pipe. That is, the space or volume, which is located between the left fork pipe and the right fork pipe in the vehicle width direction and may be located at a position further rearward than the left fork pipe and the right fork pipe, may be covered by the left side cover and the right side cover from outside. It may be more difficult for the external light to enter the space or volume that is located at an innermost position. Therefore, the space or volume, which may be located between the left fork pipe and the right fork pipe in the vehicle width direction and may be located at the position further rearward than the left fork pipe and the right fork pipe, may be covered by the left side cover and the right side cover from outside, so that a darker region may be formed in the space or volume.

The other parts of the respective left head lamp and right head lamp may be arranged in the darker region of the space or volume in the vehicle front view. Thus, the difference or contrast between the brightness of the left head lamp and right head lamp and the darkness of the dark space or volume may be increased. As a result, the conspicuousness of the left head lamp and the right head lamp may be improved. In other words, part of the left head lamp may overlap with the left fork pipe in the vehicle front view, and part of the right head lamp may overlap with the right fork pipe in the vehicle front view. This configuration may enable the conspicuousness of the left head lamp and the right head lamp to be improved while the vehicle is made compact in the vehicle width direction.

A left cutout portion may be formed by a left side edge of the front cover and an upper edge of the left side cover, and a right cutout portion may be formed by a right side edge of the front cover and an upper edge of the right side cover, in the vehicle side view, the handle member can be turned in the left cutout portion and the right cutout portion, and upper ends of the left head lamp and the right head lamp may be respectively arranged at positions further downward than the left cutout portion and the right cutout portion.

The external light may enter the cutout portions. Even in such a case, because the left head lamp and the right head lamp are respectively arranged at positions further downward than the left cutout portion and the right cutout portion, the external light entering the left cutout portion and the right cutout portion may be inhibited from affecting the left head lamp and the right head lamp. Thus, the conspicuousness of the left head lamp and the right head lamp may be ensured.

Front edges of the left side cover and the right side cover may extend in the top-and-bottom direction, and the lower edge of the front cover may extend in the vehicle width direction, the lower edge of the front cover may be connected to upper ends of front edges of the respective left side cover and right side cover, the left head lamp may be arranged in a corner portion formed by the lower edge of the front cover and the upper end of the front edge of the left side cover in the vehicle front view, and the right head lamp may be arranged in a corner portion formed by the lower edge of the front cover and the upper end of the front edge of the right side cover in the vehicle front view.

In a region in the vicinity of the lower edge of the front cover of the above-mentioned space or volume, the external light may be inhibited from entering the region from above the vehicle by the front cover. In a region in vicinity of the front edge of the left side cover of the above-mentioned space or volume, the external light may be inhibited from entering the region from outside of the vehicle by the left side cover. In a region in the vicinity of the front edge of the right side cover of the above-mentioned space or volume, the external light may be inhibited from entering the region from outside of the vehicle by the right side cover. Therefore, it may be more difficult for the external light to enter a region in the vicinity of the lower edge of the front cover and in the vicinity of the front edge of the left side cover, and a region in the vicinity of the lower edge of the front cover and in the vicinity of the front edge of the right side cover of the above-mentioned space or volume. Therefore, these regions may be more likely to become dark in the space or volume.

Therefore, regions of the corner portion being formed by the lower edge of the front cover and the upper end of the front edge of the left side cover, and the corner portion being formed by the lower edge of the front cover and the upper end of the front edge of the right side cover, may be more likely to become dark than other regions. Therefore, the above-mentioned configuration may cause the left head lamp and the right head lamp to be arranged in the regions that are more likely to become dark. Thus, the conspicuousness of the left head lamp and the right head lamp may be improved.

A lower portion of an inner portion of the left head lamp may extend upward and inward, and a lower portion of an inner portion of the right head lamp may extend upward and inward in a vehicle front view.

The regions of the corner portion formed by the lower edge of the front cover and the upper end of the front edge of the left side cover, and the corner portion formed by the lower edge of the front cover and the upper end of the front edge of the right side cover, may be more likely to become dark than other regions. On the other hand, portions spaced apart from these corner portions may be brighter than the regions of the corner portions due to the entrance of the external light.

The above-mentioned configuration may cause outer portions and upper portions of the respective left head lamp and right head lamp to be respectively arranged in the regions of the corner portions that are likely to become dark. Thus, the difference or contrast between brightness of the outer portions of the left head lamp and right head lamp and darkness of the dark space or volume may be increased. On the other hand, lower portions of inner portions of the respective left head lamp and right head lamp that are respectively arranged at positions spaced apart from the corner portions may extend upward and inward. Thus, the difference or contrast between brightness of the lower portions of the inner portions of the respective left head lamp and right head lamp and the darkness of the space or volume may be inhibited from being reduced. As a result, the conspicuousness of the entire left head lamp and right head lamp may be ensured.

Further, because a lower portion of the left head lamp may extend upward and inward, a measurement or dimension of the inner portion of the left head lamp may be made smaller than the sum of measurements or dimensions of the outer portion and the upper portion of the left head lamp. Similarly, because a lower portion of the right head lamp may extend upward and inward, the measurement or dimension of the inner portion of the right head lamp may be made smaller than the sum of measurements or dimensions of the outer portion and the upper portion of the right head lamp. Thus, the size of the left head lamp and right head lamp may be reduced. Further, even when the size of the left head lamp and right head lamp is reduced, the conspicuousness may be ensured by the utilization of the large difference or contrast between the brightness of the left head lamp and right head lamp and the darkness of the dark space or volume.

A recess being dented rearward may be formed in a front portion of the front cover, and a lower edge of the recess may be located between an upper end of the left head lamp and a lower end of the left head lamp and between an upper end of the right head lamp and a lower end of the right head lamp.

In this case, because the recess of the front cover is dented rearward, a shadow may be likely to be formed below the recess. Therefore, a darker region may be formed in the space or volume. Further, a lower edge of the recess may be located at a position further downward than the upper end of the left head lamp and the upper end of the right head lamp. Thus, the left head lamp may be arranged in the darker region between a left portion of the recess and the left side cover, and the right head lamp may be arranged in the darker region between a right portion of the recess and the right side cover. Thus, the conspicuousness of the left head lamp and the right head lamp may be improved. Further, because parts of the recess may respectively overlap with the left head lamp and right head lamp in a horizontal direction, the size of the front portion of the vehicle may be reduced in the top-and-bottom direction.

Further, the lower edge of the recess may be located at a position further upward than the lower end of the left head lamp and the lower end of the right head lamp. Thus, the size of the above-mentioned dark space or volume may be increased in the top-and-bottom direction. Thus, the difference or contrast between the brightness of the left head lamp and right head lamp and the darkness of the dark space or volume may be increased. Thus, the conspicuousness of the left head lamp and the right head lamp may be ensured.

The recess of the front cover may include an intake opening, the vehicle may further comprise an engine arranged behind the front wheel, and an air duct that extends rearward from the intake opening and forms an intake passage connected to the engine.

In this case, the intake opening of the front cover may extend rearward to be connected to the engine. Therefore, a space or volume may be formed to extend to an innermost position below the intake opening in the vehicle front view. The left head lamp and the right head lamp may be arranged at the innermost positions of the space or volume. Thus, the size of the front portion of the vehicle may be reduced in the front-and-rear direction. Further, a shadow may likely be formed at the innermost position, which may be located below the intake opening, of the space or volume. Therefore, a darker region may be formed in the space or volume, e.g. the dark space or volume. The left head lamp and the right head lamp may be arranged in the darker region. Thus, the conspicuousness of the left head lamp and the right head lamp may be improved. As a result, air may be introduced into the intake passage of the air duct from the intake opening of the front cover while the conspicuousness of the left head lamp and the right head lamp may be ensured and the size of the front portion of the vehicle may be reduced.

The left head lamp is positioned rightward than a center of the vehicle, and a left end of the left head lamp may be arranged at a position further rightward than a right edge of the front wheel in the vehicle front view, and the right head lamp is positioned leftward than the center of the vehicle, and a right end of the right head lamp may be arranged at a position further leftward than a left edge of the front wheel in the vehicle front view.

In this case, a relatively large space may be formed above the front wheel and between the left head lamp and the right head lamp. Thus, the front wheel may be easily prevented from interfering with the left head lamp and the right head lamp when moving upward. Further, the front wheel may be largely spaced apart from the left head lamp and the right head lamp, so that the dark space or volume may be largely ensured. Therefore, the difference or contrast between the brightness of the left head lamp and right head lamp and the darkness of the dark space or volume may be increased. As a result, the conspicuousness of the left head lamp and the right head lamp may be improved.

A front end of the front cover may be located at a position further forward than the axle of the front wheel.

In the vehicle side view, because the outer shape of the front wheel is circular, the outer shape of an upper portion of the front wheel is curved downward towards a position further rearward than the axle. Therefore, the size of the space or volume being located at a position above the front wheel and further rearward than the axle may be larger than the space or volume above the axle. Therefore, the external light may be likely to enter the space or volume located at a position above the front wheel and further rearward than the axle, that is, a region located at the innermost position of the space or volume.

Because the above-mentioned configuration may cause the front end of the front cover to be located at a position further forward than the axle of the front wheel, the external light may be prevented from entering the region located at the innermost position of the space or volume due to shielding of the external light by the front end of the front cover. Thus, the difference or contrast between the brightness of the left head lamp and right head lamp and the darkness of the region located at the innermost position of the space or volume, e.g. the dark space or volume, may be generated. As a result, the conspicuousness of the left head lamp and right head lamp may be ensured.

Front edges of the respective left side cover and right side cover may be inclined downward and rearward in a vehicle side view, and front surfaces of the respective left head lamp and right head lamp may be inclined downward and rearward in the vehicle side view.

In this case, an upper portion of the left side cover may be formed to be larger than a lower portion of the left side cover, and an upper portion of the right side cover may be formed to be larger than a lower portion of the right side cover. Thus, even when a source of the external light such as the sun is present at an obliquely upward position, the size of the lower portions of the respective left side cover and right side cover may be reduced while the external light may be prevented from entering a space or volume of a lower portion of the vehicle.

Further, the front surfaces of the respective left head lamp and right head lamp may be inclined downward and rearward in the vehicle side view. Thus, even when the front edge of the left side cover and the front edge of the right side cover are inclined downward and rearward, parts of the respective left head lamp and right head lamp may be arranged in the space or volume of the lower portion of the vehicle. As a result, the conspicuousness of the left head lamp and the right head lamp may be ensured.

The left head lamp may include a left radiator fin, the right head lamp may include a right radiator fin, the left radiator fin may be exposed below the left head lamp, and the right radiator fin may be exposed below the right head lamp.

In this case, it may be possible to improve heat dissipation property of the left head lamp and the right head lamp without increasing the size of the left head lamp and the right head lamp in the top-and-bottom direction. Further, it may not be necessary to provide a member, which may be used when heat of the left head lamp is dissipated, at a front portion of the left head lamp, and it may not necessary to provide a member, which may be used when heat of the right head lamp is dissipated, at a front portion of the right head lamp. Thus, the size of the front portion of the vehicle may be reduced in the front-and-rear direction.

Further, the left head lamp may arranged in the space or volume, e.g. the dark space or volume, such that the left radiator fin is exposed below the left head lamp, and the right head lamp may be arranged in the space or volume, e.g. the dark space or volume, such that the right radiator fin is exposed below the right head lamp. Thus, the difference or contrast between the brightness of the left head lamp and right head lamp and the darkness of the region located at the innermost position of the dark space or volume may be generated. As a result, the conspicuousness of the left head lamp and the right head lamp may be ensured.

The vehicle may further include a control device that is adapted to control turn on and off of the left head lamp and the right head lamp, wherein the control device may be arranged at a position further outward than the left head lamp or the right head lamp.

In this case, it may be possible to control to turn on and off the left head lamp and the right head lamp without increasing the size of the left head lamp and the right head lamp in the top-and-bottom direction. Thus, the size of the front portion of the vehicle may be prevented from being increased in the top-and-bottom direction.

A front surface of the left head lamp may be inclined to have a left portion extending to a position further rearward than a center portion in the vehicle plan view, and a front surface of the right head lamp may be inclined to have a right portion extending to a position further rearward than a center portion in the vehicle plan view.

In this case, the left portion of the left head lamp and the right portion of the right head lamp may be prevented from projecting forward. Thus, the size of the left head lamp and the right head lamp may be reduced, and the size of the front portion of the vehicle may be reduced. Further, because the left portion of the left head lamp and the right portion of the right head lamp extend rearward, the left head lamp and the right head lamp may be arranged in the darker region located at the innermost position in the space or volume of the lower portion of the vehicle. Therefore, the difference or contrast between the brightness of the left head lamp and right head lamp and the darkness of the space or volume, e.g. the dark space or volume, may be increased. As a result, the conspicuousness of the left head lamp and the right head lamp may be ensured.

The front cover, the left side cover and the right side cover may be provided so as to not close a space or volume below the left head lamp and the right head lamp in the vehicle front view.

In this case, a cover member including a right side cover member, a left side cover member and a front cover member may not be provided below the left head lamp and the right head lamp. Therefore, the left head lamp and the right head lamp may directly face the dark space or volume located below. Thus, the conspicuousness of the left head lamp and the right head lamp may be improved.

The vehicle may further include a connection member that connects the left head lamp to the right head lamp, and the connection member may be attached to the left head lamp and the right head lamp to be detachably attachable.

In this case, the connection member may be replaceable. Therefore, the left head lamp and the right head lamp may be connected to each other using the connection member having an appropriate length. Thus, the distance between the left head lamp and the right head lamp may be arbitrarily adjusted according to a shape and a measurement of the straddle-type vehicle.

According to a disclosed example is a method of producing or assembling a saddle-ride or straddle-type vehicle according to the above aspect. The method may comprise providing a head pipe that extends downward and forward.

The method may comprise providing a front fork device that includes a steering shaft, a handle member, a left fork pipe, a right fork pipe, an upper bracket, an under bracket and a front wheel.

The method may comprise providing a left side cover that extends in a vehicle top-and-bottom direction and may be arranged at a position further leftward than the left fork pipe and the front wheel.

The method may comprise providing a right side cover that extends in the vehicle top-and-bottom direction and may be arranged at a position further rightward than the right fork pipe and the front wheel.

The method may comprise providing a front cover that extends in a vehicle width direction and is connected to the right side cover and the left side cover.

The method may comprise providing a left head lamp that is arranged at a position further leftward than the head pipe and further forward than the left fork pipe, and may have at least a part arranged at a position further rearward than an axle of the front wheel.

The method may comprise providing a right head lamp that is arranged at a position further rightward than the head pipe and further forward than the right fork pipe, and may have at least a part arranged at a position further rearward than the axle of the front wheel.

The method may comprise inserting the steering shaft into the head pipe, so as to extend downward and forward.

The method may comprise arranging the left fork pipe at a position further leftward than the steering shaft such that it extends to a position further downward and forward than the steering shaft.

The method may comprise arranging the right fork pipe at a position further rightward than the steering shaft such that it extends to a position further downward and forward than the steering shaft.

The upper bracket may be coupled to the steering shaft, and may be coupled to the right fork pipe and the left fork pipe, e.g. to extend in the vehicle width direction.

The under bracket may be coupled to the steering shaft below the upper bracket, and may be coupled to the right fork pipe and the left fork pipe, e.g. to extend in the vehicle width direction,

The front wheel may be arranged at a position further downward than the under bracket, and may be arranged between the left fork pipe and the right fork pipe.

The method may comprise providing the left side cover such that it extends from a position in front of the left fork pipe to a position further rearward than the left fork pipe.

The method may comprise providing the right side cover such that it extends from a position in front of the right fork pipe to a position further rearward than the right fork pipe.

The method may comprise providing the front cover such that it extends forward and downward from a position further upward than the handle member, and is arranged in front of the upper bracket and the steering shaft.

The method may comprise forming a steering opening, which may enable turning of the front fork device, using the left side cover, the right side cover and the front cover.

The method may comprise arranging a front end of the under bracket at a position further forward than a front end of the upper bracket.

The method may comprise arranging at least part of the left head lamp at a position further upward than the axle of the front wheel and further downward than a left portion of a lower end of a front edge of the under bracket when the front fork device is turned rightward.

The method may comprise arranging at least part of the right head lamp at a position further upward than the axle of the front wheel and further downward than a right portion of the lower end of the front edge of the under bracket when the front fork device is turned leftward.

The method may comprise arranging at least part of the left head lamp at a position further inward than the left side cover, such that it overlaps with the left side cover in a vehicle left side view.

The method may comprise arranging at least part of the right head lamp at a position further inward than the right side cover, such that it overlaps with the right side cover in a vehicle right side view.

The method may comprise arranging at least part of the left head lamp and at least part of the right head lamp such that they overlap with the front cover in a vehicle plan view.

The method may comprise arranging at least part of a lower edge of the front cover between the left head lamp and the right head lamp in the vehicle width direction, at a position further upward than a lower end of the left head lamp and a lower end of the right head lamp in a vehicle front view.

According to a disclosed example is a kit or assembly for fitting to the saddle-ride or straddle-type vehicle of the above aspect. The kit or assembly may be retrofittable to a straddle-type or saddle-ride vehicle. The kit or assembly may comprise at least one or more of: a left headlamp unit, a right headlamp unit, a left side cover, a right side cover, a front cover and/or a front fork device, which may be or comprise a left headlamp unit, a right headlamp unit, a left side cover, a right side cover, a front cover and/or a front fork device as described above in relation to the above aspect.

Unless stated otherwise, the relative positions of parts or components described herein, particularly with respect to the left fork pipe, right fork pipe, upper bracket, lower bracket, front wheel and/or other component of the front fork device or the front fork device itself, may be for at least one or each orientation or configuration of the front fork device, handle member or front wheel, such as the unturned or "straight ahead" configuration.

### BRIEF DESCRIPTION OF DRAWINGS

An embodiment of the present invention will now be described, by way of example only, and with reference to the accompanying drawings, which are:
- **Figure 1**: a side view of one side of a motorcycle according to one embodiment of the present invention;
- **Figure 2**: a front view of the motorcycle of Figure 1;
- **Figures 3A and 3B**: diagrams of a front fork device of the motorcycle of Figure 1;
- **Figure 4**: an exploded perspective view of a head lamp unit;
- **Figure 5**: a perspective view of the head lamp unit;
- **Figure 6**: a plan view of the head lamp unit;
- **Figures 7A and 7B**: a plan view and a back view of the head lamp unit, respectively;
- **Figure 8**: a cross sectional view taken along the line A-A of a left head lamp of Figure 7A;
- **Figure 9**: a plan view showing a detailed shape of the left head lamp;
- **Figure 10**: a perspective view of a pair of holding members;
- **Figure 11**: a plan view of the pair of holding members;
- **Figures 12A and 12B**: a front view and a back view of the pair of holding members, respectively;
- **Figures 13A to 13C**: back views of a connection member;
- **Figure 14**: a back view of the head lamp unit;
- **Figure 15**: a cross sectional view taken along the line B-B of the head lamp unit of Figure 14;
- **Figure 16**: a cross sectional view taken along the line C-C of the head lamp unit of Figure 14;
- **Figure 17**: an enlarged side view of the left side of a front portion of the motorcycle;
- **Figure 18**: an enlarged side view of the right side of the front portion of the motorcycle;
- **Figure 19**: an enlarged front view of the motorcycle;
- **Figure 20**: a plan view of the front portion of the motorcycle;
- **Figure 21**: a bottom view of the front portion of the motorcycle;
- **Figure 22**: a side view of the left side of a front fork device and the head lamp unit when the front fork device is not turned, e.g. in a "straight ahead" orientation;
- **Figure 23**: a side view of the left side of the front fork device and the head lamp unit when the front fork device is in maximum rightward turning;
- **Figure 24**: a plan view showing a positional relation between the head lamp unit and an under bracket;
- **Figure 25**: a perspective view showing assembly steps of the front portion of the motorcycle;
- **Figure 26**: a perspective view showing the assembly steps of the front portion of the motorcycle;
- **Figure 27**: a perspective view showing the assembly steps of the front portion of the motorcycle;
- **Figure 28**: a perspective view showing the assembly steps of the front portion of the motorcycle;
- **Figure 29**: a perspective view showing the assembly steps of the front portion of the motorcycle;
- **Figure 30**: a perspective view of the motorcycle; and
- **Figure 31**: an enlarged front view of the motorcycle according to a modified example.

### DETAILED DESCRIPTION OF DRAWINGS

A saddled vehicle, straddle-type vehicle or straddle-ride vehicle according to one embodiment of the present invention will be described below with reference to drawings. In the following description, a sports-type motorcycle being different from a scooter will be described as one example of the saddled vehicle, straddle-type vehicle or saddle-ride vehicle.

### Schematic Configuration of Motorcycle

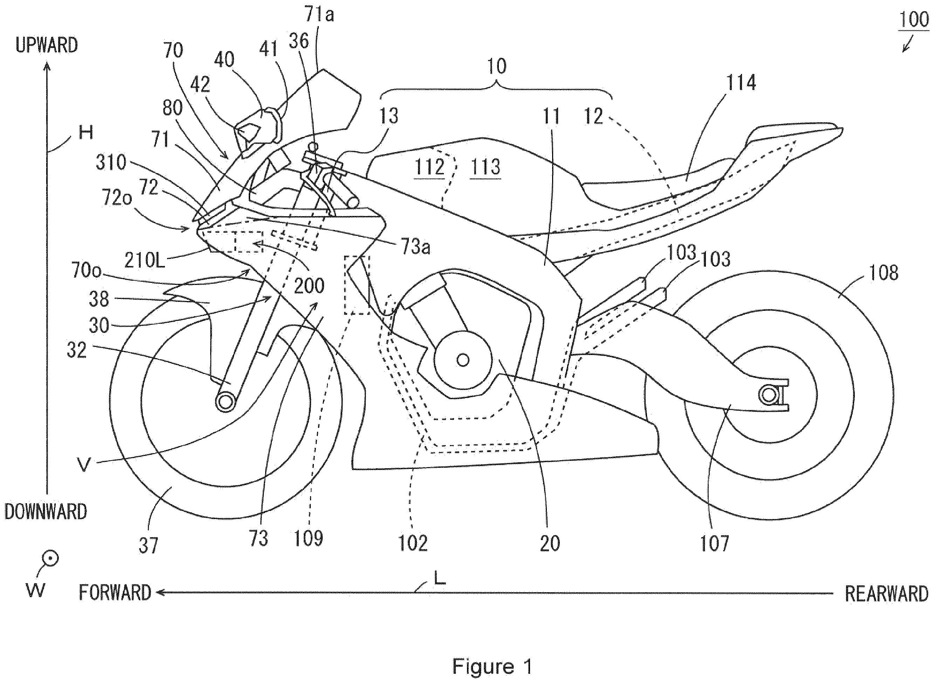

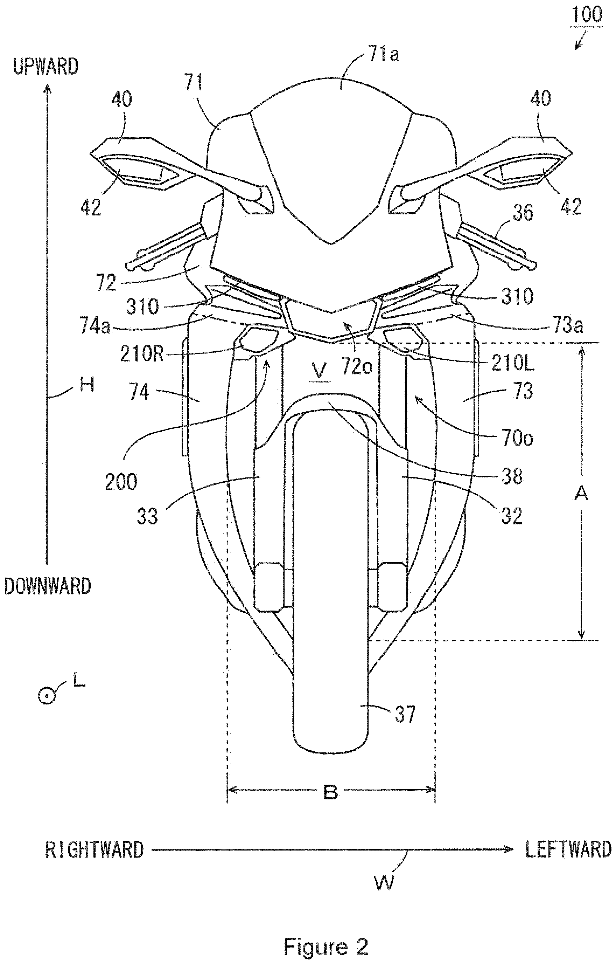

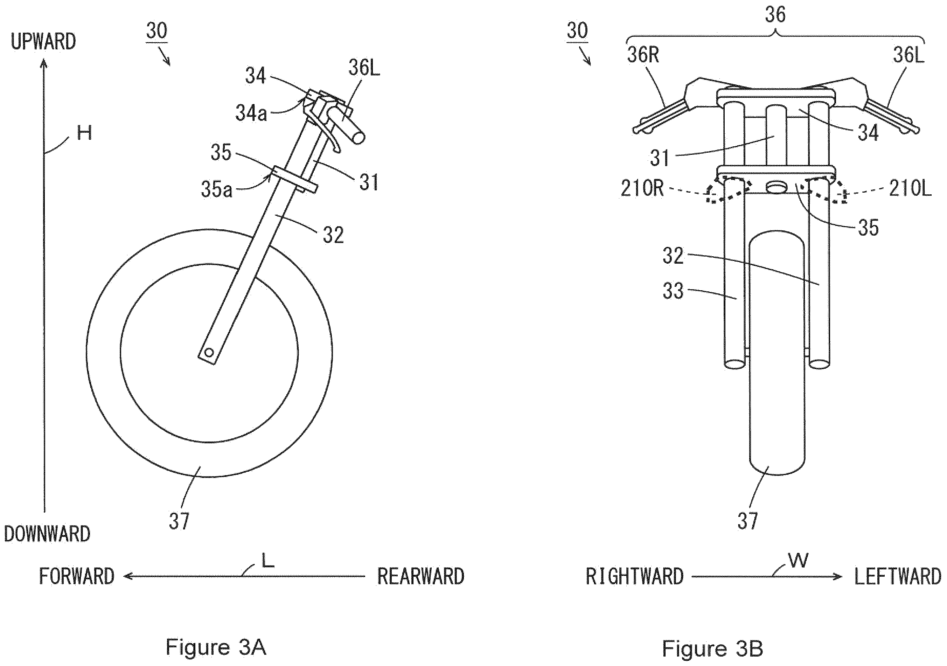

Figure 1 is a side view of one side of the motorcycle according to one embodiment of the present invention. Figure 2 is a front view of the motorcycle of Figure 1. Figures 3A and 3B are diagrams of a front fork device of the motorcycle of Figure 1. In Figures 1 and 2, the motorcycle 100 standing up to be perpendicular to a road surface is shown. Figure 3A shows a side view of the left side of the front fork device 30, and Figure 3B shows a front view of the front fork device 30.

In Figures 1, 2, and each of subsequent given diagrams, a front-and-rear direction L, a width direction W and a top-and-bottom direction H of the motorcycle 100 are indicated by arrows. In the following description, a direction in which the arrow is directed in the front-and-rear direction L is referred to as forward, and its opposite direction is referred to as rearward. Further, a direction in which the arrow is directed in the width direction W is referred to as leftward, and its opposite direction is referred to as rightward. Further, a direction in which the arrow is directed in the top-and-bottom direction H is referred to as upward, and its opposite direction is referred to as downward.

As shown in Figures 1 and 2, the motorcycle 100 includes a body frame 10. The body frame 10 includes a pair of main frames, namely left and right main frames 11, a pair of rear frames, namely left and right rear frames 12, and a head pipe 13. The head pipe 13 extends downward and forward. The main frames 11 are provided to extend obliquely downward and rearward from the head pipe 13. The rear ends of the main frames 11 are curved downward. The rear frames 12 are attached to respectively extend rearward from upper portions of the rear ends of the respective main frames 11.

The front fork device 30 of Figures 3A and 3B is attached to the head pipe 13 of the body frame 10 such that the front fork device 30 can be turned leftward and rightward. The front fork device 30 includes a steering shaft (a stem shaft) 31, a left fork pipe 32, a right fork pipe 33, an upper bracket 34, an under bracket 35, a handle member 36 and a front wheel 37. In Figure 3B, a left head lamp 210L and a right head lamp 210R, described below, are indicated by the thick dotted lines.

As shown in Figure 3A, the steering shaft 31 is inserted into the head pipe 13 of Figure 1 to extend downward and forward. The left fork pipe 32 and the right fork pipe 33 respectively include inner tubes having a suspension function and outer tubes arranged to respectively surround the inner tubes. As shown in Figure 3B, the left fork pipe 32 is arranged at a position further leftward than the steering shaft 31 to extend to a position further downward and forward than the steering shaft 31. Similarly, the right fork pipe 33 is arranged at a position further rightward than the steering shaft 31 to extend to a position further downward and forward than the steering shaft 31.

As shown in Figure 3A, the steering shaft 31 is arranged at a position slightly further rearward than the respective left fork pipe 32 and right fork pipe 33 in a vehicle side view. In the present example, a front portion of the steering shaft 31 overlaps with rear portions of the respective left fork pipe 32 and right fork pipe 33 in the vehicle side view.

The upper bracket 34 is coupled to an upper portion of the steering shaft 31, and is coupled to the right fork pipe 33 and the left fork pipe 32 to extend in the width direction W. The under bracket 35 is coupled to a lower portion of the steering shaft 31, and is coupled to the right fork pipe 33 and the left fork pipe 32 to extend in the width direction W, below the upper bracket 34. As shown in Figure 3A, a front end 35a of the under bracket 35 is arranged at a position further forward than a front end 34a of the upper bracket 34.

As shown in Figure 3A, the front wheel 37 is rotatably supported at a position further downward than the under bracket 35 and between the left fork pipe 32 and the right fork pipe 33. A front fender 38 is provided to cover areas further upward, sideward and rearward than the front wheel 37. The handle member 36 includes a pair of handles, namely left and right handles 36L, 36R. The handle member 36 is connected to the left fork pipe 32 and the right fork pipe 33. The handle member 36 may be connected to a handle fixing member (not shown) provided at the upper bracket 34.

The above-mentioned configuration causes the front fork device 30 to be relatively large and have a shape extending forward and downward from a rear upper portion. Therefore, in a space or volume, which is located in front of the front fork device 30 and above the front wheel 37, of a front portion of the motorcycle 100, an upper region is larger in the front-and-rear direction L than a lower region. The front fork device 30 is turned about the head pipe 13 (Figure 1) by the operation of the handle member 36.

As shown in Figure 1, an engine 20 is provided at a lower portion of the pair of main frames 11. The engine 20 includes a cylinder unit and a crank unit. The cylinder unit includes a cylinder body, a cylinder head and the like. The cylinder head includes a fuel injection device, an ignition device and the like. The crank unit includes a crank case, a crankshaft, a generator, a transmission and the like. The crank unit is located below the cylinder unit.

A cover (a cowl) 70 is provided to cover the head pipe 13 from the front, and to cover part of the left fork pipe 32, part of the right fork pipe 33 and a lower portion of the engine 20 from both sides. The cover 70 is attached to the body frame 10, and an air duct 80 that is described below.

The cover 70 includes front covers 71, 72, 73a, 74a, a left side cover 73 and a right side cover 74 (Figure 2). One of the front covers 71 includes a windshield 71a. The front cover 71 is arranged in front of the upper bracket 34 of Figure 3A and the steering shaft 31 of Figure 3A to extend in the width direction W and extend forward and downward from a position further upward than the handle member 36.

The front cover 71 is connected to the right side cover 74 and the left side cover 73 via the other front covers 72, 73a, 74a. A steering opening 70o, which enables turning of the front fork device 30, is formed by the front covers 71, 72, 73a, 74a, the left side cover 73 and the right side cover 74. At least part of the front covers 71, 72, 73a, 74a, the left side cover 73 and the right side cover 74 respectively extends to a position behind the left fork pipe 32 and the right fork pipe 33. Therefore, the steering opening 70o extends to a position further rearward than a turning range of the front fork device 30. The body frame 10 and the cover 70 are not turned even when the handle member 36 is operated by a rider.

Further, left and right mirror devices 40, are provided at positions at substantially the same height as the upper ends of the respective left fork pipe 32 and the right fork pipe 33 in the front cover 71. Each mirror device 40 is one example of a mirror device having a turn indicator lamp, and includes a mirror 41 directed rearward of the vehicle, and an indicator or flasher 42 directed forward of the vehicle as shown in Figure 1.

The rider of the motorcycle 100 can view an area behind the motorcycle 100 by looking at each mirror 41 during driving. Further, the rider of the motorcycle 100 can switch between an unlit state and a blinking state of each indicator or flasher 42 by operating a handle switch provided at the handle member 36.

The front cover 72 is located below the front cover 71 and above the front covers 73a, 74a, the left side cover 73 and the right side cover 74. Left and right strip-shaped openings are formed at the front cover 72. A pair of position lamps 310 is provided, the position lamps 310 being respectively arranged in the strip-shaped openings of the front cover 72.

The front cover 72 supports the lower end of the front cover 71. An intake opening 72o is formed at a center portion in the width direction W of the front cover 72 as a recess. In a vehicle front view, the intake opening 72o is located between the left fork pipe 32 and the right fork pipe 33 of Figure 3B. Further, the intake opening 72o is located in front of the steering shaft 31 of Figure 3B.

The front cover 73a is arranged above the left side cover 73. In the present embodiment, the front cover 73a is integrally formed with the left side cover 73. In Figures 1 and 2, the boundaries between the front cover 73a and the left side cover 73 are indicated by the one-dot dash lines. The left side cover 73 includes a front portion and a rear portion. A front portion of the left side cover 73 is arranged at a position further leftward than the left fork pipe 32 and the front wheel 37 to extend in the top-and-bottom direction H in the vehicle front view (Figure 2), and to extend rearward from a position in front of the left fork pipe 32 in the vehicle side view (Figure 1). Further, the rear portion of the left side cover 73 is arranged at a position further leftward than the engine 20 to substantially horizontally extend rearward from a position in front of the engine 20 in the vehicle side view. Thus, the left side cover 73 overlaps with part of the engine 20 in the vehicle side view.

The front cover 74a is arranged above the right side cover 74. In the present embodiment, the front cover 74a is integrally formed with the right side cover 74. In Figures 1 and 2, the boundaries between the front cover 74a and the right side cover 74 are indicated by the one-dot dash lines. The right side cover 74 includes a front portion and a rear portion. The front portion of the right side cover 74 is arranged at a position further rightward than the right fork pipe 33 and the front wheel 37 to extend in the top-and-bottom direction H in the vehicle front view (Figure 2), and to extend rearward from a position in front of the right fork pipe 33 in the vehicle side view (Figure 1). Further, the rear portion of the right side cover 74 is arranged at a position further rightward than the engine 20 to substantially horizontally extend rearward from a position in front of the engine 20 in the vehicle side view. Thus, the right side cover 74 overlaps with part of the engine 20 in the vehicle side view.

While the front covers 71, 72, 73a, 74a of the cover 70 are separately formed from one another in the present example, the invention is not limited to this. Parts or all of two or more of the front covers 71, 72, 73a, 74a may be integrally formed with one another. Further, parts or all of two or more of the front covers 71, 72, 73a, 74a, the left side cover 73 and the right side cover 74 may be integrally formed with one another.

For example, the front portion of the left side cover 73 being located at a position further leftward than the left fork pipe 32 and the front wheel 37, and the rear portion of the left side cover 73 being located at a position further leftward than the engine 20 may be integrally formed with each other, or separately formed from each other. Similarly, the front portion of the right side cover 74 being located at a position further rightward than the right fork pipe 33 and the front wheel 37, and the rear portion of the right side cover 74 being located at a position further rightward than the engine 20 may be integrally formed with each other, or separately formed from each other. Further, the boundaries among the front covers 71, 72, 73a, 74a, the left side cover 73 and the right side cover 74 are not limited to the boundaries among the front covers 71, 72, 73a, 74a, the left side cover 73 and the right side cover 74 in the present embodiment (the boundaries indicated by the one-dot dash lines in Figures 1 and 2).

As shown in Figures 1 and 2, a relatively large space or volume V is formed in a lower portion of the front portion of the motorcycle 100 by the front covers 71, 72, 73a, 74a, the left side cover 73 and the right side cover 74.

As shown in Figures 1 and 2, a head lamp unit 200 including the left head lamp 210L and the right head lamp 210R is provided in the front portion of the motorcycle 100. The left head lamp 210L and the right head lamp 210R emit a larger amount of light than a pair of position lamps 310 and the indicators or flashers 42 of the pair of mirror devices 40.

Further, the indicators or flashers 42 of the pair of mirror devices 40 have a blinking function. In contrast, the left head lamp 210L and the right head lamp 210R continue to be lit after a head lamp lighting switch (not shown) is turned on. In the present embodiment, the lengths of the respective left head lamp 210L and right head lamp 210R are smaller than the length of each position lamp 310 and the length of each indicator or flasher 42 in the width direction W.

The left head lamp 210L and the right head lamp 210R are attached to the motorcycle 100 through an area between the front cover 71 and the front wheel 37. The left head lamp 210L and the right head lamp 210R are arranged in the space V in the lower portion of the motorcycle 100. As shown in Figure 2, the indicators or flashers 42 of the mirror devices 40 are provided to respectively project to positions further rightward and leftward than other portions of the motorcycle 100 to a certain degree. The positional relation among the left head lamp 210L, the right head lamp 210R, the front fork device 30 and the cover 70 will be described below. A radiator 109 is arranged behind or rearwardly of the left head lamp 210L and the right head lamp 210R.

As shown in Figure 1, an air cleaner 112 is supported by the pair of main frames 11 above the engine 20. The air cleaner 112 is connected to a throttle body of the engine 20, and one end of an exhaust pipe 102 is attached to an exhaust port of the engine 20. A muffler 103 is attached to the other end of the exhaust pipe 102.

A fuel tank 113 is supported by the pair of main frames 11 behind the air cleaner 112. A seat 114 is supported by the rear frames 12 behind the fuel tank 113. A rear arm 107 is provided to extend rearward from a lower end of the main frames 11. A rear wheel 108 is rotatably held at the rear end of the rear arm 107.

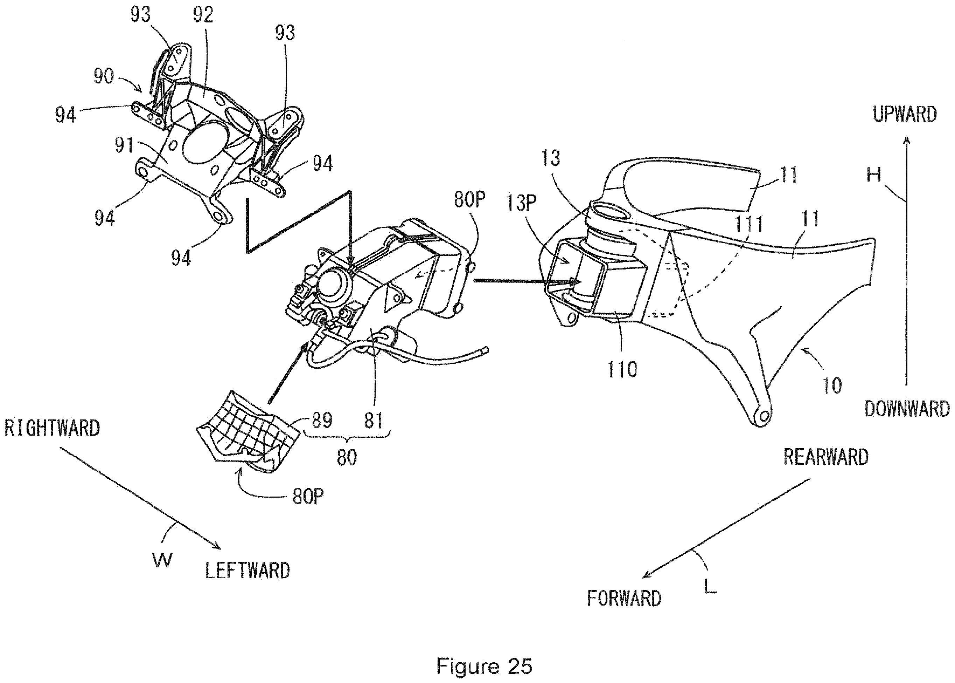

An intake passage 13P, which is used when air is led to the engine 20 (Figure 25, described below), is formed in a center portion in the top-and-bottom direction H of the head pipe 13 to extend in the front-and-rear direction L. An air duct 80 having an intake passage 80P (Figure 25, described below) is attached to a front end portion of the intake passage 13P in the head pipe 13. Further, an intake port of the air cleaner 112 is connected to a rear end portion of the intake passage 13P.

The intake passage 80P of the air duct 80 is fitted into the intake opening 72o of the front cover 72. Thus, air can be introduced into the intake passage 80P of the air duct 80 from the intake opening 72o of the front cover 72. During the travelling of the motorcycle 100, air flowing into the air duct 80 through the intake opening 72o and the intake passage 80P is led to the engine 20 through the intake passage 13P of the head pipe 13 and the air cleaner 112. Thus, a supercharging effect is acquired, and high output power is generated.

### Configuration of Head Lamp Unit

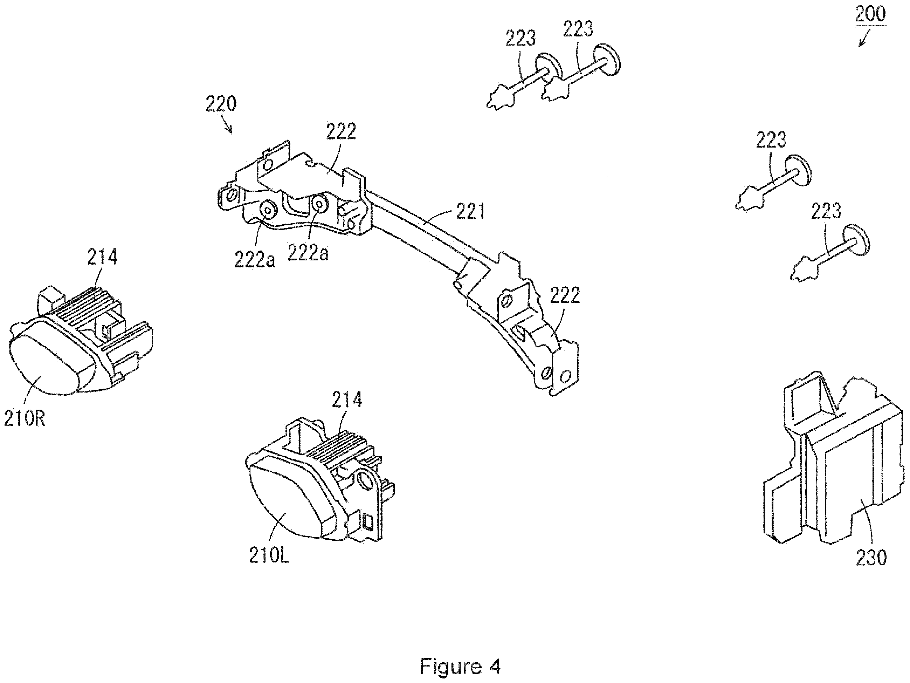

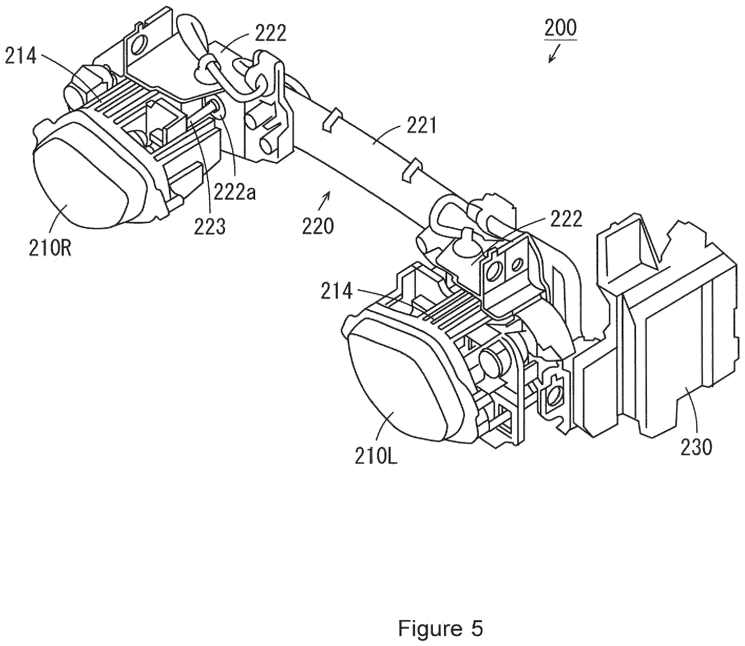

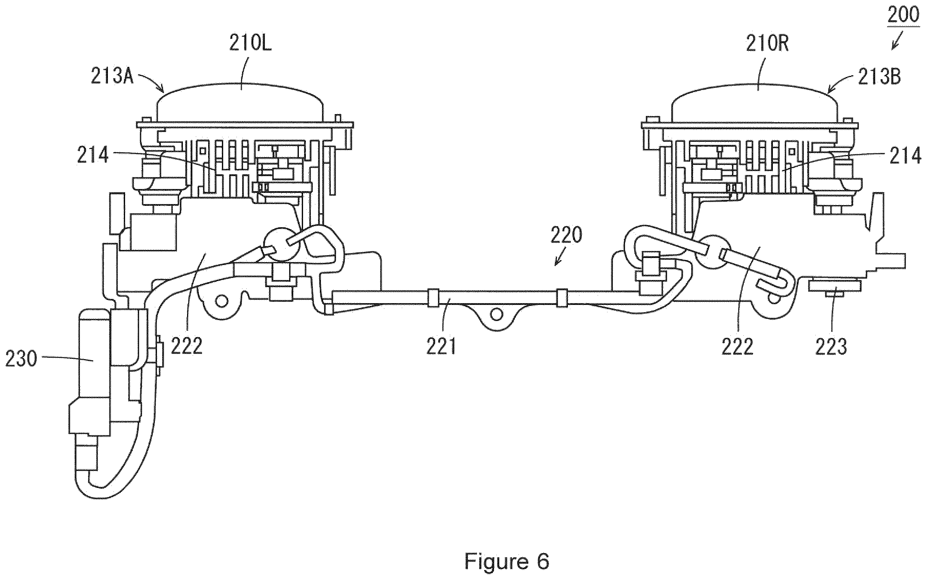

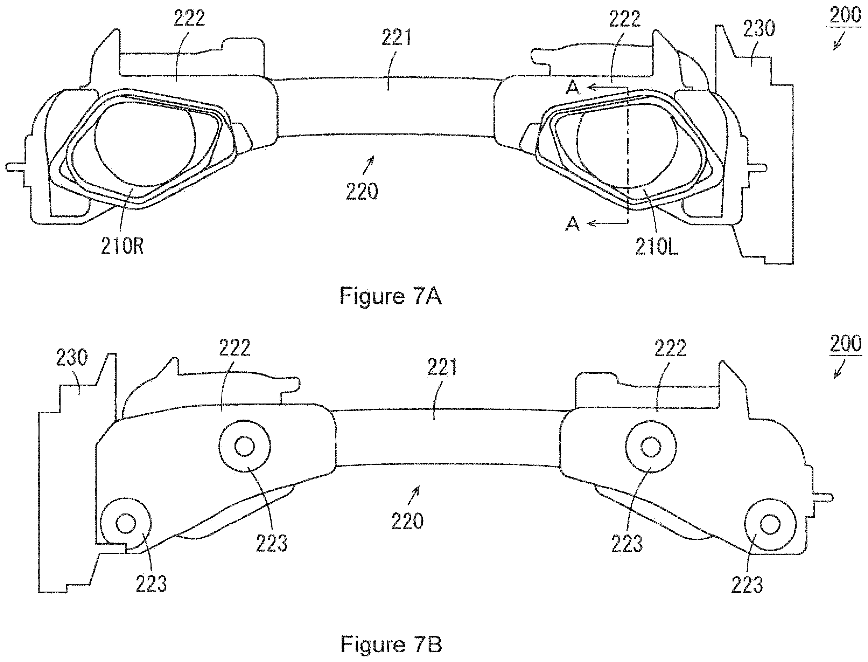

Figure 4 is an exploded perspective view of the head lamp unit 200. Figure 5 is a perspective view of the head lamp unit 200. Figure 6 is a plan view of the head lamp unit 200. Figures 7A and 7B are a front view and a back view of the head lamp unit 200, respectively.

As shown in Figures 4 to 7B, the head lamp unit 200 includes a head lamp holding portion 220 and a head lamp driving portion 230 in addition to the left head lamp 210L and the right head lamp 210R. The head lamp holding portion 220 includes a connection member 221, a pair of holding members 222, and a plurality of (four in the present example) light axis adjustment members 223.

The connection member 221 is formed of metal, for example. In the present example, the connection member 221 is a sheet of metal. The connection member 221 is provided between the pair of holding members 222 to connect the pair of holding members 222 to each other. Thus, the pair of holding members 222 is fixed to the both ends of the connection member 221.

The holding members 222 are formed of resin, for example. The left head lamp 210L and the right head lamp 210R are held by respective holding members 222. A plurality of (two in the present example) light axis adjustment member attachment portions 222a are formed at each holding member 222.

The light axis adjustment members 223 are light axis adjustment screws, for example. The plurality of light axis adjustment members 223 are respectively attached to the plurality of light axis adjustment member attachment portions 222a of the pair of holding members 222. Each light axis adjustment member 223 is rotated in each light axis adjustment member attachment portion 222a, so that light axis (aiming) adjustment for the respective left head lamp 210L and the right head lamp 210R can be performed.

The head lamp driving portion 230 is attached to one holding member 222 of the head lamp holding portion 220 to be located at a position further leftward than the left head lamp 210L and behind the left head lamp 210L. The head lamp driving portion 230 includes a switching element such as a relay. The head lamp driving portion 230 controls to turn on and off the left head lamp 210L and the right head lamp 210R. In this case, it is possible to control turning on and off of the left head lamp 210L and the right head lamp 210R without increasing the size of the left head lamp 210L and the right head lamp 210R in the top-and-bottom direction H. Thus, the size of the front portion of the motorcycle 100 is prevented from being increased in the top-and-bottom direction H.

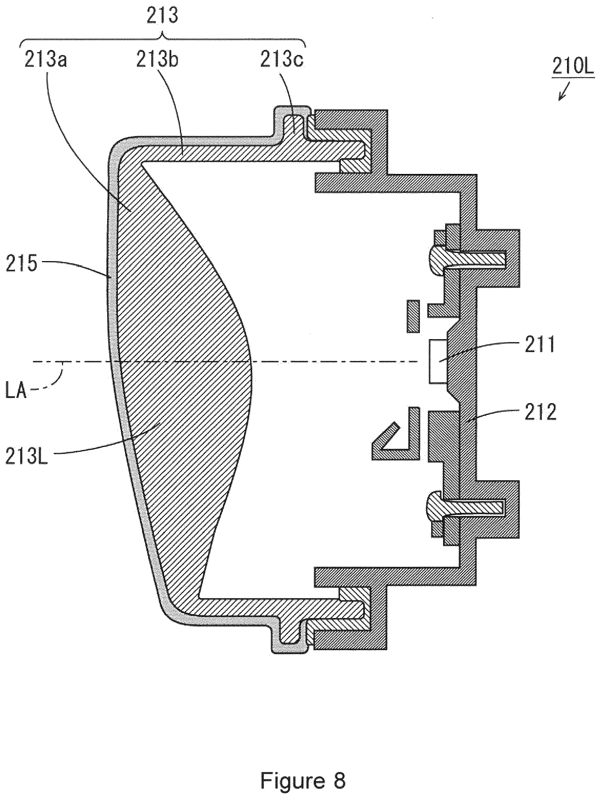

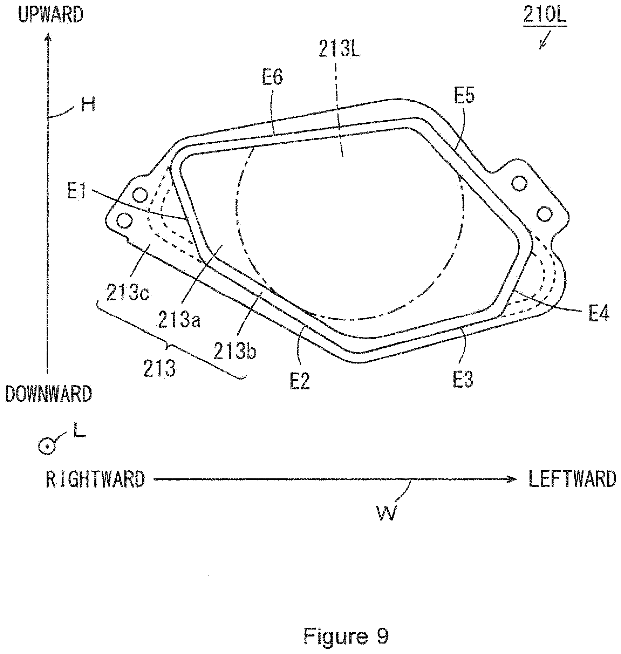

Figure 8 is a cross sectional view taken along the line A-A of the left head lamp 210L of Figure 7A. Figure 9 is a front view showing the detailed shape of the left head lamp 210L. The right head lamp 210R has a laterally symmetric or mirror image configuration with the left head lamp 210L of Figures 8 and 9. As shown in Figure 8, the left head lamp 210L includes a light source 211, a stem 212, a head lamp cover 213, and a radiator fin 214 (Figures 4 to 7B). The light source 211 is a light-emitting diode, for example. The light source 211 is mounted on the stem 212. The head lamp cover 213 is attached to the stem 212 to be located in front of the light source 211.

The head lamp cover 213 is formed of resin. The head lamp cover 213 has a light-transmitting property. As shown in Figure 9, the head lamp cover 213 has a front surface cover portion 213a, a peripheral wall portion 213b and a flange portion 213c. The front surface cover portion 213a is integrally formed at the peripheral wall portion 213b to close a front opening of the peripheral wall portion 213b. The flange portion 213c is integrally formed at the peripheral wall portion 213b to project outward from a rear opening of the peripheral wall portion 213b. A circular lens portion 213L is formed at a center portion of the front surface cover portion 213a. The thickness of the lens portion 213L is gradually reduced from the center portion towards the outer periphery.

In the present example, the head lamp cover 213 is formed of an acrylic resin. Thus, the light-transmitting property of the head lamp cover 213 can be increased. Further, chromatic aberration of the lens portion 213L can be reduced.

The head lamp cover 213 may be formed of a polycarbonate resin, for example. In this case, formation of a hard film 215, described below, at the head lamp cover 213 becomes easier. Further, a thermal resistant property and a chemical resistant property of the head lamp cover 213 are improved. Further, because the thermal resistant property of the head lamp cover 213 is improved, so that the head lamp cover 213 can be arranged closer to the light source 211. Thus, the size of the left head lamp 210L and the right head lamp 210L can be more sufficiently reduced.

The light being generated by the light source 211 is permeated through the lens portion 213L, so that directivity is applied to the light. In this case, because a reduction in light intensity caused by diffusion of light is prevented, conspicuousness of the left head lamp 210L and the right head lamp 210R can be ensured without an increase in emission intensity of the light source 211. Further, it is not necessary to separately provide a lens in front of the light source 211. Thus, the size of the left head lamp 210L and the right head lamp 210R can be reduced in the front-and-rear direction L, and the size of the front portion of the vehicle can be reduced in the front-and-rear direction L.

An outer surface of the head lamp cover 213 is covered by the light-transmitting hard cover or film 215. Further, an outer surface of the hard film 215 is exposed. In this case, it is possible to respectively protect the left head lamp 210L and the right head lamp 210R without respectively providing outer lenses at the head lamp covers 213. Thus, the size of the left head lamp 210L and the right head lamp 210R is prevented from being increased.

As shown in Figure 9, the peripheral wall portion 213b has edge portions E1, E2, E3, E4, E5, E6 that respectively linearly extend. The edge portion E6 extends from an upper position of the lens portion 213L to a position further rightward than the lens portion 213L to be inclined rightward and downward. The edge portion E2 extends from a position below the lens portion 213L to a position further rightward than the lens portion 213L to be inclined upward and rightward. The edge portion E1 obliquely extends rightward and upward from the right end of the edge portion E2 to the right end of the edge portion E6 to connect the edge portion E2 to the edge portion E6, at a position further rightward than the lens portion 213L. The edge portion E5 extends from the left end of the edge portion E6 to a position further leftward than the lens portion 213L to be inclined leftward and downward. The edge portion E3 extends from the left end of the edge portion E2 to a position further leftward than the lens portion 213L to be inclined leftward and upward. The edge portion E4 obliquely extends rightward and upward from the left end of the edge portion E3 to the left end of the edge portion E5 to connect the edge portion E3 to the edge portion E5, at a position further leftward than the lens portion 213L. In the present example, the edge portions E1 to E6 are successively connected to one another while being curved at boundaries. Thus, the peripheral wall portion 213b is formed in a substantially hexagonal shape to surround the lens portion 213L.

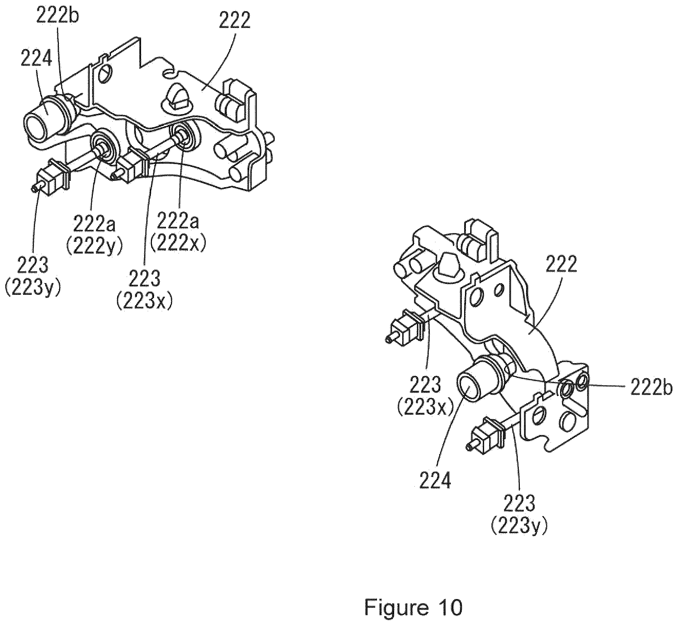

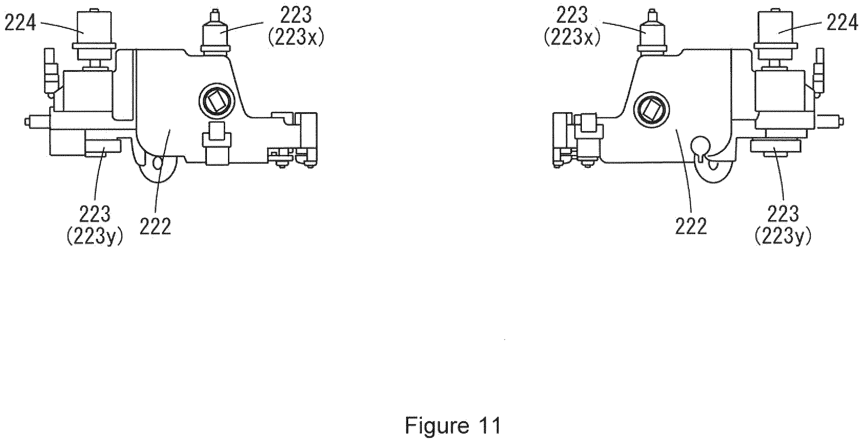

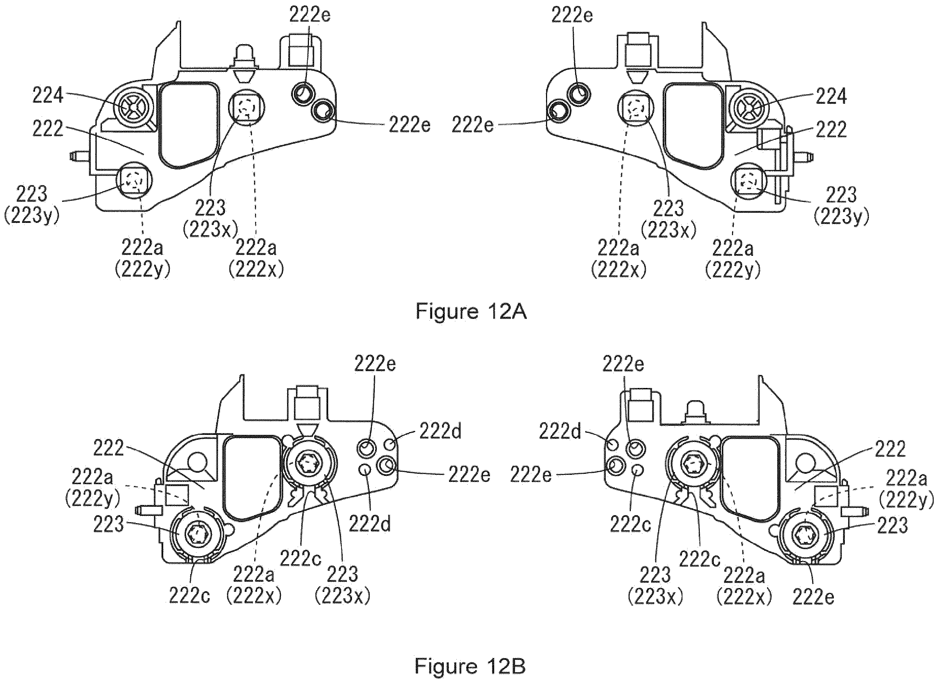

Figure 10 is a perspective view of the pair of holding members 222. Figure 11 is a plan view of the holding members 222. Figures 12A, 12B are a front view and a back view of the holding members 222, respectively.

The left head lamp 210L and the right head lamp 210R of Figures 4 to 7B are respectively fixed to the pair of holding members 222 by a pair of lamp fixing members 224 of Figure 10 to 12B, respectively. As shown in Figures 10 to 12B, a lamp fixing member attachment portion 222b, which is used when each lamp fixing member 224 is attached, is formed at each holding member 222. The lamp fixing members 224 are fixing screws, for example, and the lamp fixing member attachment portions 222b are screw holes, for example.

As shown in Figure 12B, an insertion through hole 222c reaching each light axis adjustment member 223 from below is formed in the back surface of each holding member 222. When a worker inserts a tool such as a screwdriver into the insertion through hole 222c from below, and rotates the tool about an axis in the top-and-bottom direction H (Figure 1), the light axis adjustment member 223 is rotated about an axis in the front-and-rear direction L (Figure 1). Thus, the light axis of the respective left head lamp 210L and right head lamp 210R can be adjusted.

As shown in Figure 12B, two projections 222d projecting rearward are formed in the vicinity of the inner end on the back surface of each holding member 222. The two projections 222d are obliquely arranged. Further, as shown in Figures 12A, 12B, screw holes 222e extending in the front-and-rear direction L (Figure 1) are formed in the vicinity of the inner end of each holding member 222. The two screw holes 222e are obliquely arranged. The two projections 222d and the two screw holes 222e are respectively located at four corners of a rectangle. The two projections 222d are respectively arranged in first diagonal positions of the rectangle, and the two screw holes 222e are respectively arranged in second diagonal positions of the rectangle.

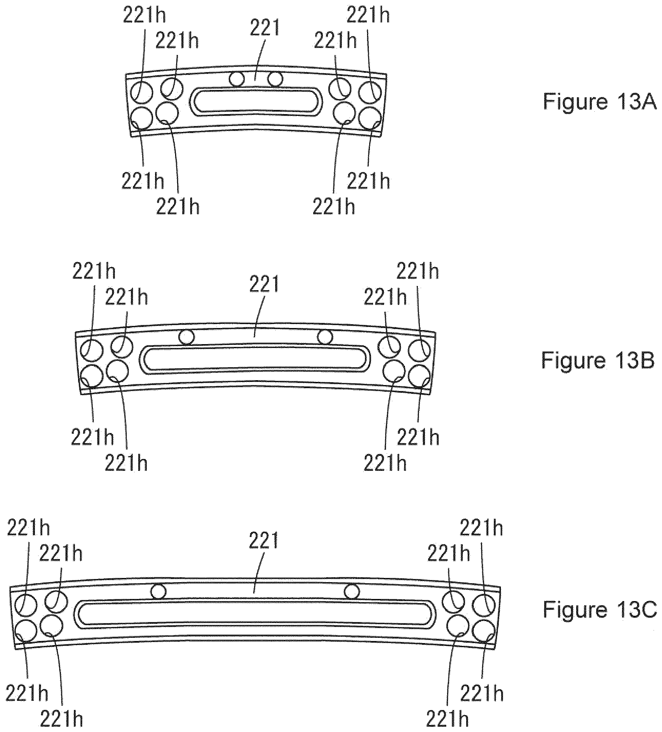

Figures 13A to 13C are back views of the connection member 221. A connection member 221 of Figure 13B is larger in the width direction W (Figure 2) than a connection member 221 of Figure 13A, and a connection member 221 of Figure 13C is larger in the width direction W than the connection member 221 of Figure 13B. The configurations of the respective connection members 221 of Figures 13A to 13C are equal to one another except that the lengths in the width direction W are different from one another.

As shown in Figures 13A to 13C, four through holes 221h respectively corresponding to the two projections 222d and the two screw holes 222e of the one holding member 222 of Figure 12B are formed in the vicinity of one end of the connection member 221. Four through holes 221h respectively corresponding to the two projections 222d and the two screw holes 222e of the other holding member 222 of Figure 12B are formed in the vicinity of the other end of the connection member 221.

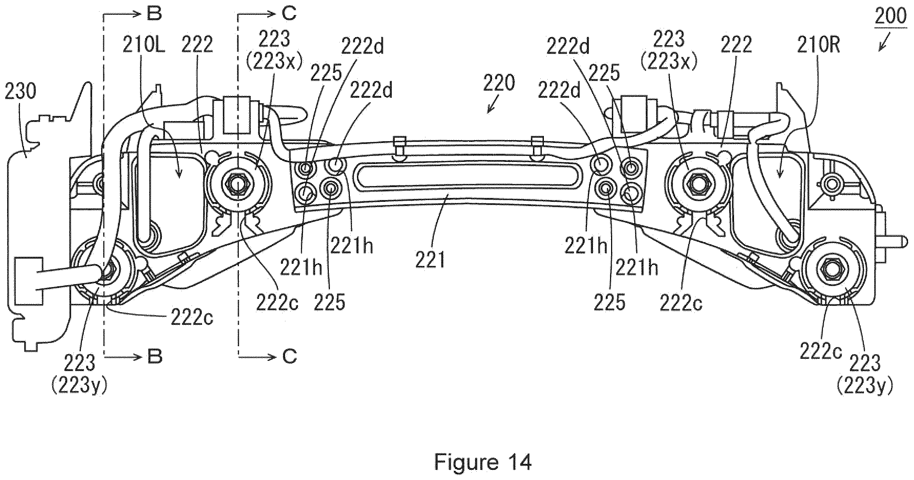

Figure 14 is a back view of the head lamp unit 200. As shown in Figure 14, the two projections 222d of the one holding member 222 are respectively fitted into the two through holes 221h in the vicinity of the one end of the connection member 221. Thus, a positional relation between the connection member 221 and the one holding member 222 is temporarily determined. In this state, two screw members 225 are respectively fitted into the two screw holes 222e of the one holding member 222 (Figures 12A and 12B) through the respective other two through holes 221 h in the vicinity of the one end of the connection member 221 (Figures 13A to 13C). In this manner, the connection member 221 and the one holding member 222 are fixed to each other.

Similarly, two projections 222d of the other holding member 222 are respectively fitted into two through holes 221 h in the vicinity of the other end of the connection member 221. Thus, a positional relation between the connection member 221 and the other holding member 222 is temporarily determined. In this state, two screw members 225 are respectively fitted into two screw holes 222e of the other holding member 222 (Figure 12A and 12B) through the respective other two through holes 221 h in the vicinity of the other end of the connection member 221 (Figures 13A to 13C). In this manner, the connection member 221 and the other holding member 222 are fixed to each other.

This configuration causes the pair of holding members 222 to be fixed to each other using the connection member 221, which has an appropriate length, of the connection members 221 of Figures 13A to 13C, for example. Therefore, the distance between the left head lamp 210L and the right head lamp 210R can be arbitrarily adjusted according to the shape and the measurement of the motorcycle 100. Figure 14 is an example in which the pair of holding member 222 is fixed to each other using the connection member 221 of Figure 13B.

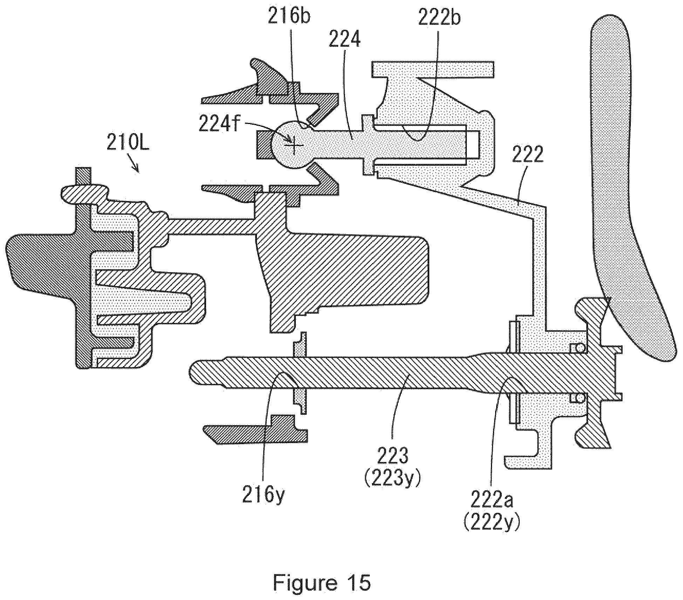

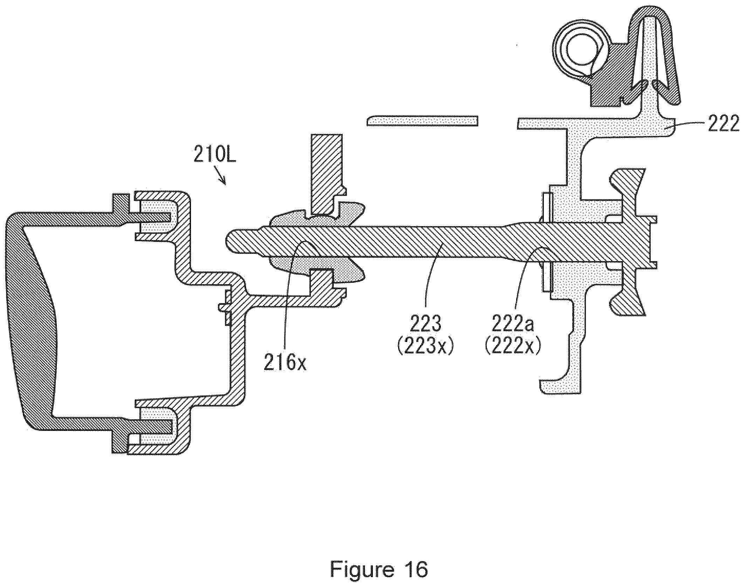

Figure 15 is a cross sectional view taken along the line B-B of the head lamp unit 200 of Figure 14. Figure 16 is a cross sectional view taken along the line C-C of the head lamp unit 200 of Figure 14. The configuration of the left head lamp 210L will be described with reference to Figures 15 and 16. The right head lamp 210R has the similar configuration to the left head lamp 210L except for being laterally symmetrical or mirror image with the left head lamp 210L.

As described above, the two light axis adjustment member attachment portions 222a and the lamp fixing member attachment portion 222b are formed at the holding member 222 in the present example. The two light axis adjustment member attachment portions 222a will be respectively referred to as light axis adjustment member attachment portions 222x, 222y below. Further, a light axis adjustment member 223 being attached to the light axis adjustment member attachment portion 222x is referred to as a light axis adjustment member 223x, and a light axis adjustment member 223 being attached to the light axis adjustment member attachment portion 222y is referred to as a light axis adjustment member 223y.

As shown in Figure 15, the light axis adjustment member attachment portion 222y and the lamp fixing member attachment portion 222b are arranged to overlap with each other in the top-and-bottom direction H (Figure 1). On the other hand, the light axis adjustment member attachment portion 222x of Figure 16 and the lamp fixing member attachment portion 222b of Figure 15 are arranged to overlap with each other in the with direction W (Figure 2). In the present example, the light axis adjustment member attachment portion 222y is arranged below the lamp fixing member attachment portion 222b, and the light axis adjustment member attachment portion 222x is arranged at a position further inward than the lamp fixing member attachment portion 222b.

As shown in Figures 15 and 16, two fitting portions 216x, 216y respectively corresponding to the light axis adjustment member attachment portions 222x, 222y of the holding member 222 are formed at the left head lamp 210L. The fitting portions 216x, 216y are screw holes, for example. Further, as shown in Figure 15, an opening 216b corresponding to the lamp fixing member attachment portion 222b of the holding member 222 is formed at the left head lamp 210L.

The lamp fixing member 224 is fitted into the lamp fixing member attachment portion 222b of the holding member 222 through the opening 216b of the left head lamp 210L. Thus, the left head lamp 210L is held by the holding member 222. A supporting point 224f is formed at the rear end (a screw head) of the holding member 222.

The light axis adjustment member 223y is fitted into the fitting portion 216y of the left head lamp 210L while being attached to the light axis adjustment member attachment portion 222y of the holding member 222. Here, when the worker rotates the light axis adjustment member 223y in one direction, the fitting portion 216y becomes closer to the light axis adjustment member attachment portion 222y. Thus, the left head lamp 210L tilts forward and downward by being centered at the supporting point 224f of the lamp fixing member 224.

On the other hand, when the worker rotates the light axis adjustment member 223y in the other direction, the fitting portion 216y is moved away from the light axis adjustment member attachment portion 222y. Thus, the left head lamp 210L tilts forward and upward by being centered at the supporting point 224f of the lamp fixing member 224. In this manner, the light axis of the left head lamp 210L can be adjusted in the top-and-bottom direction H (Figure 1) by the rotation of the light axis adjustment member 223y.

Similarly, as shown in Figure 16, the light axis adjustment member 223x is fitted into the fitting portion 216x of the left head lamp 210L while being attached to the light axis adjustment member attachment portion 222x of the holding member 222. Here, when the worker rotates the light axis adjustment member 223x in one direction, the fitting portion 216x becomes closer to the light axis adjustment member attachment portion 222x. Thus, the left head lamp 210L tilts rightward and forward by being centered at the supporting point 224f of the lamp fixing member 224.

On the other hand, when the worker rotates the light axis adjustment member 223x in the other direction, the fitting portion 216x is moved away from the light axis adjustment member attachment portion 222x. Thus, the left head lamp 210L tilts leftward and forward by being centered at the supporting point 224f of the lamp fixing member 224. In this manner, the light axis of the left head lamp 210L can be adjusted in the width direction W (Figure 2) by the rotation of the light axis adjustment member 223x.

Here, the left head lamp 210L and the right head lamp 210R according to the present embodiment are compared to conventional head lamps. Each conventional head lamp includes a light source, a reflector, a lens and an outer cover. Areas in front of the light source, the reflector and the lens are covered by the outer cover. The light from the light source is reflected forward by the reflector. The light reflected by the reflector passes through the lens, so that directivity is applied to the light.

In the configuration of each conventional head lamp, a light axis of the head lamp is formed by a light axis of the reflector and a light axis of the lens. The adjustment of the light axis of the head lamp is performed by adjustment of a direction of the reflector. In this adjustment, however, because a positional relation among the reflector, the light source and the lens slightly changes, light distribution of the head lamp may change.

In contrast, in the present embodiment, a light axis LA of each of the left head lamp 210L and the right head lamp 210R is formed by a light axis of the light source 211 and a light axis of the lens 213L as shown in Figure 8. A direction of the light axis LA of each of the left head lamp 210L and the right head lamp 210R is adjusted while a positional relation between the light source 211 and the lens portion 213L is maintained. Thus, even when the adjustment of the light axis LA is performed, the light distribution of the left head lamp 210L and the right head lamp 210R can be maintained.

Further, in the present embodiment, outer covers are not provided at the left head lamp 210L and the right head lamp 210R. Therefore, the size of the left head lamp 210L and the right head lamp 210R is reduced. Thus, it is possible to satisfy adjustment ranges, defined by regulations, of the light axis LA without increasing movement ranges of the respective left head lamp 210L and right head lamp 210R.

### Arrangement of Head Lamp Unit

Head lamps are respectively arranged at relatively high positions in conventional motorcycles. Thus, mud, water or the like splashed by the front wheel is prevented from adhering to the head lamps. Therefore, arrangement of the head lamps at relatively low positions was not considered for the conventional motorcycles.

In contrast, in the motorcycle 100 according to the present embodiment, the size of the left head lamp 210L and the right head lamp 210R is reduced, and the left head lamp 210L and the right head lamp 210R are respectively arranged at positions at which the conspicuousness of the small-sized left head lamp 210L and right head lamp 210R is maintained. Outer lenses are not provided at the left head lamp 210L and the right head lamp 210R as the configuration that is used when the size of the left head lamp 210L and the right head lamp 210R is reduced. Further, the left head lamp 210L and the right head lamp 210R are respectively arranged at relatively low positions, at which the conspicuousness of the left head lamp 210L and the right head lamp 210R of the motorcycle 100 is maintained. In this manner, in the motorcycle 100 according to the present embodiment, the configuration and arrangement of the head lamp unit 200 are largely changed from the conventional way of thinking regarding the head lamps.

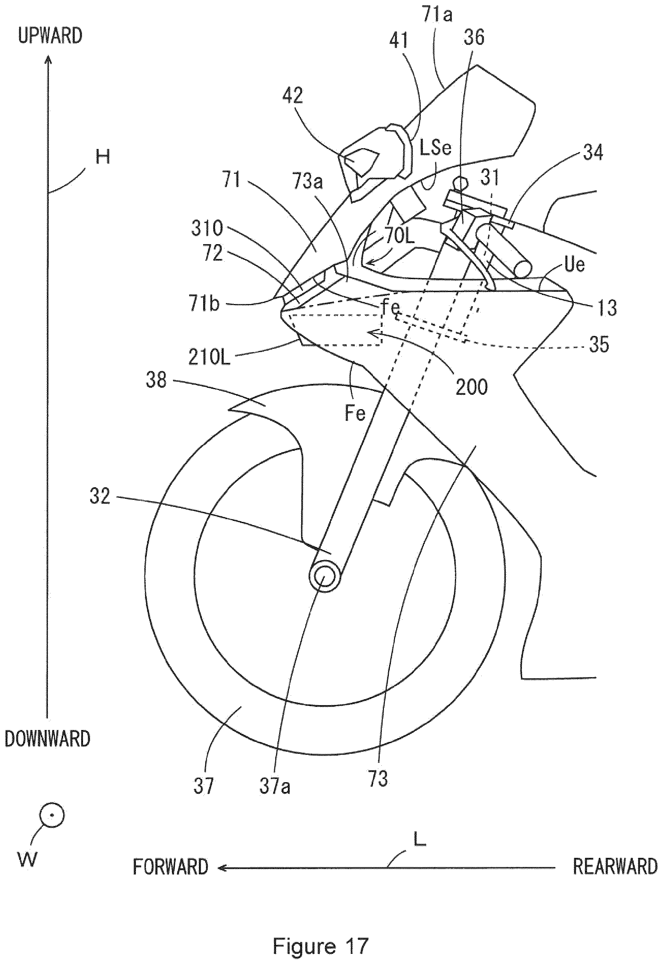

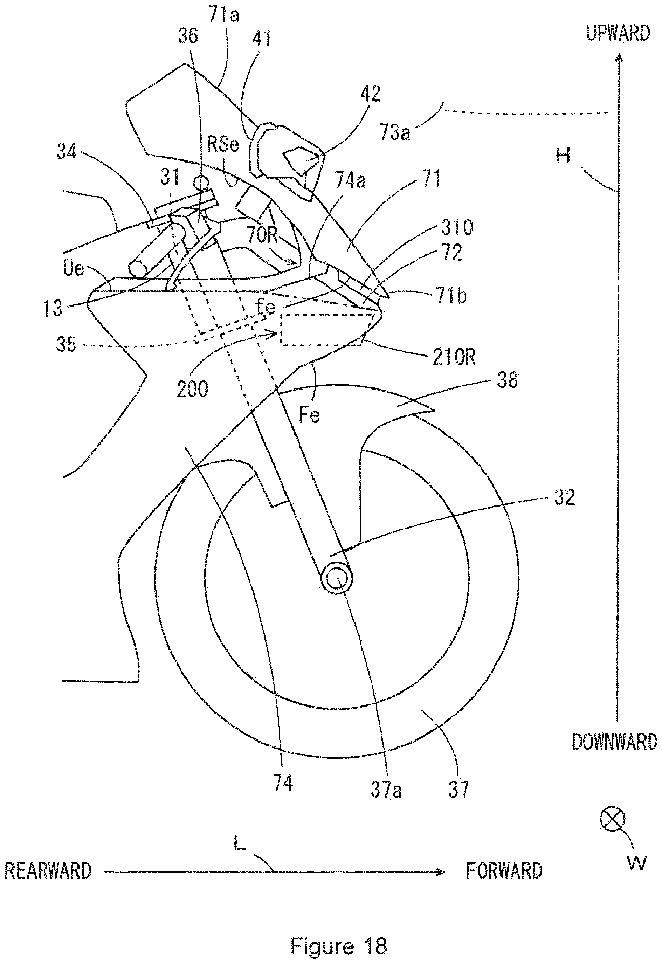

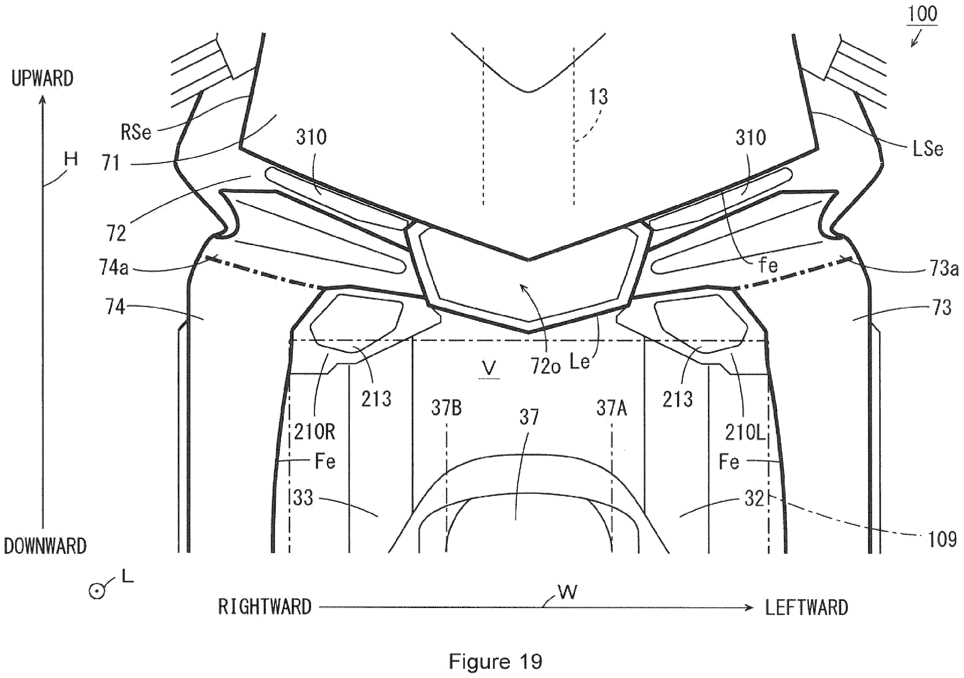

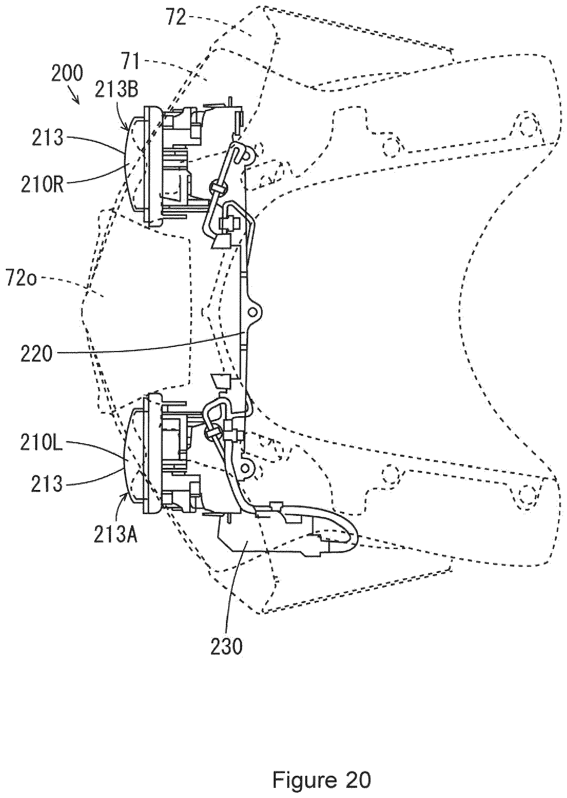

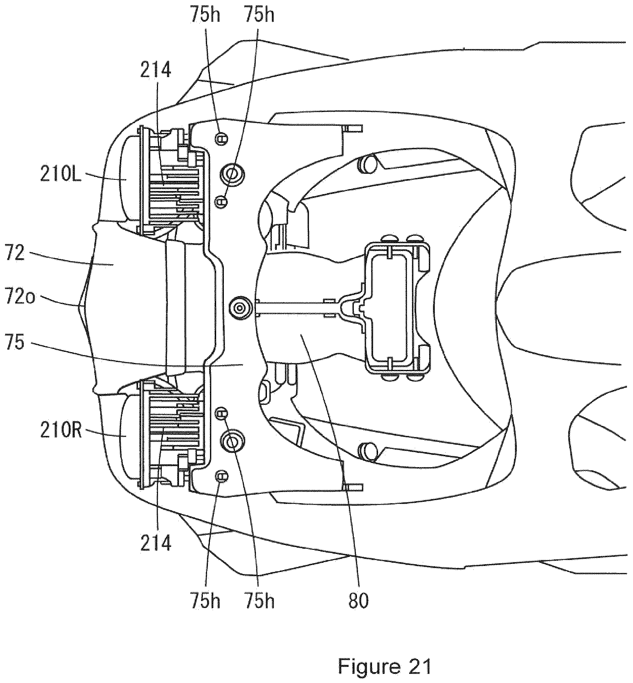

A specific arrangement of the head lamp unit 200 will be described below. Figure 17 is an enlarged side view of the left side of the front portion of the motorcycle 100. Figure 18 is an enlarged right side view of the front portion of the motorcycle 100. Figure 19 is an enlarged front view of the motorcycle 100. Figure 20 is a plan view of the front portion of the motorcycle 100. Figure 21 is a bottom view of the front portion of the motorcycle 100. In Figure 19, outer shapes of the front covers 71, 72, 73a, 74a, the left side cover 73 and the right side cover 74 are indicated by the thick solid lines. In Figure 20, members except for the head lamp unit 200 such as the front covers 71, 72 are indicated by the dotted lines.

As shown in Figure 19, a lower edge fe of the front cover 71 obliquely extends upward and leftward from the center (the front end), and obliquely extends upward and rightward from the center (the front end) in the vehicle front view. Further, as shown in Figures 17 and 18, the lower edge fe of the front cover 71 obliquely extends upward and rearward from the front end in the vehicle side view. As shown in Figure 17, a left side edge LSe of the front cover 71 obliquely extends to be curved rearward and upward from the rear end of the lower edge fe. As shown in Figure 18, a right side edge RSe of the front cover 71 obliquely extends to be curved rearward and upward from the rear end of the lower edge fe.

As shown in Figure 19, the lower edge of the front cover 72 extends in the substantially width direction W. A lower edge Le of the center portion of the front cover 72 (the intake opening 72o) is located at a position further downward than lower edges of a left portion and a right portion of the center portion. The lower edge Le of the center portion of the front cover 72 obliquely extends upward and leftward from the center, and obliquely extends upward and rightward from the center.

As shown in Figure 19, in the vehicle front view, a front edge Fe of the left side cover 73 extends in the top-and-bottom direction. The upper end of the front edge Fe of the left side cover 73 is curved inward, and extends substantially horizontally. A front edge Fe of the right side cover 74 extends in the top-and-bottom direction. The upper end of the front edge Fe of the right side cover 74 is curved inward, and extends substantially horizontally. The intake opening 72o of the front cover 72 is located between a horizontal portion of the front edge Fe of the left side cover 73 and a horizontal portion of the front edge Fe of the right side cover 74. The lower ends of the left portion and the right portion of the front cover 72 are respectively connected to the upper ends of the left side cover 73 and the right side cover 74 at rear portions of the left side cover 73 and the right side cover 74, respectively.

As shown in Figure 17, in the vehicle side view, the front edge Fe of the left side cover 73 extends rearward to be inclined downward. An upper edge Ue of the front portion of the left side cover 73 extends from a position further forward than the left fork pipe 32 towards a position further rearward than the left fork pipe 32. The upper edge Ue of the front portion of the left side cover 73 substantially horizontally extends.

As shown in Figure 18, in the vehicle side view, the front edge Fe of the right side cover 74 extends rearward to be inclined downward. The upper edge Ue of the front portion of the right side cover 74 extends from a position further forward than the right fork pipe 33 towards a position further rearward than the right fork pipe 33. The upper edge Ue of the front portion of the right side cover 74 substantially horizontally extends rearward from the front end.

As shown in Figures 17 to 19, the relatively large space V is formed in the lower portion of the front portion of the motorcycle 100 by the front covers 71, 72, 73a, 74a, the left side cover 73 and the right side cover 74. The space V extends in the front-and-rear direction L and the width direction W, and is likely to become dark as compared to the brightness of the surrounding space.

The length from the lower ends of the respective left side cover 73 and right side cover 74 to the lowest end of the lower edge Le of the front cover 72 in the top-and-bottom direction H is a length "A" in the top-and-bottom direction H of the steering opening 70o (see Figure 2). The length between the front edges Fe of the respective left side cover 73 and right side cover 74 in the width direction W is a length "B" in the width direction W of the steering opening 70o (see Figure 2). In this case, the length "A" in the top-and-bottom direction H of the steering opening 70o is larger than the length "B" in the width direction W.

In the vehicle front view, the left head lamp 210L and the right head lamp 210R are arranged in the steering opening 70o. Therefore, in the vehicle front view, all of the head lamp covers 213 of the left head lamp 210L and the right head lamp 210R are arranged in the steering opening 70o. Specifically, in the vehicle front view, all of the head lamp cover 213 of the left head lamp 210L is arranged at a position further rightward than the front edge Fe of the left side cover 73, and all of the head lamp cover 213 of the right head lamp 210R is arranged at a position further leftward than the front edge Fe of the right side cover 74.

As shown in Figure 17, the left head lamp 210L is arranged at a position further leftward than the head pipe 13 (see Figure 19) and further forward than the left fork pipe 32. The left head lamp 210L is located at a position further rearward than the front end of the front wheel 37 and further forward than the rear end of the front wheel 37. Further, the left head lamp 210L is located at a position further upward than an axle 37a of the front wheel 37.

At least part of the left head lamp 210L including the light source 211 and the head lamp cover 213 is located at a position further rearward than the axle 37a of the front wheel 37. Further, at least part of the left head lamp 210L including the light source 211 and the head lamp cover 213 is located at a position further inward than the left side cover 73. In the vehicle side view, the length of a portion, which is located at a position further forward than the axle 37a of the front wheel 37, of the left head lamp 210L is smaller than the length of a portion, which is located at a position further rearward than the axle 37a of the front wheel 37, of the left head lamp 210L. Thus, the size of the front portion of the vehicle can be reduced in the front-and-rear direction L.

At least part of the left head lamp 210L including the light source 211 and the head lamp cover 213 overlaps with the left side cover 73 in a vehicle left side view. As described above, the front edge Fe of the left side cover 73 is inclined downward and rearward in the vehicle side view. Further, a front surface of the left head lamp 210L is inclined downward and rearward in the vehicle side view. In this case, the left head lamp 210L is inhibited from projecting forward. Thus, the size of the front portion of the vehicle can be more sufficiently reduced in the front-and-rear direction L. The light from the left head lamp 210L is mainly emitted forward. In the present embodiment, an opening and a cutout for the left head lamp 210L are not formed at the left side cover 73.

Further, an upper portion of the left side cover 73 is formed to be larger than a lower portion of the left side cover 73. Thus, even when a source of the external light such as the sun is present at an obliquely upward position, the size of the lower portion of the left side cover 73 can be reduced while the external light is prevented from entering the space V. Further, the front surface of the left head lamp 210L is inclined downward and rearward in the vehicle side view. Thus, even when a front edge of the left side cover 73 is inclined downward and rearward, part of the left head lamp 210L can be arranged in the space V. Part of the left head lamp 210L can be arranged in the space V. As a result, conspicuousness of the left head lamp 210L can be ensured.

As shown in Figure 18, the right head lamp 210R is arranged at a position further rightward than the head pipe 13 (see Figure 19) and further forward than the right fork pipe 33. The right head lamp 210R is located at a position further rearward than the front end of the front wheel 37 and further forward than the rear end of the front wheel 37. Further, the right head lamp 210R is located at a position further upward than the axle 37a of the front wheel 37.

At least part of the right head lamp 210R including the light source 211 and the head lamp cover 213 is located at a position further rearward than the axle 37a of the front wheel 37. Further, at least part of the right head lamp 210R including the light source 211 and the head lamp cover 213 is located at a position further inward than the right side cover 74. In the vehicle side view, the length of a portion, which is located at a position further forward than the axle 37a of the front wheel 37, of the right head lamp 210R is smaller than the length of a portion, which is located at a position further rearward than the axle 37a of the front wheel 37, of the right head lamp 210R. Thus, the size of the front portion of the vehicle can be reduced in the front-and-rear direction L.

At least part of the right head lamp 210R including the light source 211 and the head lamp cover 213 overlaps with the right side cover 74 in a vehicle right side view. As described above, the front edge Fe of the right side cover 74 is inclined downward and rearward in the vehicle side view. Further, a front surface of the right head lamp 210R is inclined downward and rearward in the vehicle side view. In this case, the right head lamp 210R is inhibited from projecting forward. Thus, the size of the front portion of the vehicle can be more sufficiently reduced in the front-and-rear direction L. The light from the right head lamp 210R is mainly emitted forward. In the present embodiment, an opening and a cutout for the right head lamp 210R are not formed at the right side cover 74.

Further, an upper portion of the right side cover 74 is formed to be larger than a lower portion of the right side cover 74. Thus, even when a source of the external light such as the sun is present at an obliquely upward position, the size of the lower portion of the right side cover 74 can be reduced while the external light is prevented from entering the space V. Further, the front surface of the right head lamp 210R is inclined downward and rearward in the vehicle side view. Thus, even when the front edge of the right side cover 74 is inclined downward and rearward, part of the right head lamp 210R can be arranged in the space V. Part of the right head lamp 210R can be arranged in the space V. As a result, conspicuousness of the right head lamp 210R can be ensured.

As shown in Figures 20 and 21, at least part of the left head lamp 210L including the light source 211 and the head lamp cover 213 overlaps with the front covers 71, 72 in a vehicle plan view and a vehicle bottom view. Further, at least part of the right head lamp 210R including the light source 211 and the head lamp cover 213 overlaps with the front covers 71, 72 in the vehicle plan view and the vehicle bottom view. Further, front surfaces of the head lamp covers 213 of the left head lamp 210L and the right head lamp 210R are respectively arranged at positions further rearward than the front ends of the front covers 71, 72.

The above-mentioned arrangement causes the size of the front portion of the motorcycle 100 to be reduced. Further, the light sources 211 of the respective left head lamp 210L and right head lamp 210R are arranged inside of the dark space V that is formed by the front covers 71, 72, 73a, 74a, the left side cover 73 and the right side cover 74. Thus, the conspicuousness of the left head lamp 210L and the right head lamp 210R is ensured.

The left head lamp 210L and the right head lamp 210R overlap with the front fender 38 in the top-and-bottom direction H. Because the front fender 38 is curved downward towards positions further leftward and rightward than the front wheel 37 from above the front wheel 37, the left head lamp 210L and the right head lamp 210R can be arranged above the front fender 38 without interfering with the front fender 38.

As shown in Figures 6, 20 and 24, a portion 213A, which is located further leftward than a center portion, on the front surface of the head lamp cover 213 of the left head lamp 210L (hereinafter referred to as a left portion), is inclined to obliquely extend leftward and rearward in the vehicle plan view. Similarly, a portion 213B, which is located further rightward than a center portion on the front surface of the head lamp cover 213 of the right head lamp 210R (hereinafter referred to as a right portion), is inclined to obliquely extend rightward and rearward in the vehicle plan view. That is, the front surfaces of the head lamp covers 213 of the respective left head lamp 210L and right head lamp 210R are curved to expand forward without a loss of function of the lens portions 213L.

In this case, the left portion 213A of the left head lamp 210L and the right portion 213B of the right head lamp 210R are prevented from projecting forward. Thus, the size of the left head lamp 210L and the right head lamp 210R can be reduced, and the size of the front portion of the vehicle can be reduced. Further, because the left portion 213A of the left head lamp 210L and the right portion 213B of the right head lamp 210R obliquely extend rearward, the front surfaces of the left head lamp 210L and the right head lamp 210R are arranged in a darker region located at an innermost position of the space V. Therefore, the difference or contrast between the brightness of the left head lamp 210L and right head lamp 210R and the darkness of the dark region of the space V is increased. As a result, the conspicuousness of the left head lamp 210L and the right head lamp 210R is ensured.

As shown in Figures 17 and 18, a front end 71 b of the front cover 71 is located at a position further forward than the axle 37a of the front wheel 37. Here, in the vehicle side view, because the outer shape of the front wheel 37 is circular, the outer shape of an upper portion of the front wheel 37 is curved downward towards a position further rearward than the axle 37a. Therefore, the size of the space V, which is located at a position further rearward than the axle 37a and above the front wheel 37, is larger than the space V above the axle 37a. Therefore, the external light is likely to enter the space V, which is located at a position further rearward than the axle 37a and above the front wheel 37, that is, a region located at the innermost position in the space V.

The above-mentioned arrangement of the front cover 71 causes the front end 71b of the front cover 71 to be located at a position sufficiently further forward than at least part of the respective left head lamp 210L and right head lamp 210R. Therefore, the external light is prevented from entering the region located at the innermost position of the space V by shielding of the external light by the front end 71 b of the front cover 71. Thus, the difference or contrast between the brightness of the left head lamp 210L and right head lamp 210R and the darkness of the region located at the innermost position of the space V is generated. As a result, the conspicuousness of the left head lamp 210L and the right head lamp 210R can be ensured.

A left cutout portion 70L is formed between the left side edge LSe of the front cover 71 and the upper edge Ue of the left side cover 73 as shown in Figure 17, and a right cutout portion 70R is formed between the right side edge RSe of the front cover 71 and the upper edge Ue of the right side cover 74 as shown in Figure 18. Thus, even when the handle member 36 is operated to the left and right in order to turn the front fork device 30 of Figure 3A, the handle member 36 is prevented from coming into contact with the front cover 71, the left side cover 73 and the right side cover 74.

The external light can enter the left cutout portion 70L and the right cutout portion 70R. Even in such a case, the upper ends of the respective left head lamp 210L and right head lamp 210R are located at positions further downward than the respective left cutout portion 70L and right cutout portion 70R. Therefore, the external light entering the left cutout portion 70L and the right cutout portion 70R is inhibited from affecting the left head lamp 210L and the right head lamp 210R. Thus, the conspicuousness of the left head lamp 210L and the right head lamp 210R can be ensured.

The external light is inhibited from entering a region, which is in the vicinity of the lower edges of the front covers 72, 73a, 74a, of the space V from above the motorcycle 100 by the front covers 72, 73a, 74a. The external light is inhibited from entering a region, which is in the vicinity of the front edge Fe of the left side cover 73, of the space V from a position further outward than the motorcycle 100 by the left side cover 73. The external light is inhibited from entering a region, which is in the vicinity of the front edge Fe of the right side cover 74, of the space V from a position further outward than the motorcycle 100 by the right side cover 74. Therefore, it is more difficult for the external light to enter a region being in the vicinity of the lower edge of the front cover 73a and in the vicinity of the front edge Fe of the left side cover 73, and a region being in the vicinity of the lower edge of the front cover 74a and in the vicinity of the front edge Fe of the right side cover 74, of the space V. Therefore, those regions are more likely to become dark in the space V.

Therefore, it is more likely to become dark in regions, of a corner portion being formed by the lower edge of the front cover 73a and the upper end of the front edge Fe of the left side cover 73 and a corner portion being formed by the lower edge of the front cover 74a and the upper end of the front edge Fe of the right side cover 74, than other regions.

The left head lamp 210L is located at the corner portion formed by the front cover 73a and the left side cover 73. Therefore, the left head lamp 210L and the right head lamp 210R are respectively arranged in the regions that are more likely to become dark. Thus, the conspicuousness of the left head lamp 210L and the right head lamp 210R can be improved.

In the left head lamp 210L and the right head lamp 210R, a region being surrounded by the edge portions E1, E2, E6 of Figure 9 is referred to as an inner portion, and a region being surrounded by the edge portions E3 to E5 of Figure 9 is referred to as an outer portion. The above-mentioned arrangement causes the vicinities of the edge portions E4, E5 of the outer portions and the vicinities of the edge portion E6 of the inner portions of the respective left head lamp 210L and right head lamp 210R to be arranged in the regions of the corner portions that are likely to become dark. Thus, the difference or contrast between brightness of the vicinities of the edge portions E4 to E6 of the respective left head lamp 210L and right head lamp 210R and the darkness of the dark space V is increased.

On the other hand, the vicinities of the edge portions E1, E2 of the respective left head lamp 210L and right head lamp 210R are respectively arranged at positions respectively spaced apart from the corner portions. Even in such a case, the edge portions E1, E2 of the respective left head lamp 210L and right head lamp 210R extend upward and inward. Therefore, the difference or contrast between brightness of the edge portions E1, E2 of the respective left head lamp 210L and right head lamp 210R and the darkness of the space V is inhibited from being reduced. As a result, the conspicuousness of the entire left head lamp 210L and the right head lamp 210R can be ensured.

Further, because the edge portions E1, E2 of the respective left head lamp 210L and right head lamp 210R extend upward and inward, the measurement of the inner portions of the respective left head lamp 210L and right head lamp 210R can be reduced in the top-and-bottom direction H. Thus, the size of the entire left head lamp 210L and the right head lamp 210R can be reduced. Further, even when the size of the left head lamp 210L and the right head lamp 210R is reduced, it is possible to ensure the conspicuousness by utilizing the large difference or contrast between the brightness of the left head lamp 210L and right head lamp 210R and the darkness of the dark space V.

Further, the above-mentioned arrangement causes the left head lamp 210L and the right head lamp 210R to be respectively arranged at positions respectively spaced apart from the pair of position lamps 310. Further, the left head lamp 210L and the right head lamp 210R are respectively shielded from the pair of position lamps 310 by the front covers 72, 73a, 74a. Thus, it is possible to ensure the conspicuousness of the left head lamp 210L and the right head lamp 210R without being affected by the light from the pair of position lamps 310.

Similarly, the left head lamp 210L and the right head lamp 210R are respectively arranged at positions respectively spaced apart from the indicators or flashers 42 of the pair of mirror devices 40. Further, the left head lamp 210L and the right head lamp 210R are respectively shielded from the pair of indicators or flashers 42 by the front covers 71, 72, 73a, 74a. Thus, it is possible to ensure the conspicuousness of the left head lamp 210L and the right head lamp 210R without being affected by the light from the pair of indicators or flashers 42.

Further, in the vehicle plan view, at least part of the radiator 109 is arranged at a position that is further downward than the lower edge Le of the front cover 72 and overlaps with a region further upward than the upper end of the front wheel 37. In Figure 19, the radiator 109 is indicated by the one-dot dash lines. In the vehicle front view, at least part of the radiator 109 is arranged at a position that is further rightward than the front edge Fe of the left side cover 73 and overlaps with a region further leftward than the front edge Fe of the right side cover 74. Further, as shown in Figure 21, the radiator fin 214 of the left head lamp 210L is exposed below the left head lamp 210L, and the radiator fin 214 of the right head lamp 210R is exposed below the right head lamp 210R. This configuration causes the radiator fins 214 of the respective left head lamp 210L and right head lamp 210R to be arranged on the passage through which an air stream is led to the radiator 109.

In this case, it is possible to improve heat dissipation property of the left head lamp 210L and the right head lamp 210R without increasing the size of the left head lamp 210L and the right head lamp 210R in the top-and-bottom direction H. Further, it is not necessary to provide a member, which is used when heat is dissipated from the left head lamp 210L, in the front portion of the left head lamp 210L. Similarly, it is not necessary to provide a member, which is used when heat is dissipated from the right head lamp 210R, in the front portion of the right head lamp 210R. Thus, the size of the front portion of the motorcycle 100 can be reduced in the front-and-rear direction L.

Further, the left head lamp 210L is arranged in the dark space V such that the radiator fin 214 is exposed below the left head lamp 210L, and the right head lamp 210R is arranged in the dark space V such that the radiator fin 214 is exposed below the right head lamp 210R. Thus, the difference or contrast between the brightness of the left head lamp 210L and right head lamp 210R and the darkness of the region located at the innermost position of the dark space V is generated. As a result, the conspicuousness of the left head lamp 210L and the right head lamp 210R can be ensured.

The lower edge Le of the center portion of the front cover 72 (a lower portion of the intake opening 72o) is arranged between the left head lamp 210L and the right head lamp 210R in the width direction W. Here, because the intake opening 72o of the front cover 72 is dented rearward, the space V is formed to extend to the innermost position below the intake opening 72o. Further, in the innermost position below the intake opening 72o, a shadow is likely to be formed. Therefore, a darker region is formed in the space V. The lower edge Le of the center portion of the front cover 72 is located between the upper end and the lower end of the left head lamp 210L in the vehicle front view. Further, the lower edge Le of the center portion of the front cover 72 is located between the upper end and the lower end of the right head lamp 210R in the vehicle front view.

In this case, the left head lamp 210L is arranged in the darker region between a left portion of the intake opening 72o and the left side cover 73, and the right head lamp 210R is arranged in the darker region between a right portion of the intake opening 72o and the right side cover 74. Thus, the conspicuousness of the left head lamp 210L and the right head lamp 210R can be improved. Further, because parts of the intake opening 72o respectively overlaps with parts of the respective left head lamp 210L and right head lamp 210R in a horizontal direction, the size of the front portion of the motorcycle 100 can be reduced in the top-and-bottom direction H.

Further, because the lower edge of the intake opening 72o is located at a position further upward than the lower end of the left head lamp 210L and the lower end of the right head lamp 210R, the size of the above-mentioned dark space V is increased in the top-and-bottom direction H. Thus, the difference or contrast between the brightness of the left head lamp 210L and right head lamps 210R and the darkness of the dark space V is increased. Thus, the conspicuousness of the left head lamp 210L and the right head lamp 210R is ensured.

The left head lamp 210L is arranged to have one part that overlaps with the left fork pipe 32 and another part that does not overlap with the left fork pipe 32 in the vehicle front view. Further, the right head lamp 210R is arranged to have one part that overlaps with the right fork pipe 33 and another part that does not overlap with the right fork pipe 33 in the vehicle front view. In this case, the one part of the left head lamp 210L and the one part of the right head lamp 210R respectively overlap with the left fork pipe 32 and right fork pipe 33 in the vehicle front view. Thus, the size of the front portion of the vehicle can be reduced in the width direction W.

Further, the other parts of the respective left head lamp 210L and right head lamp 210R do not overlap with the left fork pipe 32 and right fork pipe 33 in the vehicle front view. Here, the left side cover 73 and the right side cover 74 respectively extend to positions further rearward than the left fork pipe 32 and the right fork pipe 33.

That is, a space, which is located between the left fork pipe 32 and the right fork pipe 33 in the width direction W and is located at a position further rearward than the left fork pipe 32 and the right fork pipe 33, is covered by the left side cover 73 and the right side cover 74 from outside. It is more difficult for the external light to enter the space located at the innermost position. Therefore, the space, which is located between the left fork pipe 32 and the right fork pipe 33 in the width direction W and is located at the position further rearward than the left fork pipe 32 and the right fork pipe 33, is covered by the left side cover 73 and the right side cover 74 from outside, whereby a darker region is formed in the space. Therefore, the above-mentioned arrangement causes the other parts of the respective left head lamp 210L and right head lamp 210R to be arranged in the darker region. Thus, the conspicuousness of the left head lamp 210L and the right head lamp 210R can be improved.

Further, the left end of the left head lamp 210L is located at a position further rightward than a right edge 37A of the front wheel 37 in the vehicle front view (e.g. as seen in Figure 19). The right end of the right head lamp 210R is located at a position further leftward than a left edge 37B of the front wheel 37 in the vehicle front view (e.g. as seen in Figure 19). That is, the right end of the left head lamp 210L is located at a position further leftward than the left edge of the front wheel 37, and the left end of the right head lamp 210R is located at a position further rightward than the right edge of the front wheel 37, as viewed from the rider. In this case, the size of the left head lamp 210L and the right head lamp 210R is reduced. Thus, the size of the front portion of the vehicle can be reduced in the width direction W. Further, this arrangement causes a relatively large space to be formed above the front wheel 37 and between the left head lamp 210L and the right head lamp 210R. The space is more likely to become dark due to being located inside of the space V. Thus, the conspicuousness of the left head lamp 210L and the right head lamp 210R can be improved.

Further, because the left head lamp 210L and the right head lamp 210R are spaced apart from each other by being located in the right and the left portions of the vehicle, a sufficiently large space is formed above the front wheel 37. In particular, as described above, lower portions of the left head lamp 210L and the right head lamp 210R (the edge portions E1, E2 of Figure 9) extend upward and inward. Therefore, even when the front wheel 37 swings upward, the left head lamp 210L and the right head lamp 210R can be arranged in a lower portion of the vehicle without interfering with the front wheel 37. Further, the front wheel 37 is largely spaced apart from the left head lamp 210L and the right head lamp 210R, so that the dark space V can be largely ensured. Therefore, the difference or contrast between the brightness of the left head lamp 210L and right head lamp 210R and the darkness of the dark space V is increased. As a result, the conspicuousness of the left head lamp 210L and the right head lamp 210R can be improved.

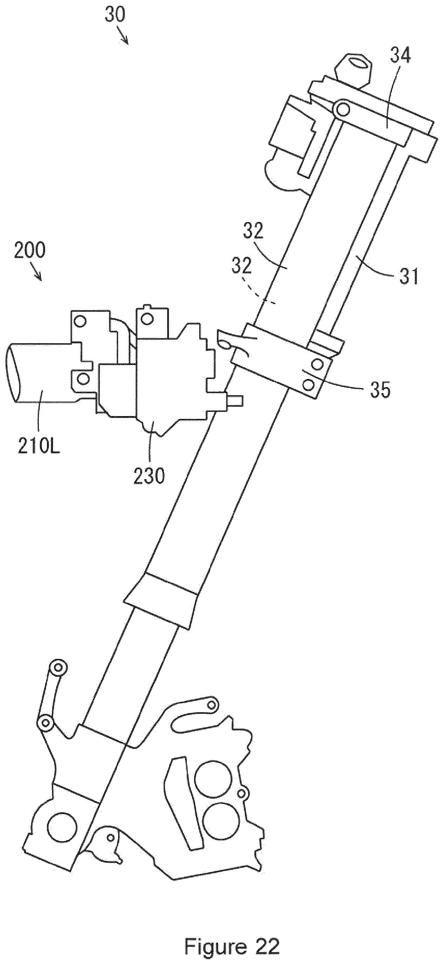

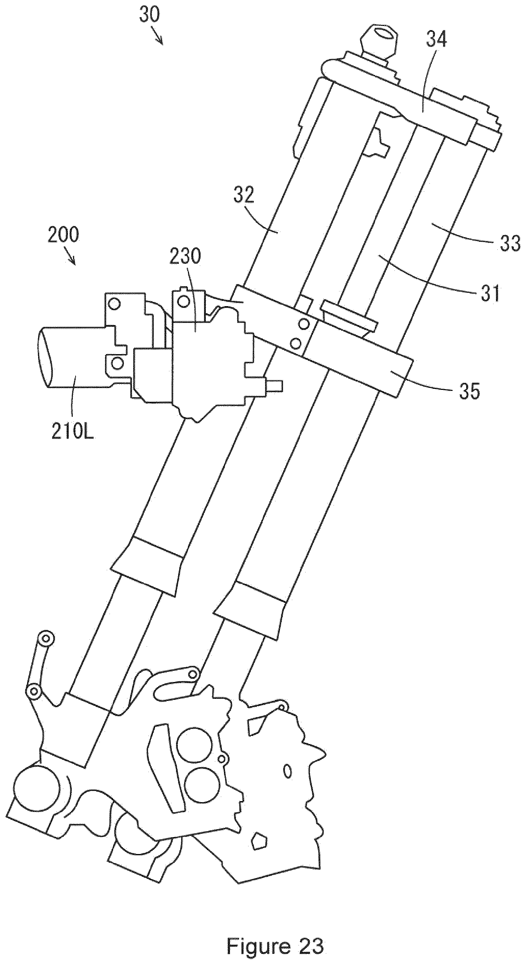

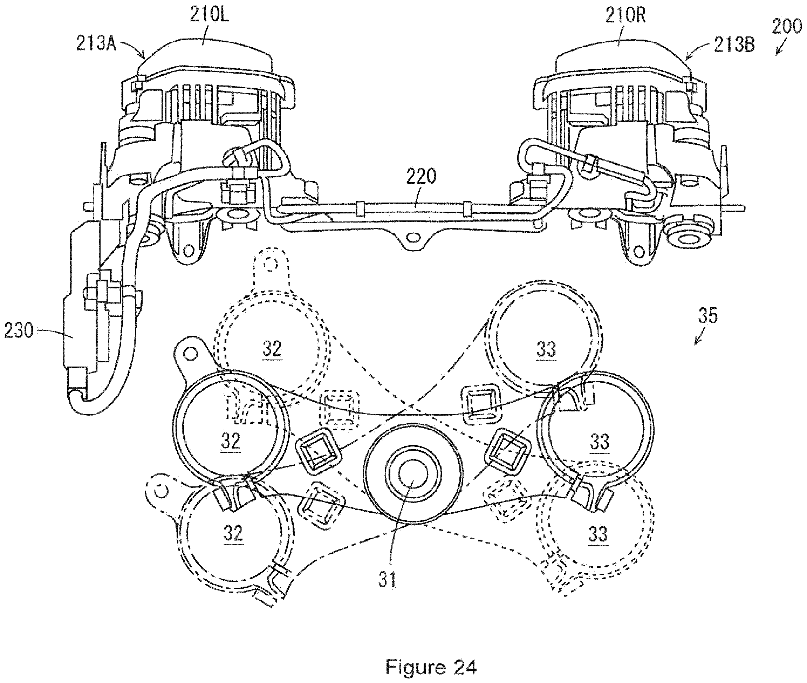

Figure 22 is a side view of the left side of the front fork device 30 and the head lamp unit 200 when the front fork device 30 is not turned. Figure 23 is a side view of the left side of the front fork device 30 and the head lamp unit 200 when the front fork device 30 is in maximum rightward turning. Figure 24 is a plan view showing a positional relation between the head lamp unit 200 and the under bracket 35.

In Figure 24, an under bracket 35 when the front fork device 30 is not turned is indicated by the solid lines. The under bracket 35 when the front fork device 30 in maximum rightward turning is indicated by the dotted lines. The under bracket 35 when the front fork device 30 is in maximum leftward turning is indicated by the one-dot dash lines.

As indicated by the dotted lines in Figure 24, when the front fork device 30 is in maximum rightward turning, a left portion of the under bracket 35 is in close proximity to the left head lamp 210L. Thus, the left fork pipe 32 is in close proximity to the left head lamp 210L. As indicated by the one-dot dash lines in Figure 24, when the front fork device 30 is in maximum leftward turning, a right portion of the under bracket 35 is in close proximity to the right head lamp 210R. Thus, the right fork pipe 33 is in close proximity to the right head lamp 210R.

Further, as shown in Figures 23 and 24, when the front fork device 30 is in maximum turning, the head lamp driving portion 230 of the head lamp unit 200 overlaps with the under bracket 35 in the vehicle side view. Thus, the head lamp driving portion 230 overlaps with the left fork pipe 32 or the right fork pipe 33 in the vehicle side view.

When the front fork device 30 is turned, a lower end of a front edge of the under bracket 35 is turned at the position of the front portion of the vehicle within a larger range than other portions of the under bracket 35. Further, when the front fork device 30 is turned, one of a left portion and a right portion of the lower end of the front edge of the under bracket 35 is moved upward, and the other one is moved downward.

In the example of Figure 22, when the front fork device 30 is not turned, the left fork pipe 32 overlaps with the right fork pipe 33 in the vehicle side view. As shown in Figure 23, when the front fork device 30 is turned rightward, the left portion of the lower end of the front edge of the under bracket 35 is moved forward, and is moved upward. Thus, the left fork pipe 32 is moved to a position further forward and upward than the right fork pipe 33. On the other hand, when the front fork device 30 is turned leftward, the right portion of the lower end of the front edge of the under bracket 35 is moved forward, and is moved upward. Thus, the right fork pipe 33 is moved to a position further forward and upward than the left fork pipe 32.

In the present embodiment, the head lamp unit 200 overlaps with the under bracket 35 in the width direction W in the vehicle front view. Further, in the vehicle front view, part of the head lamp unit 200 overlaps with part of the under bracket 35 in the top-and-bottom direction H.

At least part of the left head lamp 210L including the light source 211 and the head lamp cover 213 is arranged at a position further upward than the axle 37a of the front wheel 37. Further, at least part of the left head lamp 210 including the light source 211 and the head lamp cover 213 is arranged at a position further downward than the left portion of the lower end of the front edge of the under bracket 35 when the front fork device 30 is turned rightward.

Similarly, at least part of the right head lamp 210R including the light source 211 and the head lamp cover 213 is arranged at a position further upward than the axle 37a of the front wheel 37. Further, at least part of the right head lamp 210R including the light source 211 and the head lamp cover 213 is arranged at a position further downward than the right portion of the lower end of the front edge of the under bracket 35 when the front fork device 30 is turned leftward.

Such configuration enables the left head lamp 210L and the right head lamp 210R to be prevented from interfering with the under bracket 35, and the left head lamp 210L and the right head lamp 210R to be arranged in the space V.

### Attachment Configuration of Cowl

Figures 25 to 29 are perspective views showing the assembly steps of the front portion of the motorcycle 100. As shown in Figure 25, a square-tube intake guide 110 is attached to the front of the head pipe 13. The intake guide 110 is provided to open forward and rearward. Further, an intake guide 111 is attached to the back of the head pipe 13 to be connected to the intake guide 110. The intake passage 13P through which air is led rearward from the front of the head pipe 13 is formed by the intake guides 110, 111.

The air duct 80 is connected to the intake guide 110, and the intake port of the air cleaner 112 of Figure 1 is connected to the intake guide 111. Thus, air flowing into the air duct 80 is smoothly led to the air cleaner 112 through the intake passage 13P.

The air duct 80 is constituted by a duct main body 81 and a duct tip end 89. The duct main body 81 is a tubular member having a rectangular cross section, obliquely extends upward and forward, and further obliquely extends downward and forward. The duct tip end 89 is attached to the front end of the duct main body 81.

The duct tip end 89 is a tubular member having a rectangular cross section, and obliquely extends downward and forward. The length in the front-and-rear direction L of the duct tip end 89 is shorter than the length in the front-and-rear direction L of the duct main body 81. The duct main body 81 is formed of a glass fiber-reinforced resin, for example, and the duct tip end 89 is formed of rubber, for example. An inner space of the duct main body 81 and an inner space of the duct tip end 89 respectively function as the intake passage 80P that is used when air is led to the engine 20.

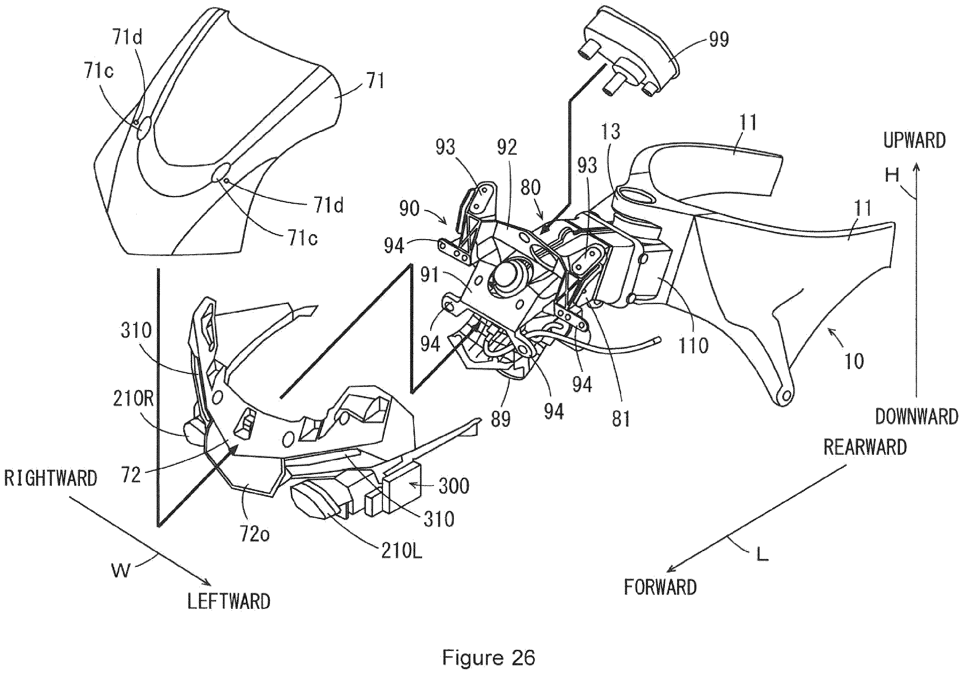

As described above, the rear end of the duct main body 81 is connected to the intake guide 110. A stay 90 is attached to the duct main body 81. The stay 90 supports the pair of left and right mirror devices 40, and a meter unit 99 that is described below (Figure 26). In this manner, the air duct 80 and the stay 90 are integrally fixed to the body frame 10.

The stay 90 is formed of a glass fiber-reinforced resin, for example. The stay 90 has a duct attachment portion 91, an upstanding portion 92, a pair of left and right mirror device fixing portions 93 and a plurality of (four in the present example) lamp fixing portions 94.

The stay 90 is attached to the air duct 80, so that the duct attachment portion 91 is attached to the upper surface of the duct main body 81. The upstanding portion 92 projects upward from the rear end of the duct attachment portion 91. The pair of left and right mirror device fixing portions 93 is located at the left and right of the upstanding portion 92. Two through holes through which two bolts are respectively put are formed in each mirror device fixing portion 93.

Two lamp fixing portions 94 are respectively located at the left and right of the front end of the duct attachment portion 91. The other two lamp fixing portions 94 are respectively located below the pair of left and right mirror device fixing portions 93.

As shown in Figure 26, the front cover 72, the head lamp unit 200 and the pair of position lamps 310 are respectively attached to the plurality of lamp fixing portions 94 of the stay 90.

The lower end of the front cover 71 is attached to the front end of the upper cover 72. A pair of left and right mirror fixing holes 71 c and a pair of left and right wiring holes 71 d are formed in the front cover 71. The front cover 71 is attached to the front cover 72, so that the pair of left and right mirror fixing holes 71 c respectively overlaps with the pair of left and right mirror device fixing portions 93 of the stay 90. Thus, the pair of left and right mirror device fixing portions 93 is exposed on the upper surface of the front cover 71.

The meter unit 99 is attached to the upstanding portion 92 of the stay 90 from behind. The meter unit 99 has a configuration in which a speed meter and a tachometer, for example, are stored in a casing.

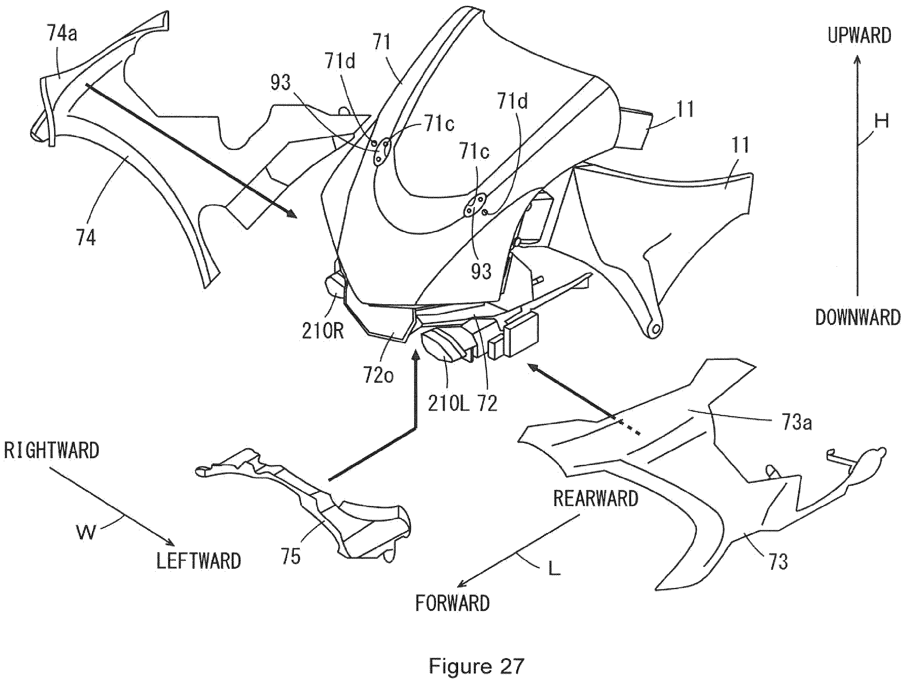

As shown in Figure 27, the front cover 73a and the left side cover 73 are attached to a left portion of the front cover 72, and the front cover 74a and the right side cover 74 are attached to a right portion of the front cover 72. Further, a head lamp cover 75 is attached to a lower portion of the head lamp unit 200 to cover parts of the respective front cover 72 and head lamp unit 200 from below.

A plurality of (four in the present example) through holes 75h are formed in the head lamp cover 75 as shown in Figure 21. The plurality of through holes 75h communicate with the plurality of through holes 222c formed in the pair of holding member 222 of Figure 12B. Thus, the worker can insert the tool into the through holes 75h of the head lamp cover 75 and the insertion holes 222c of the connection member 221, and adjust the light axis LA of the respective left head lamp 210L and right head lamp 210R.

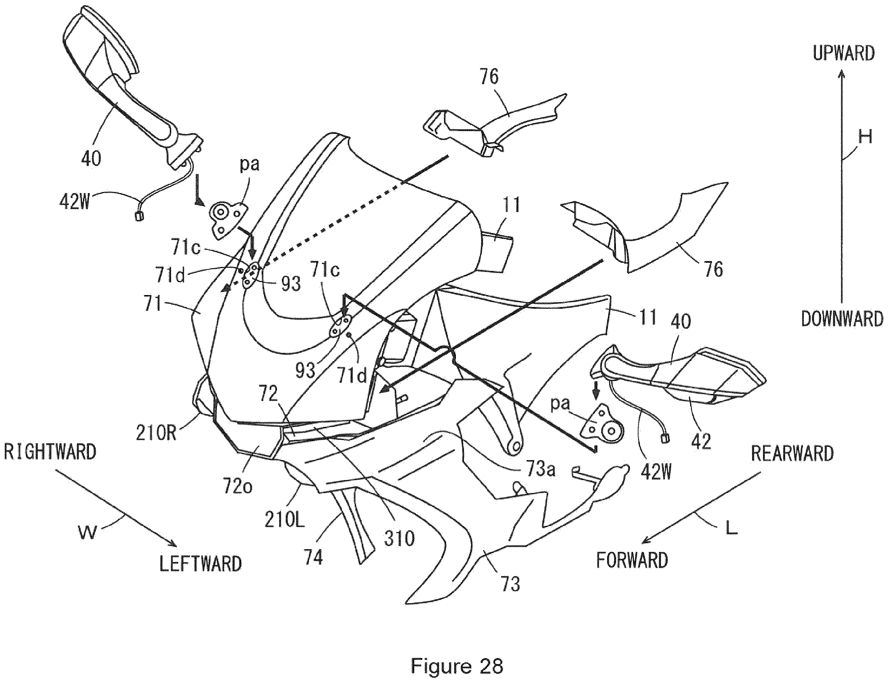

As shown in Figure 28, the left and right mirror devices 40 are respectively attached to the left and right mirror device fixing portions 93 that are respectively exposed through the mirror fixing holes 71 c of the front cover 71 with packing members pa made of rubber respectively sandwiched therebetween. At this time, a wiring 42W, which extends from the lower end of each mirror device 40, of the indicators or flasher 42 is put through each wiring hole 71 d of the front cover 71.

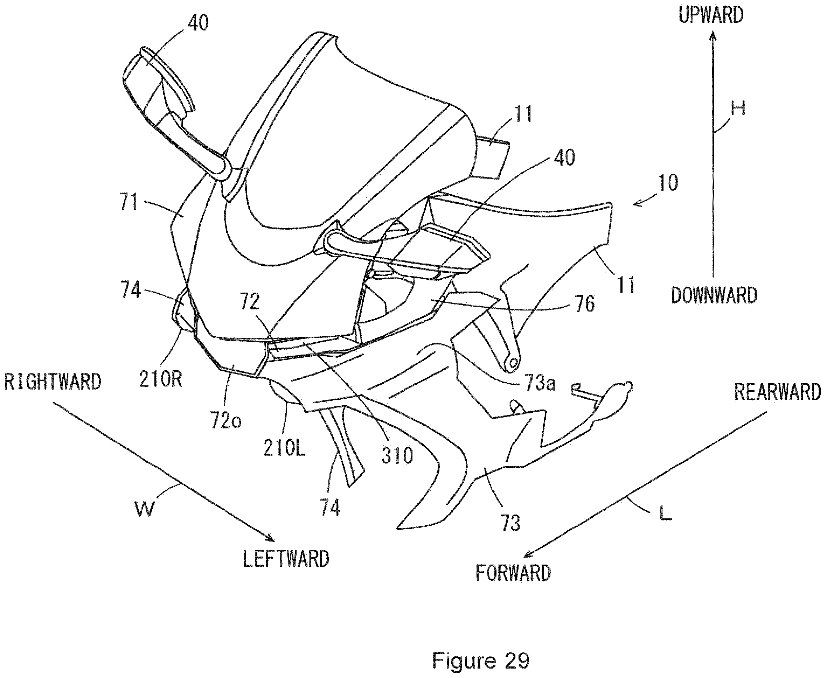

Further, in the present example, a pair of inner covers 76 is attached to outer portions in the width direction W of the front cover 72 to cover at least parts of the respective pair of position lamps 310 from behind. The front portion of the motorcycle 100 is assembled as described above. Thus, as shown in Figure 29, each of constituent elements, which constitutes the front portion of the motorcycle 100, is fixed to the body frame 10.

### Effects

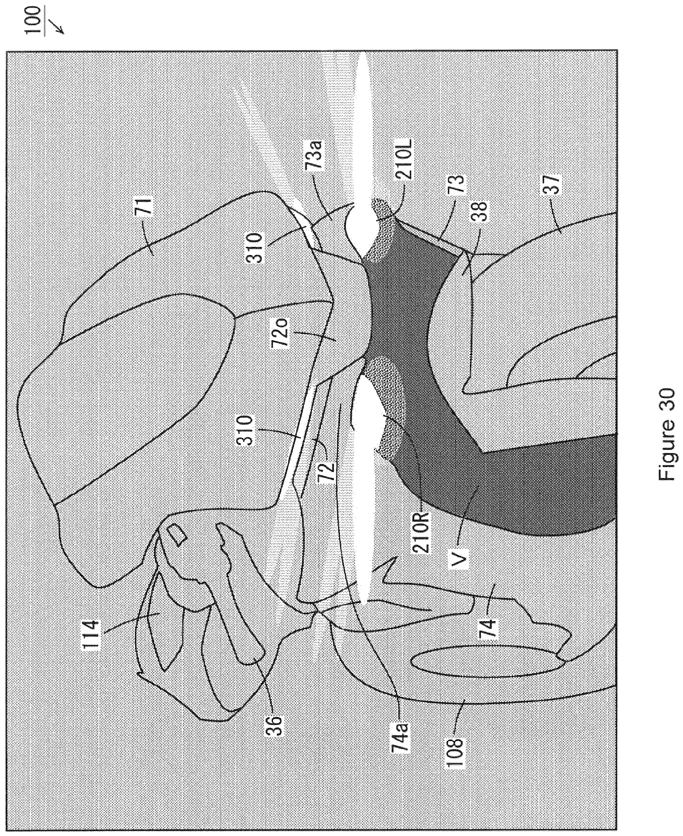

Figure 30 is a perspective view of the motorcycle 100. The above-mentioned configuration causes the relatively large space V to be formed in the lower portion of the vehicle by the front covers 71, 72, 73a, 74a, and the left cover 73 and the right side cover 74 as shown in Figure 30. The space V extends in the front-and-rear direction L and the width direction W, and is darker than the brightness of the space outside of the motorcycle 100. The left head lamp 210L is arranged in a left upper region in the above-mentioned dark space V, and the right head lamp 210R is arranged in an upper right region in the above-mentioned dark space V.

In this case, the difference or contrast between the brightness of the left head lamp 210L and right head lamp 210R and the darkness of the dark space V is generated. It is possible to ensure the conspicuousness of the left head lamp 210L and the right head lamp 210R by utilizing the large difference or contrast between the brightness of the left head lamp 210L and right head lamps 210R and the darkness of the dark space V.

The above-mentioned configuration causes the left head lamp 210L to be arranged at a position further leftward than the head pipe 13 and further forward than the left fork pipe 32, and the right head lamp 210R to be arranged at a position further rightward than the head pipe 13 and further forward than the right fork pipe 33. Thus, the left head lamp 210L and the right head lamp 210R are likely to be conspicuous from a position outside of the motorcycle 100. Further, because the dark space V is present between the left head lamp 210L and the right head lamp 210R, the difference or contrast between the brightness of the left head lamp 210L and right head lamp 210R and the darkness of the dark space V is increased.

At least part of the left head lamp 210L is arranged at a position further inward than the left side cover 73, and overlaps with the left side cover 73 in the vehicle left side view. Further, at least part of the right head lamp 210R is arranged at a position further inward than the right side cover 74, and overlaps with the right side cover 74 in the vehicle right side view. In this case, at least parts of the respective left head lamp 210L and right head lamp 210R are arranged in the dark space V. Therefore, the brightness of the space outside of the vehicle and the brightness of the left head lamp 210L are clearly sectioned by the left side cover 73, and the brightness of the space outside of the vehicle and the brightness of the right head lamp 210R are clearly sectioned by the right side cover 74. Thus, even when the size of the left head lamp 210L and the right head lamp 210R is reduced, the conspicuousness is ensured for the left head lamp 210L and the right head lamp 210R.

At least part of the left head lamp 210L and at least part of the right head lamp 210R respectively overlap with the front cover 71 in the vehicle plan view. In this case, at least parts of the respective left head lamp 210L and right head lamp 210R are arranged in the dark space V. Therefore, the brightness of the space above the vehicle, and the brightness of the left head lamp 210L and the right head lamp 210R are clearly sectioned by the front cover 71. Thus, even when the size of the left head lamp 210L and the right head lamp 210R is reduced, the conspicuousness is ensured for the left head lamp 210L and the right head lamp 210R.

The lower edge Le of the front cover 72 is arranged between the left head lamp 210L and the right head lamp 210R in the width direction W. The lower edge Le, which is arranged between the left head lamp 210L and the right headlamp 210R in the width direction W, of the front cover 72 is arranged at a position further upward than the lower end of the left head lamp 210L and the lower end of the right head lamp 210R in the vehicle front view. In this case, the upper end of the above-mentioned dark space V is located between the left head lamp 210L and the right head lamp 210R. Therefore, the dark space V is present between the left head lamp 210L and the right head lamp 210R. Thus, the brightness of the left head lamp 210L and the brightness of the right head lamp 210R are clearly sectioned. As a result, even when the size of the left head lamp 210L and the right head lamp 210R is reduced, individual conspicuousness of the left head lamp 210L and the right head lamp 210R is ensured.

At least part of the left head lamp 210L is arranged at a position further upward than the axle 37a of the front wheel 37 and further downward than the left portion of the lower end of the front edge of the under bracket 35 when the front fork device 30 is turned rightward. Further, at least part of the right head lamp 210R is arranged at a position further upward than the axle 37a of the front wheel 37 and further downward than the right portion of the lower end of the front edge of the under bracket 35 when the front fork device 30 is turned leftward. Such configuration enables at least part of the left head lamp 210L and at least part of the right head lamp 210R to be prevented from interfering with the under bracket 35, and the left head lamp 210L and the right head lamp 210R to be arranged in the above-mentioned dark space V.

In this case, it is possible to respectively arrange the left head lamp 210L and the right head lamp 210R at positions further downward than the lower end of the front edge of the under bracket 35 as described above by reducing the size of the left head lamp 210L and the right head lamp 210R. Further, even when the left head lamp 210L and the right head lamp 210R are respectively arranged at positions further downward than the lower end of the front edge of the under bracket 35, it is possible to reduce the size of the motorcycle 100 in the front-and-rear direction L by reducing the size of the left head lamp 210L and the right head lamp 210R.

Further, the above-mentioned configuration causes the size of the left head lamp 210L and right head lamp 210R to be respectively reduced while light-emitting areas are ensured because the left head lamp 210L and the right head lamp 210R are provided in the vehicle.

Further, at least parts of the respective left head lamp 210L and right head lamp 210R are arranged at positions further rearward than the axle 37a of the front wheel 37. In this case, the left head lamp 210L and the right head lamp 210R are inhibited from projecting forward. Thus, the size of the left head lamp 210L and the right head lamp 210R can be reduced, and the size of the front portion of the motorcycle 100 can be reduced.

As a result, the size of the left head lamp 210L and the right head lamp 210R is reduced, whereby it is possible to ensure the conspicuousness of the left head lamp 210L and the right head lamp 210R while the size of the front portion of the motorcycle 100 is inhibited from being increased. Further, the left head lamp 210L and the right head lamp 210R are provided at the motorcycle 100. Therefore, the light-emitting area of the left head lamp 210L is added to the light-emitting area of the right head lamp 210R, whereby the size of the left head lamp 210L and right head lamp 210R can be reduced while the light-emitting areas of the entire head lamps are ensured.

### Other Embodiments

While the motorcycle 100 is described as one example of the straddle-type or saddle-ride vehicle in the above-mentioned embodiment, the invention is not limited to this. The present invention may be applied to another vehicle such as a motor tricycle, moped, scooter, all-terrain vehicle (ATV), snow-mobile, and/or the like. In particular, when a straddle-type vehicle has two front wheels 37, the size of a cover 70 is increased in the width direction W. Therefore, a relatively darker and larger space V is formed in a lower portion. A left head lamp 210L and a right head lamp 210R are arranged in the space V, whereby conspicuousness of the left head lamp 210L and the right head lamp 210R can be increased.

While the intake opening 72o is formed at the front end of the front cover 72 in the above-mentioned embodiment, the invention is not limited to this. A recess being dented rearward (a recess, which does not open) may be formed at a front cover 72 instead of the intake opening 72o. In this case, a lower edge Le of the recess is located at a position further downward than upper ends of respective left head lamp 210L and right head lamp 210R.

This configuration causes the left head lamp 210L to be arranged at a dark position between a left portion of the recess and a left side cover 73, and the right head lamp 210R to be arranged at a dark position between a right portion of the recess and a right side cover 74. Thus, conspicuousness of the left head lamp 210L and the right head lamp 210R can be improved.

In the above-mentioned embodiment, the cover 70 is provided such that it does not close the space or volume V below the left head lamp 210L and the right head lamp 210R in the vehicle front view. Thus, the dark space or volume V is ensured below the left head lamp 210L and the right head lamp 210R. Thus, the conspicuousness of the left head lamp 210L and the right head lamp 210R can be improved.

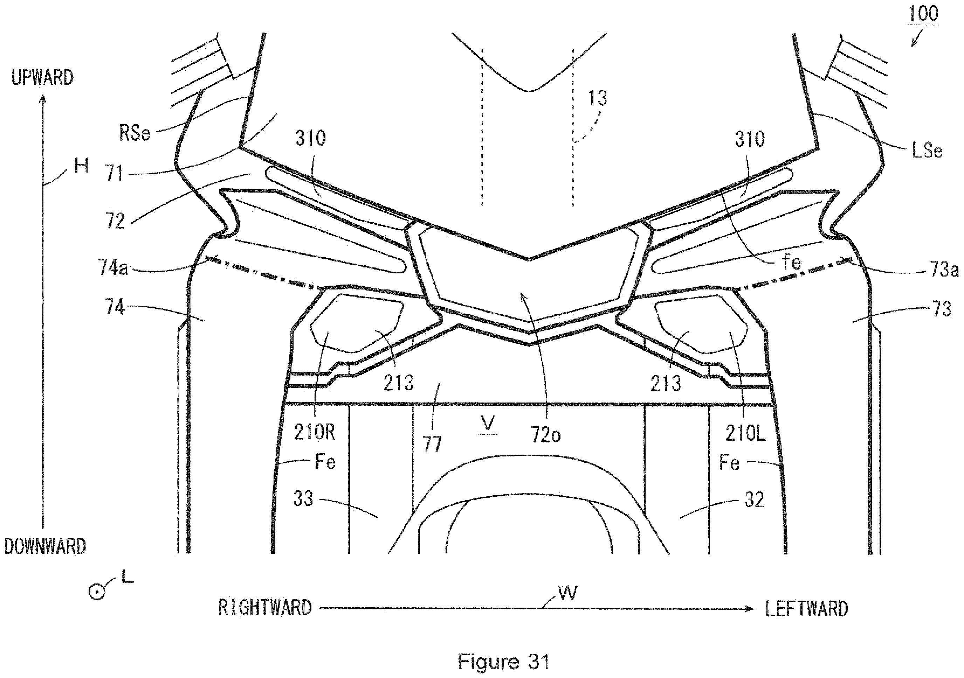

On the other hand, part of a cover 70 may be provided to close part of a space or volume V below a left head lamp 210L and a right head lamp 210R in a vehicle front view. Figure 31 is an enlarged front view of the motorcycle 100 according to a modified example. As shown in Figure 31, a thin undercover 77 is provided in a lower portion of a motorcycle 100 as the part of the cover 70. In Figure 31, outer shapes of front covers 71, 72, 73a, 74a, a left side cover 73, a right side cover 74 and the undercover 77 are indicated by the thick solid lines.

While the left head lamp 210L has a laterally symmetrical configuration with the right head lamp 210R in the above-mentioned embodiment, the invention is not limited to this. A left head lamp 210L may have a laterally asymmetrical configuration with a right head lamp 210R. Similarly, a left part of a front fork device 30 may have a laterally asymmetrical configuration with a right part of the front fork device 30, and a left part of a cover 70 may have a laterally asymmetrical configuration with a right part of the cover 70.

The head lamp unit 200 is configured be replaceable, so that the pair of holding members 222 is connected to each other by the connection member 221 and the connection member 221 adjusts the distance between the left head lamp 210L and the right head lamp 210R. While the configuration of the head lamp unit 200 is applied to the straddle-type vehicle having a cover in the above-mentioned embodiment, the invention is not limited to this. The configuration of the head lamp unit 200 may be applied to a naked-type straddle-type vehicle having no cover. Even in such a case, the distance between a left head lamp 210L and a right head lamp 210R can be arbitrarily adjusted according to a shape and a measurement of a straddle-type vehicle.

### Correspondences between Constituent Elements in Claims and Parts in Preferred Embodiments

In the following paragraphs, non-limiting examples of correspondence between various elements recited in the claims below and those described above with respect to various preferred embodiments of the present invention are explained.

In the above-mentioned embodiment, the head pipe 13 is an example of a head pipe, the steering shaft 31 is an example of a steering shaft and the handle member 36 is an example of a handle member. The left fork pipe 32 is an example of a left fork pipe, the right fork pipe 33 is an example of a right fork pipe, the upper bracket 34 is an example of an upper bracket, and the under bracket 35 is an example of an under bracket. The front wheel 37 is an example of a front wheel, the front fork device 30 is an example of a front fork device, the left side cover 73 is an example of a left side cover and the right side cover 74 is an example of the right side cover.

The front covers 71, 72, 73a, 74a are examples of a front cover, the left head lamp 210L is an example of a left head lamp, the right head lamp 210R is an example of a right head lamp, and the steering opening 70o is an example of a steering opening. The motorcycle 100 is an example of a straddle-type or saddle-ride vehicle, the light source 211 is an example of a left light source and a right light source, the head lamp cover 213 is an example of a left head lamp cover and a right head lamp cover. The lens portion 213L is an example of a left lens portion and a right lens portion, the hard film 215 is an example of a left hard film and a right hard film, the left cutout portion 70L is an example of a left cutout portion and the right cutout portion 70R is an example of a right cutout portion.

The intake opening 72o is an example of a recess and an intake opening, the engine 20 is an example of an engine, the intake passage 80P is an example of an intake passage and the air duct 80 is an example of an air duct. The radiator fin 214 is an example of a left radiator fin and a right radiator fin, the head lamp driving portion 230 is an example of a control device, the light axis adjustment member 223 is an example of a left light axis adjustment member and a right light axis adjustment member and the connection member 221 is an example of a connection member.

As each of constituent elements recited in the claims, various other elements having configurations or functions described in the claims can be also used.

The present invention can be effectively utilized for various straddle-type or saddle-ride vehicles including head lamps.

It will be appreciated that the embodiment of the invention hereinbefore described is given by way of example only, and is not meant to be limiting of the scope of the invention.

It will be appreciated that the term straddle-type vehicle or motor vehicle used herein, and as used in the art, is meant to include the following terms also used in the art:
saddled vehicle, saddle-ride type vehicle or motor vehicle, saddle-straddling type vehicle or motor vehicle, and includes:
   motorcycles and motorbikes as well as motor tricycles and All-Terrain Vehicles (ATVs), scooters, mopeds and snow mobiles.

## Claims

1. A saddled vehicle, straddle-type vehicle, or saddle-ride vehicle (100) comprising:
a head pipe (13) that extends downward and forward;
a front fork device (30) that includes a steering shaft (31), a handle member (36), a left fork pipe (32), a right fork pipe (33), an upper bracket (34), an under bracket (35) and a front wheel (37);
a left side cover (73) that extends in a vehicle top-and-bottom direction and is arranged at a position further leftward than the left fork pipe (32) and the front wheel (37);
a right side cover (74) that extends in the vehicle top-and-bottom direction and is arranged at a position further rightward than the right fork pipe (33) and the front wheel (37);
a front cover (71, 72, 73a, 74a) that extends in a vehicle width direction and is connected to the right side cover (74) and the left side cover (73);
a left head lamp (210L) that is arranged at a position further leftward than the head pipe (13) and further forward than the left fork pipe (32), and has at least a part arranged at a position further rearward than an axle (37a) of the front wheel (37); and
a right head lamp (210R) that is arranged at a position further rightward than the head pipe (13) and further forward than the right fork pipe (33), and has at least a part arranged at a position further rearward than the axle (37a) of the front wheel (37), wherein
the steering shaft (31) is inserted into the head pipe (13), and extends downward and forward,
the left fork pipe (32) is arranged at a position further leftward than the steering shaft (31), and extends to a position further downward and forward than the steering shaft (31);
the right fork pipe (33) is arranged at a position further rightward than the steering shaft (31), and extends to a position further downward and forward than the steering shaft (31);
the upper bracket (34) is coupled to the steering shaft (31), and is coupled to the right fork pipe (33) and the left fork pipe (32) to extend in the vehicle width direction,
the under bracket (35) is coupled to the steering shaft (31), and is coupled to the right fork pipe (33) and the left fork pipe (32) to extend in the vehicle width direction, below the upper bracket (34),
the front wheel (37) is arranged at a position further downward than the under bracket (35), and is arranged between the left fork pipe (32) and the right fork pipe (33),
the front fork device (30) is configured to turn about the head pipe (13) by operation of the handle member (36),
the left side cover (73) extends from a position in front of the left fork pipe (32) to a position further rearward than the left fork pipe (32),
the right side cover (74) extends from a position in front of the right fork pipe (33) to a position further rearward than the right fork pipe (33),
the front cover (71, 72, 73a, 74a) extends forward and downward from a position further upward than the handle member (36), and is arranged in front of the upper bracket (34) and the steering shaft (31),
a steering opening (70o), in which the front fork device (30) is turnable, is formed by the left side cover (73), the right side cover (74) and the front cover (71, 72, 73a, 74a),
a front end of the under bracket (35) is arranged at a position further forward than a front end of the upper bracket (34),
at least part of the left head lamp (210L) is arranged at a position further upward than the axle (37a) of the front wheel (37) and further downward than a left portion of a lower end of a front edge of the under bracket (34) when the front fork device (30) is turned rightward,
at least part of the right head lamp (210R) is arranged at a position further upward than the axle (37a) of the front wheel (37) and further downward than a right portion of the lower end of the front edge of the under bracket (34) when the front fork device (30) is turned leftward,
at least part of the left head lamp (210L) is arranged at a position further inward than the left side cover (73), and overlaps with the left side cover (73) in a vehicle left side view,
at least part of the right head lamp (210R) is arranged at a position further inward than the right side cover (74), and overlaps with the right side cover (74) in a vehicle right side view,
at least part of the left head lamp (210L) and at least part of the right head lamp (210R) overlap with the front cover (71, 72, 73a, 74a) in a vehicle plan view,
**characterised in that** at least part of a lower edge (Le) of the front cover (71, 72, 73a, 74a), which defines at least part of an upper edge of the steering opening (70o), is arranged between the left head lamp (210L) and the right head lamp (210R) in the vehicle width direction, and is arranged at a position further upward than a lower end of the left head lamp (210L) and a lower end of the right head lamp (210R) in a vehicle front view.

2. The vehicle (100) according to claim 1,
a front surface of the left head lamp (210L) and a front surface of the right head lamp (210R) are respectively arranged at positions further rearward than a front end of the front cover (71, 72, 73a, 74a).

3. The vehicle (100) according to claim 1 or 2, wherein
the left head lamp (210L) and the right head lamp (210R) respectively include a left light source (211) and a right light source (211) that are adapted to generate light,
the left light source (211) is arranged to overlap with the left side cover (73) in a vehicle side view, and
the right light source (211) is arranged to overlap with the right side cover (74) in the vehicle side view.

4. The vehicle (100) according to claim 3, wherein
the left light source (211) and the right light source (211) are arranged to overlap with the front cover (71, 72, 73a, 74a) in the vehicle plan view; and/or
the left head lamp (210L) further includes a left head lamp cover (213) arranged in front of the left light source (211), the right head lamp (210R) further includes a right head lamp cover (213) arranged in front of the right light source (211), at least part of the left head lamp cover (213) is arranged to overlap with the left side cover (73) in the vehicle side view, and at least part of the right head lamp cover (213) is arranged to overlap with the right side cover (74) in the vehicle side view.

5. The vehicle (100) according to claim 4, wherein
the left head lamp cover (213) has a left lens portion (213L) configured to apply directivity to the light generated by the left light source (211), and
the right head lamp cover (213) has a right lens portion (213L) configured to apply directivity to the light generated by the right light source (211).

6. The vehicle (100) according to claim 5, wherein
an outer surface of the left head lamp cover (213) is covered by a left hard film (215), and an outer surface of the left hard film (215) is exposed, and
an outer surface of the right head lamp cover (213) is covered by a right hard film (215), and an outer surface of the right hard film (215) is exposed.

7. The vehicle (100) according to claim 5 or 6, further comprising:
a left light axis adjustment member (223) that is adapted to be used in a case in which a direction of a light axis that is formed by the left light source (211) and the left lens portion (213L), of the left head lamp (210L) is to be adjusted while a positional relation between the left light source (211) and the left lens portion (213L) is maintained, and
a right light axis adjustment member (223) that is adapted to be used in a case in which a direction of a light axis that is formed by the right light source (211) and the right lens portion (213L), of the right head lamp (210R) is to be adjusted while a positional relation between the right light source (211) and the right lens portion (213L) is maintained.

8. The vehicle (100) according to any one of claims 1 to 7, wherein
the left head lamp (210L) is arranged to have a part that overlaps with the left fork pipe (32) and another part that does not overlap with the left fork pipe (32) in the vehicle front view, and the right head lamp (210R) is arranged to have a part that overlaps with the right fork pipe (33) and another part that does not overlap with the right fork pipe (33) in the vehicle front view; and/or
a left cutout portion (70L) is formed by a left side edge of the front cover (71, 72, 73a, 74a) and an upper edge of the left side cover (73), and a right cutout portion (70R) is formed by a right side edge of the front cover (71, 72, 73a, 74a) and an upper edge of the right side cover(74), in the vehicle side view, the handle member (36) can be turned in the left cutout portion (70L) and the right cutout portion (70R), and upper ends of the left head lamp (210L) and the right head lamp (210R) are respectively arranged at positions further downward than the left cutout portion (70L) and the right cutout portion (70R).

9. The vehicle (100) according to any one of claims 1 to 8, wherein
front edges of the left side cover (73) and the right side cover (74) respectively extend in the top-and-bottom direction, and the lower edge of the front cover (71, 72, 73a, 74a) extends in the vehicle width direction,
the lower edge of the front cover (71, 72, 73a, 74a) is connected to upper ends of the front edges of the respective left side cover (73) and right side cover (74),
the left head lamp (210L) is arranged in a corner portion formed by the lower edge of the front cover (71, 72, 73a, 74a) and the upper end of the front edge of the left side cover (73) in the vehicle front view, and
the right head lamp (210R) is arranged in a corner portion formed by the lower edge of the front cover (71, 72, 73a, 74a) and the upper end of the front edge of the right side cover (74) in the vehicle front view.

10. The vehicle (100) according to claim 9, wherein
a lower portion of an inner portion of the left head lamp (210L) extends upward and inward, and a lower portion of an inner portion of the right head lamp (210R) extends upward and inward in a vehicle front view.

11. The vehicle (100) according to any one of claims 1 to 10, wherein
a recess (72o) being dented rearward is formed in a front portion of the front cover (71, 72, 73a, 74a), and a lower edge of the recess (72o) is located between an upper end of the left head lamp (210L) and a lower end of the left head lamp (210L) and between an upper end of the right head lamp (210R) and a lower end of the right head lamp (210R).

12. The vehicle (100) according to claim 11, wherein
the recess (72o) of the front cover (71, 72, 73a, 74a) includes an intake opening, and
the vehicle (100) further comprising:
an engine (20) arranged behind the front wheel (37); and
an air duct (80) that extends rearward from the intake opening and forms an intake passage connected to the engine (20).

13. The vehicle (100) according to any one of claims 1 to 12, wherein the left head lamp (210L) is positioned rightward than a center of the vehicle, and a left end of the left head lamp (210L) is arranged at a position further rightward than a right edge of the front wheel (37) in the vehicle front view, and the right head lamp (210R) is positioned leftward than the center of the vehicle, and a right end of the right head lamp (210R) is arranged at a position further leftward than a left edge of the front wheel (37) in the vehicle front view; and/or
a front end of the front cover (71, 72, 73a, 74a) is located at a position further forward than the axle (37a) of the front wheel (37); and/or
front edges of the respective left side cover (73) and right side cover (74) are inclined downward and rearward in a vehicle side view, and front surfaces of the respective left head lamp (210L) and right head lamp (210R) are inclined downward and rearward in the vehicle side view.

14. The vehicle (100) according to any preceding claim, wherein
the left head lamp (210L) includes a left radiator fin (214),
the right head lamp (210R) includes a right radiator fin (214),
the left radiator fin (214) is exposed below the left head lamp (210L), and
the right radiator fin (214) is exposed below the right head lamp (21 OR).

15. The vehicle (100) according to any preceding claim, further comprising a control device (230) that is adapted to control to turn on and off the left head lamp (210L) and the right head lamp (21 OR), wherein the control device (230) is arranged at a position further outward than the left head lamp (210L) or the right head lamp (21 OR); and/or
a front surface of left head lamp (210L) is inclined to have a left portion extending to a position further rearward than a center portion in the vehicle plan view, and a front surface of the right head lamp (210R) is inclined to have a right portion extending to a position further rearward than a center portion in the vehicle plan view; and/or
the front cover (71, 72, 73a, 74a), the left side cover (73) and the right side cover (74) are provided so as to not close a space below the left head lamp (210L) and the right head lamp (210R) in the vehicle front view; and/or
the vehicle (100) further comprises a connection member (221) that connects the left head lamp (210L) to the right head lamp (210R), and the connection member (221) is attached to the left head lamp (210L) and the right head lamp (210R) to be detachably attachable.

## Patentansprüche

1. Sattelfahrzeug, Spreizsitztyp-Fahrzeug oder Sattelsitz-Fahrzeug (100) umfassend:
ein Kopfrohr (13), das sich abwärts und vorwärts erstreckt;
eine vordere Gabelvorrichtung (30), die eine Lenkwelle (31), ein Griffelement (36), ein linkes Gabelrohr (32), ein rechtes Gabelrohr (33), eine obere Halterung (34), eine untere Halterung (35) und ein Vorderrad (37) enthält;
eine linke Seitenverkleidung (73), die sich in eine Auf- und Abwärtsrichtung des Fahrzeugs erstreckt und an einer Position weiter links als das linke Gabelrohr (32) und das Vorderrad (37) angeordnet ist;
eine rechte Seitenverkleidung (74), die sich in eine Auf- und Abwärtsrichtung des Fahrzeugs erstreckt und an einer Position weiter rechts als das rechte Gabelrohr (33) und das Vorderrad (37) angeordnet ist;
eine Frontverkleidung (71, 72, 73a, 74a), die sich in eine Breitrichtung des Fahrzeugs erstreckt und mit der rechten Seitenverkleidung (74) und der linken Seitenverkleidung (73) verbunden ist;
einen linken Scheinwerfer (210L), der an einer Position weiter links als das Kopfrohr (13) und weiter vorwärts als das linke Gabelrohr (32) angeordnet ist, und mindestens einen Teil an einer Position weiter rückwärts als eine Achse (37a) des Vorderrads (37) hat; und
einen rechten Scheinwerfer (210R), der an einer Position weiter links als das Kopfrohr (13) und weiter vorwärts als das rechte Gabelrohr (33) angeordnet ist, und mindestens einen Teil an einer Position weiter rückwärts als die Achse (37a) des Vorderrads (37) hat, wobei
die Lenkwelle (31) in das Kopfrohr (13) eingeführt ist und sich abwärts und vorwärts erstreckt,
das linke Gabelrohr (32) an einer Position weiter links als die Lenkwelle (31) angeordnet ist und sich zu einer Position weiter abwärts und vorwärts als die Lenkwelle (31) erstreckt;
das rechte Gabelrohr (33) an einer Position weiter rechts als die Lenkwelle (31) angeordnet ist und sich zu einer Position weiter abwärts und vorwärts als die Lenkwelle (31) erstreckt;
die obere Halterung (34) an die Lenkwelle (31) gekoppelt ist, und an das rechte Gabelrohr (33) und das linke Gabelrohr (32) gekoppelt ist, um sich in die Breitrichtung des Fahrzeugs zu erstrecken,
die untere Halterung (35) an die Lenkwelle (31) gekoppelt ist, und an das rechte Gabelrohr (33) und das linke Gabelrohr (32) gekoppelt ist, um sich in die Breitrichtung des Fahrzeugs unter der oberen Halterung (34) zu erstrecken,
das Vorderrad (37) an einer Position weiter abwärts als die untere Halterung (35) angeordnet ist, und zwischen dem linken Gabelrohr (32) und dem rechten Gabelrohr (33) angeordnet ist,
die vordere Gabelvorrichtung (30) konfiguriert ist, um durch Betätigung des Griffelements (36) um das Kopfrohr (13) zu drehen,
die linke Seitenverkleidung (73) sich von einer Position vor dem linken Gabelrohr (32) zu einer Position weiter rückwärts als das linke Gabelrohr (32) erstreckt,
die rechte Seitenverkleidung (74) sich von einer Position vor dem rechten Gabelrohr (33) zu einer Position weiter rückwärts als das rechte Gabelrohr (33) erstreckt,
die Frontverkleidung (71, 72, 73a, 74a) sich vorwärts und abwärts von einer Position weiter aufwärts als das Griffelement (36) erstreckt, und vor der oberen Halterung (34) und der Lenkwelle (31) angeordnet ist,
eine Lenköffnung (70o), in der die vordere Gabelvorrichtung (30) drehbar ist, von der linken Seitenverkleidung (73), der rechten Seitenverkleidung (74) und der Frontverkleidung (71, 72, 73a, 74a) gebildet wird,
ein vorderes Ende der unteren Halterung (35) an einer Position weiter vorwärts als ein vorderes Ende der oberen Halterung (34) angeordnet ist,
mindestens ein Teil des linken Scheinwerfers (210L) an einer Position weiter aufwärts als die Achse (37a) des Vorderrads (37) und weiter abwärts als ein linker Abschnitt eines unteren Endes eines vorderen Rands der unteren Halterung (34) angeordnet ist, wenn die vordere Gabelvorrichtung (30) nach rechts gedreht wird,
mindestens ein Teil des rechten Scheinwerfers (210R) an einer Position weiter aufwärts als die Achse (37a) des Vorderrads (37) und weiter abwärts als ein rechter Abschnitt des unteren Endes eines vorderen Rands der unteren Halterung (34) angeordnet ist, wenn die vordere Gabelvorrichtung (30) nach links gedreht wird,
mindestens ein Teil des linken Scheinwerfers (210L) an einer Position weiter innen als die linke Seitenverkleidung (73) angeordnet ist, und mit der linken Seitenverkleidung (73) in einer linken Fahrzeugseitenansicht überlappt,
mindestens ein Teil des rechten Scheinwerfers (210R) an einer Position weiter innen als die rechte Seitenverkleidung (74) angeordnet ist, und mit der rechten Seitenverkleidung (74) in einer rechten Fahrzeugseitenansicht überlappt,
mindestens ein Teil des linken Scheinwerfers (210L) und mindestens ein Teil des rechten Scheinwerfers (210R) mit der Frontverkleidung (71, 72, 73a, 74a) in einer Fahrzeugdraufsicht überlappen,
**dadurch gekennzeichnet**, das mindestens ein Teil eines unteren Rands (Le) der Frontverkleidung (71, 72, 73a, 74a), der mindestens einen Teil eines oberen Rands der Lenköffnung (70o) definiert, zwischen dem linken Scheinwerfer (210L) und dem rechten Scheinwerfer (210R) in der Breitrichtung des Fahrzeugs angeordnet ist, und an einer Position weiter aufwärts als ein unteres Ende des linken Scheinwerfers (210L) und ein unteres Ende des rechten Scheinwerfers (210R) in einer Fahrzeugvorderansicht angeordnet ist.

2. Fahrzeug (100) nach Anspruch 1, wobei
eine vordere Fläche des linken Scheinwerfers (210L) und eine vordere Fläche des rechten Scheinwerfers (210R) jeweils an Positionen weiter rückwärts als ein vorderes Ende der Frontverkleidung (71, 72, 73a, 74a) angeordnet sind.

3. Fahrzeug (100) nach Anspruch 1 oder 2, wobei
der linke Scheinwerfer (210L) und der rechte Scheinwerfer (210R) jeweils eine linke Lichtquelle (211) und eine rechte Lichtquelle (211) enthalten, die angepasst sind, um Licht zu erzeugen,
die linke Lichtquelle (211) angeordnet ist, um mit der linken Seitenverkleidung (73) in einer Fahrzeugseitenansicht zu überlappen, und
die rechte Lichtquelle (211) angeordnet ist, um mit der rechten Seitenverkleidung (74) in der Fahrzeugseitenansicht zu überlappen.

4. Fahrzeug (100) nach Anspruch 3, wobei
die linke Lichtquelle (211) und die rechte Lichtquelle (211) angeordnet sind, um mit der Frontverkleidung (71, 72, 73a, 74a) in der Fahrzeugdraufsicht zu überlappen; und/oder
der linke Scheinwerfer (210L) ferner eine linke Scheinwerferabdeckung (213) angeordnet vor der linken Lichtquelle (211) enthält, der rechte Scheinwerfer (210R) ferner eine rechte Scheinwerferabdeckung (213) angeordnet vor der rechten Lichtquelle (211) enthält, mindestens ein Teil der linken Scheinwerferabdeckung (213) angeordnet ist, um mit der linken Seitenverkleidung (73) in der Fahrzeugseitenansicht zu überlappen, und mindestens ein Teil der rechten Scheinwerferabdeckung (213) angeordnet ist, um mit der rechten Seitenverkleidung (74) in der Fahrzeugseitenansicht zu überlappen.

5. Fahrzeug (100) nach Anspruch 4, wobei
die linke Scheinwerferabdeckung (213) einen linken Linsenabschnitt (213L) hat, der konfiguriert ist, um auf das von der linken Lichtquelle (211) erzeugte Licht eine Richtwirkung anzuwenden, und
die rechte Scheinwerferabdeckung (213) einen rechten Linsenabschnitt (213L) hat, der konfiguriert ist, um auf das von der rechten Lichtquelle (211) erzeugte Licht eine Richtwirkung anzuwenden.

6. Fahrzeug (100) nach Anspruch 5, wobei
eine Außenfläche der linken Scheinwerferabdeckung (213) von einer linken Hartfolie (215) abgedeckt ist, und eine Außenfläche der linken Hartfolie (215) freiliegend ist, und
eine Außenfläche der rechten Scheinwerferabdeckung (213) von einer rechten Hartfolie (215) abgedeckt ist, und eine Außenfläche der rechten Hartfolie (215) freiliegend ist.

7. Fahrzeug (100) nach Anspruch 5 oder 6, ferner umfassend:
ein Einstellelement für linke Lichtachse (223), das angepasst ist, um in einem Fall verwendet zu werden, in dem eine Richtung einer linken Lichtachse, die von einer linken Lichtquelle (211) und dem linken Linsenabschnitt (213L) des linken Scheinwerfers (210L) erzeugt wird, eingestellt werden soll, während ein Positionsverhältnis zwischen der linken Lichtquelle (211) und dem linken Linsenabschnitt (213L) beibehalten wird, und
ein Einstellelement für rechte Lichtachse (223), das angepasst ist, um in einem Fall verwendet zu werden, in dem eine Richtung einer rechten Lichtachse, die von einer linken Lichtquelle (211) und dem rechten Linsenabschnitt (213L) des rechten Scheinwerfers (210R) erzeugt wird, eingestellt werden soll, während ein Positionsverhältnis zwischen der rechten Lichtquelle (211) und dem rechten Linsenabschnitt (213L) beibehalten wird.

8. Fahrzeug (100) nach einem der Ansprüche 1 bis 7, wobei
der linke Scheinwerfer (210L) angeordnet ist, um einen Teil zu haben, der mit dem linken Gabelrohr (32) überlappt, und einen Teil, der nicht mit dem linken Gabelrohr (32) in der Fahrzeugvorderansicht überlappt, und der rechte Scheinwerfer (210R) angeordnet ist, um einen Teil zu haben, der mit dem rechten Gabelrohr (33) überlappt, und einen Teil, der nicht mit dem rechten Gabelrohr (33) in der Fahrzeugvorderansicht überlappt; und/oder
ein linker Ausschnittsabschnitt (70L) durch einen linken Seitenrand der Frontverkleidung (71, 72, 73a, 74a) und einen oberen Rand der linken Seitenverkleidung (73) gebildet wird, und ein rechter Ausschnittsabschnitt (70R) durch einen rechten Seitenrand der Frontverkleidung (71, 72, 73a, 74a) und einen oberen Rand der rechten Seitenverkleidung(74) gebildet wird, in der Fahrzeugseitenansicht, das Griffelement (36) im linken Ausschnittsabschnitt (70L) und im rechten Ausschnittsabschnitt (70R) gedreht werden kann, und obere Enden des linken Scheinwerfers (210L) und des rechten Scheinwerfers (210R) jeweils an Positionen weiter abwärts als der linke Ausschnittsabschnitt (70L) und der rechte Ausschnittsabschnitt (70R) angeordnet sind.

9. Fahrzeug (100) nach einem der Ansprüche 1 bis 8, wobei
vordere Ränder der linken Seitenverkleidung (73) und der rechten Seitenverkleidung (74) sich jeweils in die Auf- und Abwärtsrichtung erstrecken, und der untere Rand der Frontverkleidung (71, 72, 73a, 74a) sich in die Breitrichtung des Fahrzeugs erstreckt,
der untere Rand der Frontverkleidung (71, 72, 73a, 74a) mit den oberen Enden der vorderen Ränder der jeweiligen linken Seitenverkleidung (73) und rechten Seitenverkleidung (74) verbunden ist,
der linke Scheinwerfer (210L) in einer Eckposition angeordnet ist, gebildet durch den unteren Rand der Frontverkleidung (71, 72, 73a, 74a) und das obere Ende des vorderen Rands der linken Seitenverkleidung (73) in der Fahrzeugvorderansicht, und
der rechte Scheinwerfer (210R) in einer Eckposition angeordnet ist, gebildet durch den unteren Rand der Frontverkleidung (71, 72, 73a, 74a) und das obere Ende des vorderen Rands der rechten Seitenverkleidung (74) in der Fahrzeugvorderansicht.

10. Fahrzeug (100) nach Anspruch 9, wobei
ein unterer Abschnitt eines inneren Abschnitts des linken Scheinwerfers (210L) sich aufwärts und nach innen erstreckt, und ein unterer Abschnitt eines inneren Abschnitts des rechten Scheinwerfers (210R) sich aufwärts und nach innen in einer Fahrzeugvorderansicht erstreckt.

11. Fahrzeug (100) nach einem der Ansprüche 1 bis 10, wobei
eine Aussparung (72o), die rückwärts gebeult ist, in einem vorderen Abschnitt der Frontverkleidung (71, 72, 73a, 74a) gebildet ist, und ein unterer Rand der Aussparung (72o) sich zwischen einem oberen Ende des linken Scheinwerfers (210L) und einem unteren Ende des linken Scheinwerfers (210L) und zwischen einem oberen Ende des rechten Scheinwerfers (210R) und einem unteren Ende des rechten Scheinwerfers (210R) befindet.

12. Fahrzeug (100) nach Anspruch 11, wobei
die Aussparung (72o) der Frontverkleidung (71, 72, 73a, 74a) eine Einlassöffnung enthält, und
das Fahrzeug (100) ferner umfassend:
einen Motor (20) angeordnet hinter dem Vorderrad (37); und
einen Luftkanal (80), der sich von der Einlassöffnung rückwärts erstreckt und einen Einlassweg bildet, der mit dem Motor (20) verbunden ist.

13. Fahrzeug (100) nach einem der Ansprüche 1 bis 12, wobei der linke Scheinwerfer (210L) weiter rechts als eine Mitte des Fahrzeugs positioniert ist, und ein linkes Ende des linken Scheinwerfers (210L) an einer Position weiter rechts als ein rechter Rand des Vorderrads (37) in der Fahrzeugvorderansicht angeordnet ist, und der rechte Scheinwerfer (210R) weiter links als die Mitte des Fahrzeugs positioniert ist, und ein rechtes Ende des rechten Scheinwerfers (210R) an einer Position weiter links als ein linker Rand des Vorderrads (37) in der Fahrzeugvorderansicht angeordnet ist; und/oder
ein vorderes Ende der Frontverkleidung (71, 72, 73a, 74a) sich an einer Position weiter vorwärts als die Achse (37a) des Vorderrads (37) befindet; und/oder
vordere Ränder der jeweils linken Seitenverkleidung (73) und rechten Seitenverkleidung (74) abwärts und rückwärts in einer Fahrzeugseitenansicht geneigt sind, und vordere Flächen des jeweiligen linken Scheinwerfers (210L) und rechten Scheinwerfers (210R) abwärts und rückwärts in der Fahrzeugseitenansicht geneigt sind.

14. Fahrzeug (100) nach einem vorherigen Anspruch, wobei
der linke Scheinwerfer (210L) eine linke Kühlerrippe (214) enthält,
der rechte Scheinwerfer (210R) eine rechte Kühlerrippe (214) enthält,
die linke Kühlerrippe (214) unter dem linken Scheinwerfer (210L) freiliegend ist, und
die rechte Kühlerrippe (214) unter dem rechten Scheinwerfer (210R) freiliegend ist.

15. Fahrzeug (100) nach einem vorherigen Anspruch, ferner umfassend eine Bedienvorrichtung (230), die angepasst ist, um, um ein Ein- und Ausschalten des linken Scheinwerfers (210L) und des rechten Scheinwerfers (210R) zu steuern, wobei die Bedienvorrichtung (230) an einer Position weiter außen als der linke Scheinwerfer (210L) oder der rechte Scheinwerfer (210R) angeordnet ist; und/oder
eine vordere Fläche des linken Scheinwerfers (210L) geneigt ist, damit sich ein linker Abschnitt zu einer Position weiter rückwärts als ein mittlerer Abschnitt in einer Fahrzeugdraufsicht erstreckt, und eine vordere Fläche des rechten Scheinwerfers (210R) geneigt ist, damit sich ein rechter Abschnitt zu einer Position weiter rückwärts als ein mittlerer Abschnitt in einer Fahrzeugdraufsicht erstreckt; und/oder
die Frontverkleidung (71, 72, 73a, 74a), die linke Seitenverkleidung (73) und die rechte Seitenverkleidung (74) so bereitgestellt sind, dass sie nicht einen Raum unter dem linken Scheinwerfer (210L) und dem rechten Scheinwerfer (210R) in der Fahrzeugvorderansicht schließen; und/oder
das Fahrzeug (100) ferner ein Verbindungselement (221) umfasst, das den linken Scheinwerfer (210L) mit dem rechten Scheinwerfer (210R) verbindet, und das Verbindungselement (221) am linken Scheinwerfer (210L) und rechten Scheinwerfer (210R) befestigt ist, um lösbar befestigt werden zu können.

## Revendications

1. Véhicule sellé, véhicule du type à enfourcher ou véhicule à selle (100), comprenant :
un tube de tête (31) s'étendant vers le bas et vers l'avant ;
un dispositif de fourche avant (30) englobant un arbre de direction (31) un élément de poignée (36), un tube de fourche de gauche (32), un tube de fourche de droite (33), un support supérieur (34), un support inférieur (35) et une roue avant (3) ;
un couvercle de gauche (73) s'étendant dans une direction allant vers le haut et vers le bas du véhicule, agencé au niveau d'une position située plus vers la gauche que le tube de fourche de gauche (32) et la roue avant (37) ;
un couvercle de droite (74), s'étendent dans la direction allant vers le haut et vers le bas du véhicule et agencé au niveau d'une position située plus vers la droite que le tube de fourche de droite (33) et la roue avant (37) ;
un couvercle avant (71, 72, 73a, 74a), s'étendant dans une direction de la largeur du véhicule et connecté au couvercle de droite (74) et au couvercle de gauche (73) ;
un phare de gauche (210L) agencé au niveau d'une position située plus vers la gauche que le tube de tête (13) et plus vers l'avant que le tube de fourche de gauche (32), et comportant au moins une partie agencée au niveau d'une position située plus vers l'arrière qu'un essieu (37a) de la roue avant (37) ;
un phare de droite (210R), agencé au niveau d'une position située plus vers la droite que le tube de tête (13) et plus vers l'avant que le tube de fourche de droite (33), et comportant au moins une partie agencé au niveau d'une position située plus vers l'arrière que l'essieu (37a) de la roue avant (37) ; dans lequel :
l'arbre de direction (31) est inséré dans le tube de tête (13) et s'étend vers le bas et vers l'avant ;
le tube de fourche de gauche (32) est agencé au niveau d'une position située plus vers la gauche que l'arbre de direction (31) et s'étend vers une position située plus vers le bas et vers l'avant que l'arbre de direction (31) ;
le tube de fourche de droite (33) est agencé au niveau d'une position située plus vers la droite que l'arbre de direction (31) et s'étend vers une position située plus vers le bas et vers l'avant que l'arbre de direction (31) ;
le support supérieur (34) est accouplé à l'arbre de direction (31) et est accouplé au tube de fourche de droite (33) et au tube de fourche de gauche (32) pour s'étendre dans la direction de la largeur du véhicule ;
le support inférieur (35) est accouplé à l'arbre de direction (31) et est accouplé au tube de fourche de droite (33) et au tube de fourche de gauche (32) pour s'étendre dans la direction de la largeur du véhicule, au-dessous du support supérieur (34) ;
la roue avant (37) est agencée au niveau d'une position située plus vers l'avant que le support inférieur (35) et est agencée entre le tube de fourche de gauche (32) et le tube de fourche de droite (33) ;
le dispositif de fourche avant (30) est configuré de sorte à tourner autour du tube de tête (13) par suite de l'actionnement de l'élément de poignée (36) ;
le couvercle de gauche (73) s'étend d'une position située devant le tube de fourche de gauche (32) vers une position située plus vers l'arrière que le tube de fourche de gauche (32) ;
le couvercle de droite (74) s'étend d'une position située devant le tube de fourche de droite (33) vers une position située plus vers l'arrière que le tube de fourche de droite (33) ;
le couvercle avant (71, 72, 73a, 74a) s'étend vers l'avant et vers le bas à partir d'une position située plus vers le haut que l'élément de poignée (36) et est agencé devant le support supérieur (34) et l'arbre de direction (31) ;
une ouverture de direction (70o) dans laquelle le dispositif de fourche avant (30) peut tourner, est formée par le couvercle de gauche (73), le couvercle de droite (74) et le couvercle avant (71, 72, 73a, 74a) ;
une extrémité avant du support inférieur (35) est agencée au niveau d'une position située plus vers l'avant qu'une extrémité avant du support supérieur (34) ;
au moins une partie du phare de gauche (210L) est agencée au niveau d'une position située plus vers le haut que l'essieu (37a) de la roue avant (37) et plus vers le bas qu'une partie de gauche d'une extrémité inférieure d'un bord avant du support inférieur (34) lorsque le dispositif de fourche (30) est tourné vers la droite ;
au moins une partie du phare de gauche (210R) est agencée au niveau d'une position située plus vers l'intérieur que le couvercle de gauche (73) et chevauche le couvercle de gauche (73) dans une vue latérale de gauche du véhicule ;
au moins une partie du phare de droite (210L) est agencée au niveau d'une position située plus vers l'intérieur que le couvercle de droite (74) et chevauche le couvercle de droite (74) dans une vue latérale de droite du véhicule ;
au moins une partie du phare de gauche (210L) et au moins une partie du phare de droite (210R) chevauchent le couvercle avant (71, 72, 73a, 74a) dans une vue en plan du véhicule ;
**caractérisé en ce qu'**au moins une partie d'un bord inférieur (Le) du couvercle avant (71, 72, 73a, 74a), définissant au moins une partie d'un bord supérieur de l'ouverture de direction (70o) est agencée entre le phare de gauche (210L) et le phare de droite (210R) dans la direction de la largeur du véhicule, et est agencé au niveau d'une position située plus vers le haut qu'une extrémité inférieure du phare de gauche (210L) et qu'une extrémité inférieure du phare de gauche (210R) dans une vue frontale du véhicule.

2. Véhicule (100) selon la revendication 1, dans lequel :
une surface avant du phare de gauche (210L) et une surface avant du phare de droite (210R) sont respectivement agencées au niveau de positions situées plus vers l'arrière qu'une extrémité avant du couvercle avant (71, 72, 73a, 74a).

3. Véhicule (100) selon les revendications 1 ou 2 dans lequel :
le phare de gauche (210L) et le phare de droite (210R) englobent respectivement une source de lumière de gauche (211) et une source de lumière de droite (211) adaptées pour produire de la lumière ;
la source de lumière de gauche (211) est agencée de sorte à chevaucher le couvercle de gauche (73) dans une vue latérale du véhicule ; et
la source de lumière de droite (211) est agencée de sorte à chevaucher le couvercle de droite (74) dans la vue latérale du véhicule.

4. Véhicule (100) selon la revendication 3, dans lequel :
la source de lumière de gauche (211) et la source de lumière de droite (211) sont agencées de sorte à chevaucher le couvercle avant (71, 72, 73a, 74a) dans une vue en plan du véhicule ; et/ou
le phare de gauche (210L) englobe en outre un couvercle du phare de gauche (213) agencé devant la source de lumière de gauche (211), le phare de droite (210R) englobant en outre un couvercle du phare de droite (213) agencé devant la source de lumière de droite (211), au moins une partie du couvercle du phare de gauche (213) étant agencée de sorte à chevaucher le couvercle de gauche (73) dans la vue latérale du véhicule, et au moins une partie du couvercle du phare de droite (213) étant agencée de sorte à chevaucher le couvercle de droite (74) dans la vue latérale du véhicule.

5. Véhicule (100) selon la revendication 4, dans lequel :
le couvercle du phare de gauche (213) comporte une partie de lentille de gauche (213L) configurée de sorte à appliquer une directivité à la lumière produite par la source de lumière de gauche (211) ; et
le couvercle du phare de droite (213) comporte une partie de lentille de droite (213) destinée à appliquer une directivité à la lumière produite par la source de lumière de droite (211).

6. Véhicule (100) selon la revendication 5, dans lequel :
une surface externe du couvercle de phare de gauche (213) est recouverte par un film de gauche (215) et une surface externe du film de gauche (215) est exposée ; et
une surface externe du couvercle du phare de droite (213) est recouverte par un film de droite (215) et une surface externe du film de droite (215) est exposée.

7. Véhicule (100) selon les revendications 5 ou 6, comprenant en outre :
un élément d'ajustement de l'axe de lumière de gauche (223) adapté pour être utilisé dans un cas où une direction d'un axe de lumière formé par la source de lumière de gauche (211) et la partie de lentille de gauche (213L) du phare de gauche (210L) doit être ajustée, une relation de position entre la source de lumière de gauche (211) et la partie de lentille de gauche (213L) étant maintenue ; et
un élément d'ajustement de l'axe de lumière de droite (223), adapté pour être utilisé dans un cas où une direction d'un axe de lumière formé par la source de lumière de droite (211) et la partie de lentille de droite (213L) du phare de droite (210R) doit être ajustée une relation de position entre la source de lumière de droite (211) et la partie de lentille de droite (213L) étant maintenue.

8. Véhicule (100) selon l'une quelconque des revendications 1 à 7, dans lequel :
le phare de gauche (210L) est agencé de sorte à comporter une partie chevauchant le tube de fourche de gauche (32) et une autre partie ne chevauchant pas le tube de fourche de gauche (32) dans la vue frontale du véhicule, et le phare de droite (210R) est agencé de sorte à comporter une partie chevauchant le tube de fourche de droite (33) et une autre partie ne chevauchant pas le tube de fourche de droite (33) dans la vue frontale du véhicule ; et/ou
une partie découpée de gauche (70L) est formée par un bord de gauche du couvercle avant (71, 72, 73a, 74a) et un bord supérieur du couvercle de gauche (73), et une partie découpée de droite (70R) étant formée par un bord de droite du couvercle avant (71, 72, 73a, 74a) et un bord supérieur du couvercle de droite (74) dans une vue latérale du véhicule, l'élément de poignée (36) pouvant être tourné dans la partie découpée de gauche (70L) et la partie découpée de droite (70R), et les extrémités supérieures du phare de gauche (210L) et du phare de droite (210R) étant respectivement agencées au niveau de positions situées plus vers le bas que la partie découpée de gauche (70L) et la partie découpée de droite (70R).

9. Véhicule (100) selon l'une quelconque des revendications 1à 8, dans lequel :
les bords avant du couvercle de gauche (73) et du couvercle de droite (74) s'étendent respectivement dans la direction allant vers le haut et vers le bas, et le bord inférieur du couvercle avant (71, 72, 73a, 74a) s'étendant dans la direction de la largeur du véhicule ;
le bord inférieur du couvercle avant (71, 72, 73a, 74a) est connecté aux extrémités supérieures des bords avant du couvercle de gauche (73) et du couvercle de droite (74) ;
le phare de gauche (210L) est agencé dans une partie de coin formée par le bord inférieur du couvercle avant (71, 72, 73a, 74a) et l'extrémité supérieure du bord avant du couvercle de gauche (73) dans la vue frontale du véhicule ; et
le phare de droite (210R) est agencé dans une partie de coin formée par le bord inférieur du couvercle avant (71, 72, 73a, 74a) et l'extrémité supérieure du bord avant du couvercle de droite (74) dans la vue frontale du véhicule.

10. Véhicule (100) selon la revendication 9, dans lequel :
une partie inférieure d'une partie interne du phare de gauche (210L) s'étend vers le haut et vers l'intérieur, et une partie inférieure d'une partie interne du phare de droite (210R) s'étend vers le haut et vers intérieur dans une vue frontale du véhicule.

11. Véhicule (100) selon l'une quelconque des revendications 1 à 10, dans lequel :
un évidement (72o) enfoncé vers l'arrière est formé dans une partie avant du couvercle avant (71, 72, 73a, 74a), un bord inférieur de l'évidement (720) étant agencé entre l'extrémité supérieure du phare de gauche (210L) et une extrémité inférieure du phare de gauche (210L) et entre une extrémité supérieure du phare de droite (210R) et une extrémité inférieure du phare de droite (210R).

12. Véhicule (100) selon la revendication 11, dans lequel :
l'évidement (720) du couvercle avant (71, 72, 73a, 74a) englobe une ouverture d'admission ; et
le véhicule (100) comprend en outre :
un moteur (20) agencé derrière la roue avant (37) ; et
un conduit d'air (80) s'étendant vers l'arrière de l'ouverture d'admission et formant un passage d'admission connecté au moteur (20).

13. Véhicule (100) selon l'une quelconque des revendications 1 à 12, dans lequel le phare de gauche (210L) est positionné plus vers la droite qu'un centre du véhicule, une extrémité de gauche du phare de gauche (210L) étant agencée au niveau d'une position située plus vers la droite qu'un bord de droite de la roue avant (37) dans la vue frontale du véhicule, le phare de droite (210R) étant positionné plus vers la gauche que le centre du véhicule, et une extrémité de droite du phare de droite (210R) étant agencée au niveau d'une position située plus vers la gauche qu'un bord de gauche de la roue avant (37) dans la vue frontale du véhicule ; et/ou
une extrémité avant du couvercle avant (71, 72, 73a, 74a) est agencée au niveau d'une position située plus vers l'avant que l'essieu (37a) de la roue avant (37) ; et/ou
les bords avant du couvercle de gauche (73) et du couvercle de droite (74) sont respectivement inclinées vers le bas et vers l'arrière dans une vue latérale du véhicule, des surfaces avant du phare de gauche (210L) et du phare de droite (210R) étant respectivement inclinées vers le bas et vers l'arrière dans la vue latérale du véhicule.

14. Véhicule (100) selon l'une quelconque des revendications précédentes, dans lequel :
le phare de gauche (210L) englobe une ailette de radiateur de gauche (214) ;
le phare de droite (210R) englobe une ailette de radiateur de gauche (214) ;
l'ailette de radiateur de gauche (214) est exposée au-dessous du phare de gauche (210L) ; et
l'ailette de radiateur de droite (214) est exposée au-dessous du phare de droite (210R).

15. Véhicule (100) selon l'une quelconque des revendications précédentes, comprenant en outre un dispositif de commande (230) adapté pour contrôler le branchement et le débranchement du phare de gauche (210L) et du phare de droite (210R), le dispositif de commande (230) étant agencé au niveau d'une position située plus vers l'extérieur que le phare de gauche (210L) ou le phare de droite (210R) ; et/ou
une surface avant du phare de gauche (210L) est inclinée de sorte à avoir une partie de gauche s'étendant vers une position située plus vers l'arrière qu'une partie centrale dans la vue en plan du véhicule, et une surface avant du phare de droite (210R) est inclinée de sorte à avoir une partie de droite s'étendant vers une position située plus vers l'arrière qu'une partie centrale dans la vue en plan du véhicule ; et/ou
le couvercle avant (71, 72, 73a, 74a), le couvercle de gauche (73) et le couvercle de droite (74) sont agencés de sorte à ne pas fermer un espace au-dessous du phare de gauche (210L) et du phare de droite (210R) dans la vue frontale du véhicule ; et/ou
le véhicule (100) comprend en outre un élément de connexion (211) connectant le phare de gauche (210L) au phare de droite (210R), l'élément de connexion (221) étant fixé sur le phare de gauche (210L) et sur le phare de droite (210R), de sorte à pouvoir être fixé de manière amovible.
